# EUROPEAN PATENT SPECIFICATION

(11) **EP 3 994 953 B1**
(45) Date of publication and mention of the grant of the patent: **14.08.2024**
(21) Application number: 20739297.8
(22) Date of filing: 02.07.2020
(51) Int. Cl.: H04W 76/18, H04W 76/19

(54) **NAS RECOVERY IN A WIRELESS COMMUNICATION NETWORK**
NAS-WIEDERHERSTELLUNG IN EINEM DRAHTLOSEN KOMMUNIKATIONSNETZ
RÉCUPÉRATION D'UNE NAS DANS UN RÉSEAU DE COMMUNICATION SANS FIL

(30) Priority: 04.07.2019 US 201962870694 P
(43) Date of publication of application: 11.05.2022
(73) Proprietor: Telefonaktiebolaget LM Ericsson (publ), 164 83 Stockholm (SE)
(72) Inventor: DA SILVA, Icaro, L,J, 17077 SOLNA (SE); CENTONZA, Angelo, 11244 STOCKHOLM (SE)
(74) Representative: Ericsson
(86) International application number: PCT/EP2020/068675
(87) International publication number: WO 2021/001480

(56) References cited:
- ERICSSON: "RACH issues and connection establishment failures", vol. RAN WG2, no. Reno, US; 20190513 - 20190517, 13 May 2019 (2019-05-13), XP051730347, Retrieved from the Internet <URL:http://www.3gpp.org/ftp/Meetings%5F3GPP%5FSYNC/RAN2/Docs/R2%2D1906895%2Ezip> [retrieved on 20190513]
- ERICSSON: "UE accessibility measurement enhancement in LTE and NR", vol. RAN WG2, no. Reno, Nevada; 20190513 - 20190517, 13 May 2019 (2019-05-13), XP051730329, Retrieved from the Internet <URL:http://www.3gpp.org/ftp/Meetings%5F3GPP%5FSYNC/RAN2/Docs/R2%2D1906877%2Ezip> [retrieved on 20190513]
- ZTE CORPORATION ET AL: "Consideration on RLF report for MDT", vol. RAN WG2, no. Reno, Nevada, USA; 20190513 - 20190517, 13 May 2019 (2019-05-13), XP051729993, Retrieved from the Internet <URL:http://www.3gpp.org/ftp/Meetings%5F3GPP%5FSYNC/RAN2/Docs/R2%2D1906532%2Ezip> [retrieved on 20190513]
- CMCC: "Discussion on NR MDT accessibility information reporting", vol. RAN WG2, no. Reno, USA; 20190513 - 20190517, 13 May 2019 (2019-05-13), XP051729432, Retrieved from the Internet <URL:http://www.3gpp.org/ftp/Meetings%5F3GPP%5FSYNC/RAN2/Docs/R2%2D1905940%2Ezip> [retrieved on 20190513]
- ERICSSON: "Post Radio Link Failure Measurements", vol. RAN WG2, no. Reno, Nevada; 20190513 - 20190517, 13 May 2019 (2019-05-13), XP051730333, Retrieved from the Internet <URL:http://www.3gpp.org/ftp/Meetings%5F3GPP%5FSYNC/RAN2/Docs/R2%2D1906881%2Ezip> [retrieved on 20190513]
- SAMSUNG: "RRC Resume Failure Reporting in NR", vol. RAN WG2, no. Reno, USA; 20190513 - 20190517, 13 May 2019 (2019-05-13), XP051731223, Retrieved from the Internet <URL:http://www.3gpp.org/ftp/Meetings%5F3GPP%5FSYNC/RAN2/Docs/R2%2D1907794%2Ezip> [retrieved on 20190513]

## Description

### TECHNICAL FIELD

The present application relates generally to a wireless communication network, and relates more particularly to non-access stratum (NAS) recovery in such a network.

### BACKGROUND

A wireless device establishes an access stratum (AS) signalling connection with a radio access network (RAN) to exchange signalling associated with access to the RAN. The AS signalling connection may include for instance a radio resource control (RRC) connection. Different types of failures at the wireless device, however, can cause the AS signalling connection to fail, prompting the wireless device to trigger so-called non-access stratum (NAS) recovery. With NAS recovery, the NAS layer at the wireless device prompts establishment of a new AS signalling connection. Although NAS recovery proves effective for recovering from different types of failures, those failures that cause NAS recovery degrade service performance.
3GPP draft document R2-1906895 provided by the same applicant, titled "RACH issues and connection establishment failures", discusses information to be reported by a UE after a failed transition from idle/inactive to connected (state), and the failure cases that triggers the logged measurements.

### SUMMARY

It is an object of the present invention to mitigate at least some of the problems discussed in the background section.

This object is achieved by the independent claims. Advantageous embodiments are described in the dependent claims and by the following description.

### BRIEF DESCRIPTION OF THE DRAWINGS

Figure 1 is a block diagram of a wireless communication network according to some embodiments.
Figure 2 is a logic flow diagram of a method performed by a wireless device according to some embodiments.
Figure 3 is a logic flow diagram of a method performed by a network node according to some embodiments.
Figure 4 is a logic flow diagram of a method performed by a network node according to other embodiments.
Figure 5 is a block diagram of a wireless device according to some embodiments.
Figure 6 is a block diagram of a network node according to some embodiments.
Figure 7 is a block diagram of a 5G RAN (NG-RAN) architecture according to some embodiments.
Figure 8 is a block diagram of a split gNB architecture according to some embodiments.
Figure 9 is a block diagram of a Radio Resource Control (RRC) state of a UE according to some embodiments.
Figure 10 is a call flow diagram for suspending an RRC connection according to some embodiments.
Figure 11 is a call flow diagram for suspending an RRC connection according to some embodiments.
Figure 12 is a call flow diagram for a procedure in which a UE receives an RRC Resume in response to an RRC Resume Request according to some embodiments.
Figure 13 is a call flow diagram for a procedure in which a UE receives an RRC Release in response to an RRC Resume Request according to some embodiments.
Figure 14 is a call flow diagram for a procedure in which a UE receives an RRC Release with suspend configuration in response to an RRC Resume Request according to some embodiments.
Figure 15 is a call flow diagram for a procedure in which a UE receives an RRC Reject in response to an RRC Resume Request according to some embodiments.
Figure 16 is a call flow diagram for RRC Release with redirect according to some embodiments.
Figure 17 is a call flow diagram for RRC connection suspension with redirect according to some embodiments.
Figure 18 is a call flow diagram for waiting to process an RRCRelease message according to some embodiments.
Figure 19 is a call flow diagram illustrating signaling in a gNB split architecture for the detection and resolution of missed RRC Release delivery according to some embodiments.
Figure 20 is a call flow diagram illustrating signaling in an NG RAN architecture for detection and resolution of missed RRC Release delivery according to some embodiments.
Figure 21 is a call flow diagram of mechanisms to prevent RRC state mismatch between UE and RAN according to some embodiments.
Figure 22 is a block diagram of a wireless communication network according to some embodiments.
Figure 23 is a block diagram of a user equipment according to some embodiments.
Figure 24 is a block diagram of a virtualization environment according to some embodiments.
Figure 25 is a block diagram of a communication network with a host computer according to some embodiments.
Figure 26 is a block diagram of a host computer according to some embodiments.
Figure 27 is a flowchart illustrating a method implemented in a communication system, in accordance with one embodiment.
Figure 28 is a flowchart illustrating a method implemented in a communication system, in accordance with one embodiment.
Figure 29 is a flowchart illustrating a method implemented in a communication system, in accordance with one embodiment.
Figure 30 is a flowchart illustrating a method implemented in a communication system, in accordance with one embodiment.

### DETAILED DESCRIPTION

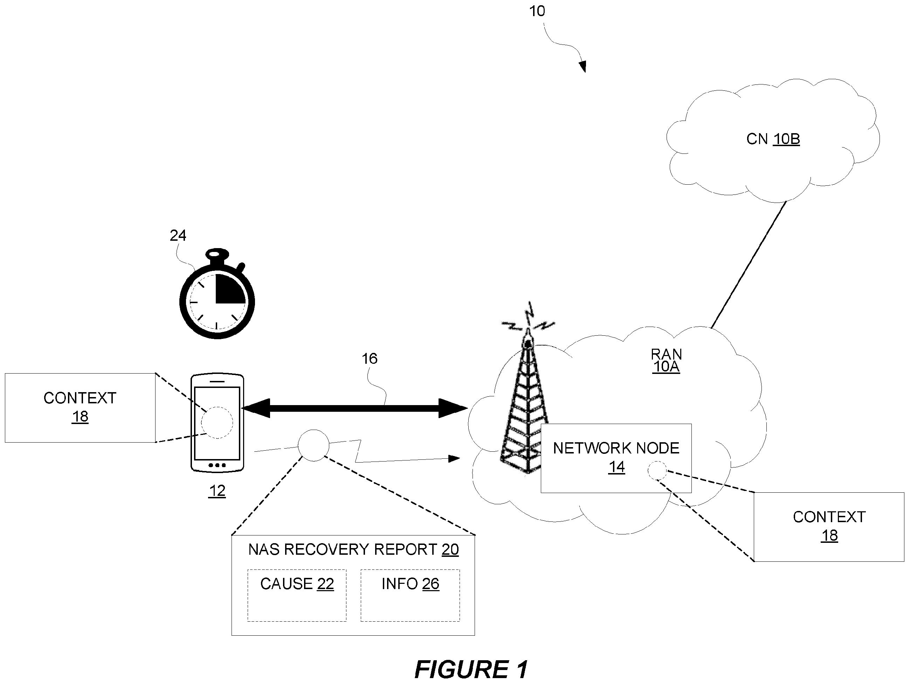

Figure 1 shows a wireless communication network (e.g., a 4G or 5G network) 10 according to some embodiments. The wireless communication network 10 includes a radio access network (RAN) 10A via which a wireless device 12 (e.g. a user equipment UE) connects to a core network (CN) 10B. The core network 10B may in turn connect the wireless device 12 to one or more data networks, e.g., the Internet.

From a protocol structure standpoint, the network 10 is divided into an access stratum (AS) and a non-access stratum (NAS). The AS contains protocols that handle activities between the wireless device 12 and the RAN 10A, e.g., for transporting data over a radio connection and managing radio resources. The NAS contains protocols that handle activities between the wireless device 12 and the CN 10B, e.g., for establishing communication sessions and maintaining continuous communications as the wireless device 12 moves. The network 10 is also divided into a user plane (UP) and a control plane (CP). The control plane contains protocols responsible for managing transport bearers, whereas the user plane contains protocols responsible for transporting user traffic.

Figure 1 in particular shows that an AS signalling connection 16 is established between the wireless device 12 and the RAN 10A. Establishment of the AS signalling connection 16 involves allocating radio resources to the wireless device 12 and otherwise configuring various parameters needed for exchanging signalling associated with access to the RAN 10A. The AS signalling connection 16 may include for instance a radio resource control (RRC) connection. Regardless, while the AS signalling connection 16 is connected such that the wireless device 12 is in a connected state with respect to the AS, the wireless device 12 and the network node 14 each maintain a context 18 which includes the parameters for the AS signalling connection 16.

In some embodiments, the AS signalling connection 16 fails and prompts the wireless device 12 to trigger NAS recovery. With NAS recovery, the NAS layer at the wireless device 12 prompts establishment of a new AS signalling connection. For example, in some embodiments, the AS layer at the wireless device 12 detects a failure (e.g., on an RRC level or Medium Access Control, MAC, level) of the AS signalling connection 16. This leads the wireless device 12 to release the AS signalling connection 16 and enter an idle state with respect to the AS, in which the wireless device 12 removes the context 18 for the AS signalling connection 16. With the AS signalling connection 16 released due to failure of the AS signalling connection 16, the wireless device 12 triggers a NAS recovery procedure by performing a registration area update or a tracking area update which leads to the NAS layer requesting the AS layer to establish or setup a new AS signalling connection.

Based on the wireless device 12 triggering and/or performing such a NAS recovery procedure, the wireless device 12 according to some embodiments herein transmits a NAS recovery report 20 to a network node (e.g., shown for instance as network node 14 in the RAN 10A). The NAS recovery report 20 as used herein is any report that reports the wireless device 12 triggered and/or performed a NAS recovery procedure for recovery of the AS signalling connection 16. The NAS recovery report 20 may for instance be a new report and/or be dedicated to reporting a NAS recovery event. Or, in other embodiments, the NAS recovery report 20 may be an existing report (e.g., a radio link failure, RLF, report) which is enhanced to be capable of reporting a NAS recovery event. Regardless, in one or more embodiments, the NAS recovery report 20 may be transmitted via or as AS signalling, e.g., in an RRC message. Regardless, the NAS recovery report 20 according to some embodiments notably reports a cause 22 of the wireless device 12 performing the NAS recovery procedure. The wireless device 12 may for instance detect the cause 22 and then, responsive to detecting the cause and/or performing the NAS recovery procedure, log the NAS recovery report 20 at the wireless device 12, e.g., for transmitting after completing the NAS recovery procedure.

The NAS recovery report 20 may specify the cause 22 in terms of which type of failure, event, or condition occurred at the wireless device 12 and triggered the NAS recovery procedure. In fact, in some embodiments, multiple different types of failures, events, or conditions at the wireless device 12 may trigger the NAS recovery procedure. In this case, then, the NAS recovery report 20 differentiates between those different types of failures, events, or conditions and specifies which one of them was the cause of the NAS recovery procedure being performed.

In some embodiments, the NAS recovery report 20 also reports certain information 26 that supplements the reported cause 22. The information 26 may include for instance one or more of: (i) a time at which the cause 22 of the NAS recovery procedure being performed occurred; (ii) information describing traffic of the wireless device 12 when the cause 22 occurred; (iii) an RRC configuration message that the wireless device 12 last received; (iv) location information describing a location of the wireless device 12 when the cause 22 occurred; (v) information describing a cell and/or frequency the wireless device 12 was connected to when the cause 22 occurred; (vi) one or more radio measurements associated with the cause 22; (vii) one or more failed scheduling requests; or (viii) one or more channel state information reference signaling monitoring failure events.

Armed with such a NAS recovery report 20, the network node 14 in some embodiments may perform root cause analysis based on the NAS recovery report 20 so as to determine the root cause of the wireless device 12 having to perform NAS recovery. The root cause may for instance be whatever ultimately led to the cause 22 of the NAS recovery, e.g., whatever ultimately led to the event or condition at the wireless device 12 which triggered the NAS recovery procedure. The root cause may for instance be an underlying network condition (e.g., coverage hole) or parameter configuration which led to the cause 22 of the NAS recovery. The network node 14 may determine the root cause on the basis of the cause 22 and/or the information 26 in the NAS recovery report 20.

In any event, the network node 14 may then take one or more actions to address that root cause and/or to reduce the likelihood that the same or a different wireless device would have to resort to NAS recovery in the future. Such action(s) may include for instance tuning of one or more parameters at the network node 14 (e.g., that govern measurement reporting, handover, control signaling timing, etc.), optimizing mobility robustness, and/or optimizing coverage in a geographical area where the wireless device 12 was located when the NAS recovery procedure was performed. For example, where the root cause is failure by the wireless device 12 to receive an RRC message due to poor radio conditions at the wireless device 12, the action(s) may include one or more of: (i) configuring a timing with which the RRC message is to be transmitted to wireless devices; (ii) configuring one or more conditions for triggering a measurement report from wireless devices; (iii) configuring one or more parameters that govern radio conditions in which the network node sends the RRC message to wireless devices; or (iv) configuring a shape of a cell, beam, or sector served by the network node. Or, the network node 14 may forward the NAS recovery report 20, the root cause, location information of the wireless device 12, and/or a recommended or commanded action to perform to another node in the network 10. The other node may then be configured to likewise perform root cause analysis and/or take counter-actions to address that root cause. Some embodiments may thereby improve overall service performance by reducing the likelihood that a certain failure, event, or condition will occur at a wireless device and prompt NAS recovery, so as to thereby reduce the need for and/or occurrence of NAS recovery.

In some embodiments, the different possible causes of the wireless device 12 having to perform NAS recovery (e.g., different types of failures, events, or conditions at the wireless device 12 which may lead to NAS recovery) may include one or more of: (i) integrity protection failure upon reception of a radio resource control, RRC, re-establishment message; (ii) triggering of RRC re-establishment and selection of an inter radio access technology, RAT, cell while an idle measurement configuration timer is running, wherein the idle measurement configuration timer is started upon receiving an RRC connection release message that includes an idle measurement configuration and is stopped upon receiving an RRC connection setup or resume message; (iii) inability of the wireless device 12 to comply with an RRC reconfiguration message received via New Radio while security is activated, a signaling radio bearer has not been set up for transferring RRC messages that encapsulate NAS message, and at least one data radio bearer has not been set up; (iv) expiry of a timer for the wireless device 12 to find a suitable cell in re-establishment; (v) radio link failure being detected while security is activated, a signaling radio bearer has not been set up for transferring RRC messages that encapsulate NAS message, and at least one data radio bearer has not been set up; (vi) expiry of a timer for receiving a response to an RRC connection re-establishment request; or (vii) inter-RAT cell reselection.

In some embodiments, the NAS recovery report 20 is sent for any of multiple types of possible causes of NAS recovery, so that the report 20 is capable of reporting any of those possible causes as the cause of NAS recovery. In other embodiments, though, the NAS recovery report 20 is selectively sent for only one possible cause of particular interest and/or consequence, e.g., expiry of a data inactivity timer. In this case, then, the NAS recovery report 20 may implicitly indicate the cause 22 as being a certain predefined cause, by the mere fact that the NAS recovery report 20 is transmitted.

Consider now one particular cause 22 of NAS recovery as an example. In one or more embodiments, the NAS recovery report 20 may report that the cause of the wireless device 12 performing the NAS recovery procedure was expiry of a data inactivity timer 24 at the wireless device 12. More particularly in this regard, the wireless device 12 may be configured (e.g., by RRC) with a data inactivity monitoring functionality when in the connected state with respect to the AS. The wireless device 12 may be configured with the data inactivity timer 12 on a semi-static basis, e.g., by RRC. When the data inactivity timer 24 is configured (e.g., at the MAC layer), the wireless device 12 starts or restarts the data inactivity timer 24 if the wireless device transmits or receive data, e.g., at the MAC layer. For example, in some embodiments, the wireless device 12 starts or restarts the data inactivity timer 24 if any MAC entity receives a MAC service data unit (SDU) for a Dedicated Traffic Channel (DTCH) logical channel, a Dedicated Control Channel (DCCH) logical channel, or a Common Control Channel (CCCH) logical channel, or if any MAC entity transmits a MAC SDU for the DTCH logical channel or the DCCH logical channel. If the data inactivity timer 24 expires, the wireless device 12 may indicate the expiry of the data inactivity timer 24 to upper layers, e.g., the RRC layer. The wireless device 12 then releases the AS signalling connection 16 and transitions to the idle state, while specifying to upper layers (e.g., the NAS layer) that the cause of the AS signalling connection 16 being released was failure of the AS signalling connection 16. When the wireless device 12 receives an indication of such connection failure from the lower layers (and does not have any signalling pending), the wireless device 12 initiates NAS recovery by initiating a registration procedure for mobility and periodic registration update. The wireless device 12 may for instance send a registration request message to the CN 10B. When NAS recovery is triggered in this way, the NAS recovery report 20 as described above indicates the cause of the wireless device 12 performing NAS recovery as being expiry of the data inactivity timer 24.

In some embodiments, expiry of the data inactivity timer 24 may suggest that the wireless device 12 missed receiving a message from the network 10. For example, in some embodiments, missed reception of a message indicating that the AS signalling connection 16 is to be released or suspended may lead to expiry of the data inactivity timer 24 and ultimately NAS recovery. In these and other cases, then, the NAS recovery report 20 and/or root cause analysis may reveal the underlying reason why the wireless device 12 missed receiving the message from the network 10, e.g., because of a coverage hole, poor signal conditions, etc. Appropriate counter-action may then be taken by the network 10 to address that root cause.

NAS recovery in some embodiments may also be accompanied by an RRC state mismatch between the wireless device 12 and the network node 14. Indeed, such state mismatch may be attributable to the cause of the wireless device 12 performing the NAS recovery procedure. For instance, where the wireless device 12 misses a message indicating that the AS signalling connection 16 is to be released or suspended, the wireless device 12 may continue operating as if the signalling connection 16 is still connected while the network 10 operates as if the signalling connection has been released or suspended on the assumption that the wireless device 12 received the message. In these and other cases, then, a network node may, based on the NAS recovery report 20, resolve any RRC state mismatch attributable to the cause of the wireless device 12 performing the NAS recovery procedure. The network node may for instance attempt to re-send the same message to the wireless device 12 as if the signalling connection 16 were still connected.

Alternatively or additionally to NAS recovery report embodiments above, the network node 14 according to some embodiments delays release or suspension of the AS signalling connection 16, in case the wireless device 12 fails to receive the message commanding such release or suspension. Such delay may involve for instance preserving the context 18 for the AS signalling connection 16 even after transmitting the message commanding release or suspension, i.e., at least while the release or suspension is delayed. If the network node 14 indeed detects such failure on the part of the wireless device 12, the network node 14 aborts the delayed release or suspension of the AS signalling connection 16. The network node 14 may then communicate with the wireless device 12 as if the signalling connection 16 had not been released or suspended, e.g., by communicating over the signalling connection 16 using the preserved context 18. Such communication may involve for instance re-transmitting the message.

In some embodiments, detecting failure of the wireless device 12 to receive the message may include detecting a failed attempt to page the wireless device 12. Indeed, if the wireless device 12 does not respond to a paging attempt, it may be assumed in some embodiments that the device's non-response is because the device 12 did not release or suspend the AS signalling connection 16 and therefore is not monitoring the paging channel. In other embodiments, detecting failure of the wireless device 12 to receive the message may include detecting communication from the wireless device 12 that is a type of communication the wireless device 12 would perform if the signaling connection was connected at the wireless device 12.

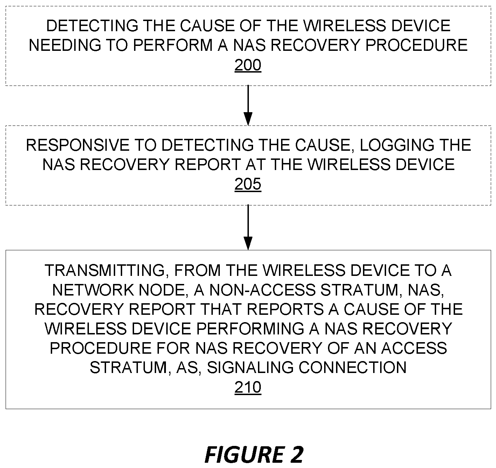

In view of the above modifications and variations, Figure 2 depicts a method performed by a wireless device 12 in accordance with particular embodiments. The method includes transmitting, from the wireless device 12 to a network node 14, a non-access stratum, NAS, recovery report 20 that reports a cause of the wireless device 12 performing a NAS recovery procedure for NAS recovery of an access stratum, AS, signaling connection 16 (Block 210). In some embodiments, the method also comprises detecting the cause (of the wireless device 12 needing to perform the NAS recovery procedure) (Block 200). The method may also include, responsive to detecting the cause, logging the NAS recovery report 20 at the wireless device 12 (Block 205).

In some embodiments, the report 20 reports the cause of the wireless device 12 performing the NAS recovery procedure as being expiry of a data inactivity timer at the wireless device 12 or failure by the wireless device 12 to receive an RRC message configured to release or suspend an RRC connection of the wireless device 12.

In other embodiments, the report 23 reports the cause of the wireless device 12 performing the NAS recovery procedure as being either: integrity protection failure upon reception of a radio resource control, RRC, re-establishment message; triggering of RRC re-establishment and selection of an inter radio access technology, RAT, cell while an idle measurement configuration timer is running, wherein the idle measurement configuration timer is started upon receiving an RRC connection release message that includes an idle measurement configuration and is stopped upon receiving an RRC connection setup or resume message; inability of the wireless device 12 to comply with an RRC reconfiguration message received via New Radio while security is activated, a signaling radio bearer has not been set up for transferring RRC messages that encapsulate NAS message, and at least one data radio bearer has not been set up; expiry of a timer for the wireless device 12 to find a suitable cell in re-establishment; radio link failure being detected while security is activated, a signaling radio bearer has not been set up for transferring RRC messages that encapsulate NAS message, and at least one data radio bearer has not been set up; expiry of a timer for receiving a response to an RRC connection re-establishment request; or inter-RAT cell reselection.

In some embodiments, the NAS recovery report 20 also reports information that includes one or more of: a time at which the cause of the NAS recovery procedure being performed occurred; information describing traffic of the wireless device when the cause occurred; an RRC configuration message that the wireless device last received; location information describing a location of the wireless device when the cause occurred; information describing a cell and/or frequency the wireless device was connected to when the cause occurred; one or more radio measurements associated with the cause; one or more failed scheduling requests; or one or more channel state information reference signaling monitoring failure events.

In some embodiments, the NAS recovery report 20 is transmitted after completing the NAS recovery procedure.

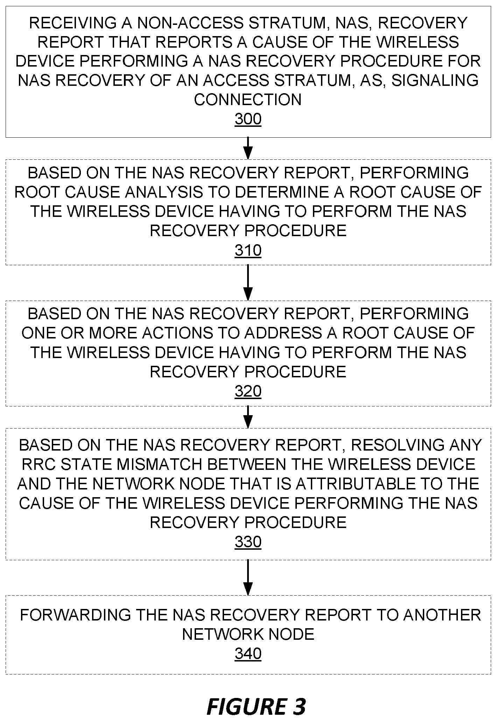

Figure 3 depicts a method performed by a network node in accordance with other particular embodiments. The network node may be network node 14 in Figure 1, or another network node. The method includes receiving a non-access stratum, NAS, recovery report 20 that reports a cause of the wireless device 12 performing a NAS recovery procedure for NAS recovery of an access stratum, AS, signaling connection 16 (Block 300). Where the network node is the network node 14 in Figure 1, the report 20 may be received from the wireless device 12 itself. In other embodiments where the network node is another network node, the report 20 may be received from another network node (e.g., network node 14). Regardless, in some embodiments, the method further comprises, based on the NAS recovery report 20, performing root cause analysis to determine a root cause of the wireless device 12 having to perform the NAS recovery procedure (Block 310).

Alternatively or additionally, the method may comprise, based on the NAS recovery report 20, performing one or more actions to address a root cause of the wireless device 12 having to perform the NAS recovery procedure and/or to reduce a likelihood that the wireless device 12 or another wireless device will have to perform the NAS recovery procedure in the future (Block 320). For example, the one or more actions include one or more of: tuning one or more parameters at the network node that govern measurement reporting, handover, or control signaling timing; optimizing mobility robustness; or optimizing coverage in a geographical area in which the wireless device was located when the wireless device performed the NAS recovery procedure. Alternatively or additionally, the root cause is failure by the wireless device to receive an RRC message due to poor radio conditions at the wireless device, wherein the RRC message releases or suspends an RRC connection of the wireless device, and where the one or more actions include: configuring a timing with which the RRC message is to be transmitted to wireless devices; configuring one or more conditions for triggering a measurement report from wireless devices; configuring one or more parameters that govern radio conditions in which the network node sends the RRC message to wireless devices; or configuring a shape of a cell, beam, or sector served by the network node.

In some embodiments, the method may alternatively or additionally include, based on the NAS recovery report 20, resolving any RRC state mismatch between the wireless device 12 and the network node that is attributable to the cause of the wireless device 12 performing the NAS recovery procedure (Block 330).

Alternatively or additionally, the method may include forwarding the NAS recovery report 20 to another network node (Block 340). In one such embodiment, the method may comprise transmitting to the another network node one or more of: a root cause of the wireless device having to perform the NAS recovery procedure; location information describing a location where the wireless device had to perform the NAS recovery procedure; or a recommended or commanded action for the another network node to perform.

In some embodiments, the report 20 reports the cause of the wireless device 12 performing the NAS recovery procedure as being expiry of a data inactivity timer at the wireless device 12 or failure by the wireless device 12 to receive an RRC message configured to release or suspend an RRC connection of the wireless device 12.

In other embodiments, the report 23 reports the cause of the wireless device 12 performing the NAS recovery procedure as being either: integrity protection failure upon reception of a radio resource control, RRC, re-establishment message; triggering of RRC re-establishment and selection of an inter radio access technology, RAT, cell while an idle measurement configuration timer is running, wherein the idle measurement configuration timer is started upon receiving an RRC connection release message that includes an idle measurement configuration and is stopped upon receiving an RRC connection setup or resume message; inability of the wireless device 12 to comply with an RRC reconfiguration message received via New Radio while security is activated, a signaling radio bearer has not been set up for transferring RRC messages that encapsulate NAS message, and at least one data radio bearer has not been set up; expiry of a timer for the wireless device 12 to find a suitable cell in re-establishment; radio link failure being detected while security is activated, a signaling radio bearer has not been set up for transferring RRC messages that encapsulate NAS message, and at least one data radio bearer has not been set up; expiry of a timer for receiving a response to an RRC connection re-establishment request; or inter-RAT cell reselection.

In some embodiments, the NAS recovery report 20 also reports information that includes one or more of: a time at which the cause of the NAS recovery procedure being performed occurred; information describing traffic of the wireless device when the cause occurred; an RRC configuration message that the wireless device last received; location information describing a location of the wireless device when the cause occurred; information describing a cell and/or frequency the wireless device was connected to when the cause occurred; one or more radio measurements associated with the cause; one or more failed scheduling requests; or one or more channel state information reference signaling monitoring failure events.

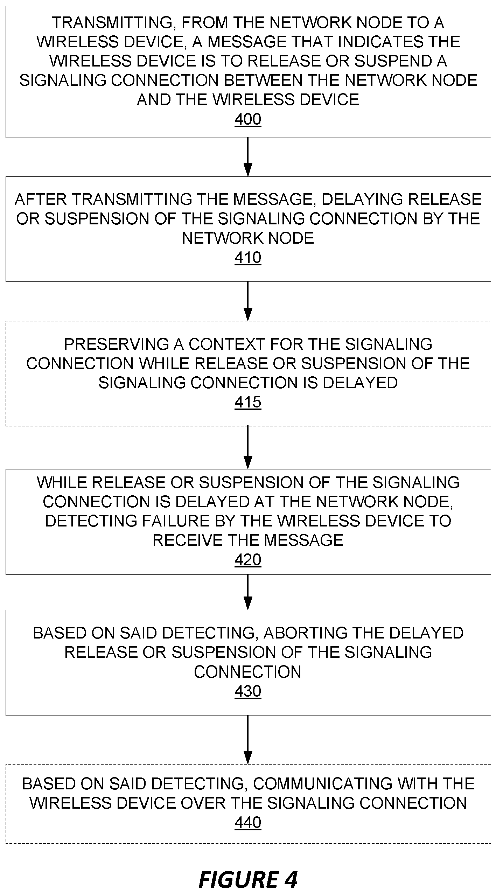

Figure 4 depicts a method performed by a network node 14 in accordance with yet other particular embodiments. The method includes transmitting, from the network node 14 to a wireless device 12, a message that indicates the wireless device 12 is to release or suspend a signaling connection 16 between the network node 14 and the wireless device 12 (Block 400). The method may also include, after transmitting the message, delaying release or suspension of the signaling connection 16 by the network node 14, e.g., including keeping the wireless device 12 in a connected state at the network node (Block 410). The method may further include, while release or suspension of the signaling connection 16 is delayed at the network node 14, detecting failure by the wireless device 12 to receive the message (Block 420). Such detection may involve for instance detecting a failed attempt to page the wireless device 16 and/or detecting communication from the wireless device t12 that is a type of communication the wireless device 12 would perform if the signaling connection 16 was connected at the wireless device 12. The method in some embodiments also includes, based on said detecting, aborting the delayed release or suspension of the signaling connection 16 (Block 430).

In some embodiments, the method also includes, based on said detecting, communicating with the wireless device 12 (e.g., retransmitting the message) over the signaling connection 16 (Block 440).

Alternatively or additionally, the method may include, preserving a context 18 for the signaling connection 16 while release or suspension of the signaling connection 16 is delayed (Block 4150.

In some embodiments, the network node implements a central unit of a base station. In one such embodiment, said delaying comprises delaying transmitting a context release command to a distributed unit of the base station

In another embodiment, the network node implements a central unit of a base station. In one such embodiment, the method further comprises, after transmitting the message, transmitting a context release command to a distributed unit of the base station, where the context release command indicates the distributed unit is to release or suspend the signaling connection after a delay. Alternatively or additionally, the method in such case may further comprise either: receiving a message from the distributed unit indicating that delayed release or suspension of the signaling connection is to be aborted; or transmitting a message from the central unit to the distributed unit indicating that delayed release or suspension of the signaling connection is to be aborted.

Other embodiments herein include a method performed by a network node configured to implement a central unit of a base station. The method comprises transmitting, from the central unit to a distributed unit of the base station, a context release command indicating that the distributed unit is to release or suspend a signaling connection with a wireless device after a delay. The method in some embodiments may further comprise either: receiving a message from the distributed unit indicating that delayed release or suspension of the signaling connection is to be aborted; or transmitting a message from the central unit to the distributed unit indicating that delayed release or suspension of the signaling connection is to be aborted.

Still other embodiments herein include a method performed by a network node configured to implement a distributed unit of a base station. The method comprises receiving, from a central unit of the base station, a context release command indicating that the distributed unit is to release or suspend a signaling connection with a wireless device after a delay. In some embodiments, the method also comprises delaying release or suspension of the signaling connection in accordance with the received context release command. Alternatively or additionally, the method may further comprise either: receiving a message from the central unit indicating that delayed release or suspension of the signaling connection is to be aborted; or transmitting a message from the distributed unit to the central unit indicating that delayed release or suspension of the signaling connection is to be aborted.

Embodiments herein also include corresponding apparatuses. Embodiments herein for instance include a wireless device 12 configured to perform any of the steps of any of the embodiments described above for the wireless device 12.

Embodiments also include a wireless device 12 comprising processing circuitry and power supply circuitry. The processing circuitry is configured to perform any of the steps of any of the embodiments described above for the wireless device 12. The power supply circuitry is configured to supply power to the wireless device 12.

Embodiments further include a wireless device 12 comprising processing circuitry. The processing circuitry is configured to perform any of the steps of any of the embodiments described above for the wireless device 12. In some embodiments, the wireless device 12 further comprises communication circuitry.

Embodiments further include a wireless device 12 comprising processing circuitry and memory. The memory contains instructions executable by the processing circuitry whereby the wireless device 12 is configured to perform any of the steps of any of the embodiments described above for the wireless device 12.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the wireless device 12. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a network node (e.g., network node 14) configured to perform any of the steps of any of the embodiments described above for the network node (e.g., network node 14).

Embodiments also include a network node (e.g., network node 14) comprising processing circuitry and power supply circuitry. The processing circuitry is configured to perform any of the steps of any of the embodiments described above for the network node (e.g., network node 14). The power supply circuitry is configured to supply power to the network node (e.g., network node 14).

Embodiments further include a network node (e.g., network node 14) comprising processing circuitry. The processing circuitry is configured to perform any of the steps of any of the embodiments described above for the network node (e.g., network node 14). In some embodiments, the network node (e.g., network node 14) further comprises communication circuitry.

Embodiments further include a network node (e.g., network node 14) comprising processing circuitry and memory. The memory contains instructions executable by the processing circuitry whereby the radio network node is configured to perform any of the steps of any of the embodiments described above for the network node (e.g., network node 14) de.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

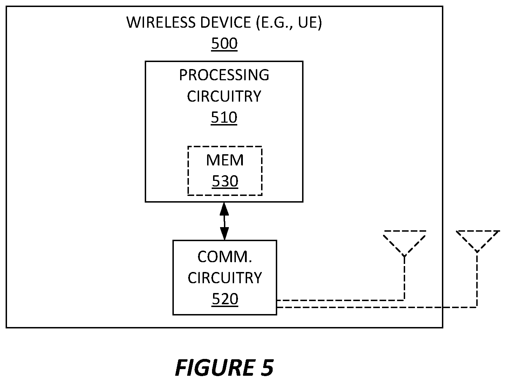

Figure 5 for example illustrates a wireless device 500 (e.g., wireless device 12) as implemented in accordance with one or more embodiments. As shown, the wireless device 500 includes processing circuitry 510 and communication circuitry 520. The communication circuitry 520 (e.g., radio circuitry) is configured to transmit and/or receive information to and/or from one or more other nodes, e.g., via any communication technology. Such communication may occur via one or more antennas that are either internal or external to the wireless device 500. The processing circuitry 510 is configured to perform processing described above, e.g., in Figure 2, such as by executing instructions stored in memory 530. The processing circuitry 510 in this regard may implement certain functional means, units, or modules.

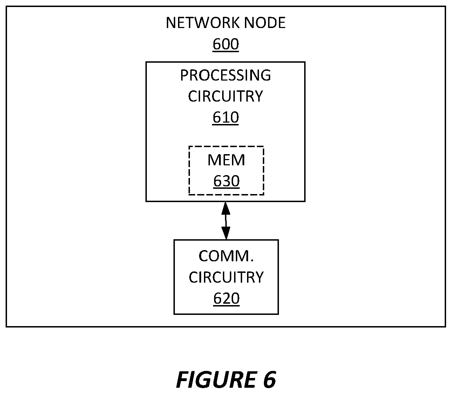

Figure 6 illustrates a network node 600 (e.g., network node 14) as implemented in accordance with one or more embodiments. As shown, the network node 600 includes processing circuitry 610 and communication circuitry 620. The communication circuitry 620 is configured to transmit and/or receive information to and/or from one or more other nodes, e.g., via any communication technology. The processing circuitry 610 is configured to perform processing described above, e.g., in Figure 3 and/or Figure 4, such as by executing instructions stored in memory 630. The processing circuitry 610 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

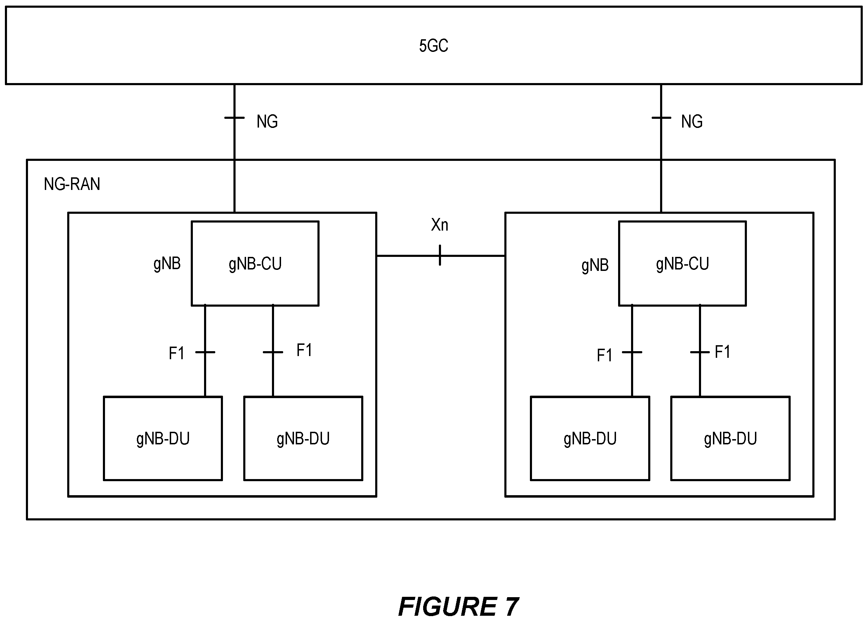

Some embodiments may be applied to a 5G RAN (NG-RAN) architecture, depicted and described in TS 38.401 v15.5.0 as shown in Figure 7. The Next Generation (NG) architecture can be further described as follows. The NG-RAN consists of a set of gNBs connected to the 5G Core (5GC) through the NG. An gNB can support Frequency Division Duplexing (FDD) mode, Time Division Duplexing (TDD) mode or dual mode operation. gNBs can be interconnected through the Xn. A gNB may consist of a gNB central unit (CU) (gNB-CU) and a gNB distributed unit (DU) (gNB-DU). A gNB-CU and a gNB-DU is connected via F1 logical interface. One gNB-DU is connected to only one gNB-CU. For resiliency, a gNB-DU may be connected to multiple gNB-CU by appropriate implementation.

NG, Xn and F1 are logical interfaces. The NG-RAN is layered into a Radio Network Layer (RNL) and a Transport Network Layer (TNL). The NG-RAN architecture, i.e. the NG-RAN logical nodes and interfaces between them, is defined as part of the RNL. For each NG-RAN interface (NG, Xn, F1) the related TNL protocol and the functionality are specified. The TNL provides services for user plane transport, signalling transport. If security protection for control plane and user plane data on TNL of NG-RAN interfaces has to be supported, Network Domain Security (NDS) / Internet Protocol (IP) (3GPP TS 33.401 15.8.0 shall be applied).

A gNB may also be connected to a Long Term Evolution (LTE) eNB via the X2 interface. Another architectural option is that where an LTE eNB connected to the Evolved Packet Core network is connected over the X2 interface with a so called en-gNB. The latter is a gNB not connected directly to a CN and connected via X2 to an eNB for the sole purpose of performing dual connectivity.

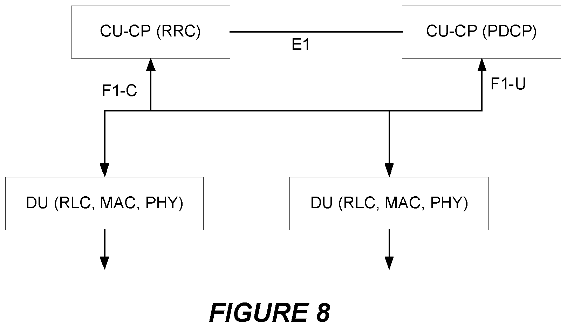

The architecture in Figure 7 can be expanded by spitting the gNB-CU into two entities. So in the split architecture option, the RAN protocol stack functionality is separated in different parts as shown in Figure 8. The CU control plane (CU-CP) is expected to handle the RRC layer, the CU user plane (CU-UP) will handle the Packet Data Convergence Protocol (PDCP) layer and the DU will handle the Radio Link Control (RLC), Medium Access Control (MAC) and Physical (PHY) layer of the protocol stack. In some further split the DU can have separated unit that handles the PHY parts separately compared to RLC and MAC layers that are handled in a DU.

As different units handle different protocol stack functionalities, there will be a need for inter-node communication between the DU, the CU-UP and the CU-CP. This is achieved via F1-C interface related to control plane signaling, via F1-U interface related to user plane signaling for communication between CU and DU, and via E1 for communication between CU-UP and CU-CP.

The E1 interface is a logical interface. It supports the exchange of signalling information between the endpoints. From a logical standpoint, the E1 is a point-to-point interface between a gNB-CU-CP and a gNB-CU-UP. The E1 interface enables exchange of UE-associated information and non-UE associated information. The E1 interface is a control interface and is not used for user data forwarding.

### RRC suspend/Resume and inactive state

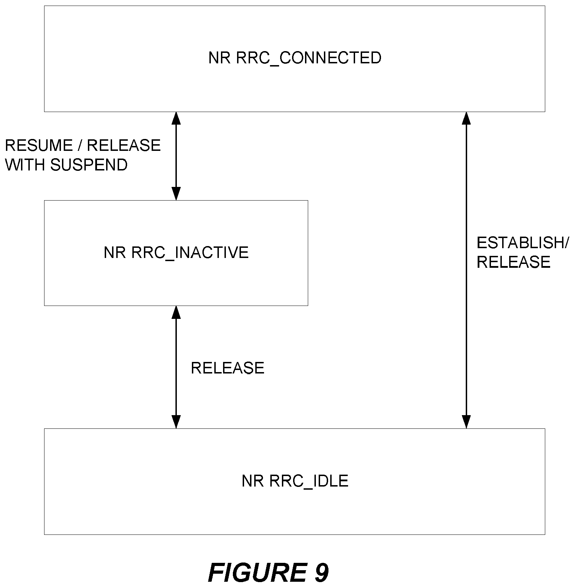

The RRC state model is updated in New Radio (NR) (and in eLTE, i.e. LTE connected to 5GC) and a new RRC_INACTIVE state is introduced in addition to the existing RRC_IDLE and RRC_CONNECTED states inherited from LTE. Figure 9 shows the RRC states according to some embodiments in this regard. In RRC_INACTIVE, the user equipment (UE) context from the previous RRC connection is stored in the RAN and is re-used the next time an RRC connection is established. The UE context includes information such as the UE security configuration, configured radio bearers, etc. By storing the UE context in the RAN, one avoids the signaling required for security activation and bearer establishment which is normally required when transitioning from RRC_IDLE to RRC_CONNECTED. This improves latency and reduces the signaling overhead.

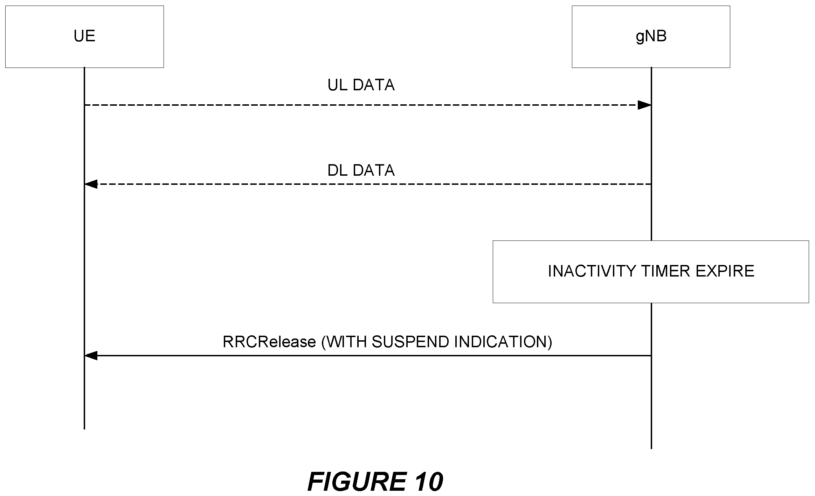

RRC_INACTIVE mode is realized by introducing two new procedures "RRC connection suspend" (also called RRC connection release with SuspendConfig) and "RRC connection resume". The gNB suspends a connection and moves the UE from RRC_CONNECTED to RRC_INACTIVE by sending a RRC release message with suspend indication (or configuration) to the UE, as shown in Figure 10. This may happen for example after the UE has been inactive for a certain period which causes the gNB internal inactivity timer to expire. Both the UE and gNB stores the UE context and the associated identifier (referred to as I-RNTI, radio network temporary identifier). Two identifiers will be configured in the suspend configuration, namely a long and short I-RNTI. The one to be used in resume depends on an indication from the network in system information of the cell the UE tries to resume in. The two I-RNTI identifiers were introduced to support scenarios when the UE is resuming in a cell which only gives the UE a small scheduling grant for the first UL message. For this purpose, also two different resume messages has been introduced namely *RRCResumeRequest* and *RRCResumeRequest1.* As used herein, RRC resume request is used to refer to both messages.

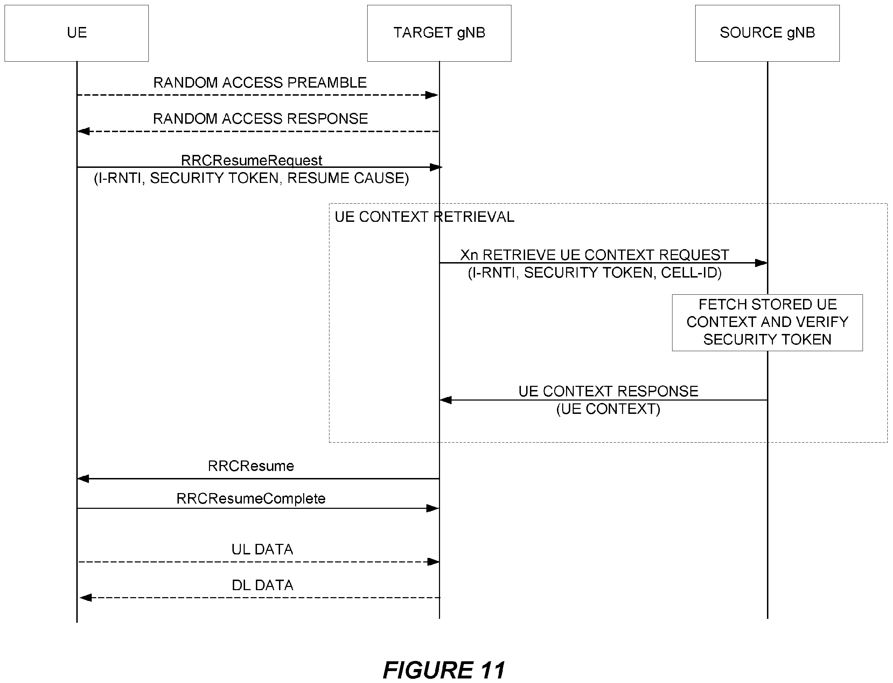

Figure 11 shows the resume process. As shown, at the next transition to RRC_CONNECTED, the UE resumes the connection by sending a RRC resume request including the following information to the gNB which the UE attempts to resume the connection towards (note that it may be another cell/gNB compared to the cell/gNB where the connection was suspended):
- The I-RNTI (either the long or short I-RNTI depending on the system information indication)
- A security token (called *resumeMAC-I* in the specification) which is used to identify and verify the UE at RRC connection resume
- An indication of the cause of the resume, e.g. mobile originated data.

The gNB which serves the cell in which the UE is resuming is sometimes referred to as the target gNB, while the gNB serving the cell in which the UE was suspended in is sometimes referred to as the source gNB. To resume the connection, the target gNB determines which gNB is the source gNB (considering the gNB part of the I-RNTI) and requests gNB to send the UE's context. In the request the target provides, among other things, the UE ID and security token received from the UE as well as the target cell Cell ID. The source gNB then locates the UE context based on the I-RNTI and verifies the request based on the security token. If successful, the gNB forwards the UE context to the target gNB, which then responds to the UE with RRC resume to confirm the connection is being resumed. The RRC resume message may also contain configurations to reconfigure the radio bearers being resumed. Finally, the UE acknowledges the reception of the RRC re-establishment by sending RRC re-establishment complete.

Note that the described NR RRC resume procedure works in a similar way in LTE (even though in the state model the UE is considered in RRC_IDLE with a stored context) and eLTE (i.e. when LTE is connected to 5GC).

In NR and in eLTE (LTE connected to 5GC) the *RRCResume* message in response to an *RRCResumeRequest* is encrypted and integrity protected. That is done using new security keys, derived based on the stored AS security context. This new key derivation (sort of a key update) is done as part of the resume procedure, in particular as part of the transmission of the *RRCResumeRequest* (or *RRCResumeRequest1).*

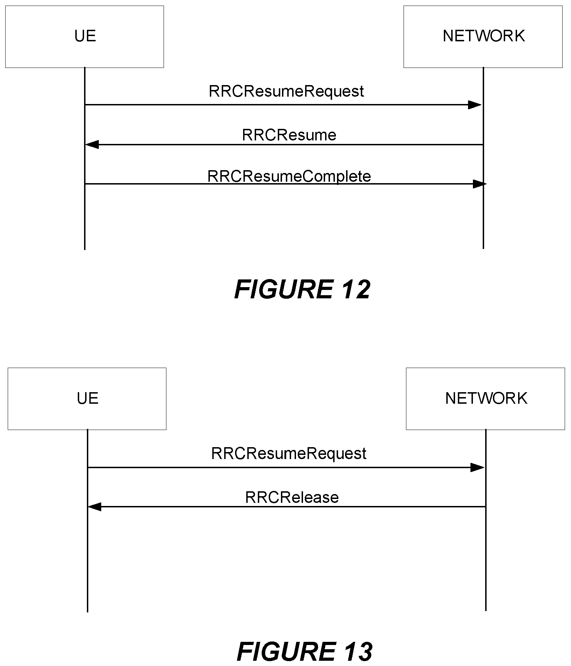

It is not only the *RRCResume* message that may be sent in response to the *RRCResumeRequest* message, *RRCResume* moving the UE to RRC_CONNECTED, as shown in Figure 12. In NR and eLTE, after the UE sends an RRC Resume Request kind of message (e.g. *RRCResumeRequest* or *RRCResumeRequest1*) the UE may receive a message on Signaling Radio Bearer #1 (SRB1) that should also be encrypted, and integrity protected.

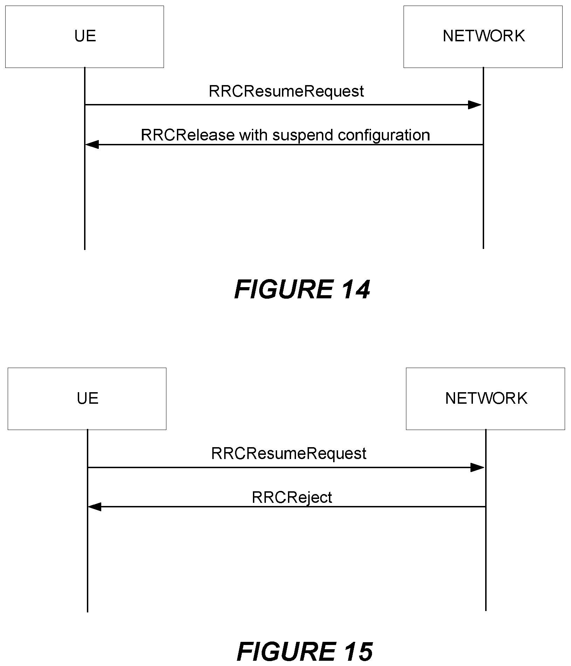

For example, as shown in Figure 13, the UE may receive an *RRCRelease* with suspend configuration moving the UE to RRC_INACTIVE. Or, as shown in Figure 14, the UE may receive an *RRCRelease* without suspend configuration moving the UE to RRC_IDLE. Other messages may also be transmitted, such as an RRCReject with wait timer as shown in Figure 15 or *RRCSetup* (fallback to RRC_IDLE) but on SRB0 (i.e. not encrypted or integrity protected).

The 3GPP specifications capture these procedures as follows: *Transition from Connected to Inactive or Idle (actions upon reception of an RRCRelease)*

Network may transition the UE from CONNECTED to INACTIVE or IDLE by providing an RRCRelease like message with or without a suspendConfig. The UE actions upon receiving the message are the following:
5.3.8.3 Reception of the *RRCRelease* by the UE

The UE shall:
1> delay the following actions defined in this sub-clause 60 ms from the moment the RRCRelease message was received or optionally when lower layers indicate that the receipt of the RRCRelease message has been successfully acknowledged, whichever is earlier;
1> stop timer T380, if running;
1> stop timer T320, if running;
1> if T390 is running:
   2> stop timer T390 for all access categories;
   2> perform the actions as specified in 5.3.14.4;
1> if the AS security is not activated, perform the actions upon going to RRC_IDLE as specified in 5.3.11 with the release cause 'other' upon which the procedure ends;
1> if the RRCRelease message includes redirectedCarrierlnfo indicating redirection to eutra:
   2> if cnType is included:
   3> after the cell selection, indicate the available CN Type(s) and the received cnType to upper layers;
   NOTE: Handling the case if the E-UTRA cell selected after the redirection does not support the core network type specified by the cnType, is up to UE implementation.
1> if the RRCRelease message includes the cellReselectionPriorities:
   2> store the cell reselection priority information provided by the cellReselectionPriorities;
   2> if the t320 is included:
      3> start timer T320, with the timer value set according to the value of t320;
1>else:
   2>apply the cell reselection priority information broadcast in the system information;
1> if deprioritisationReq is included:
   2> start or restart timer T325 with the timer value set to the deprioritisationTimer signalled;
   2> store the deprioritisationReq until T325 expiry;
1> if the RRCRelease includes suspendConfig:
   2> apply the received suspendConfig;
   2> reset MAC and release the default MAC Cell Group configuration, if any;
   2> re-establish RLC entities for SRB1;
   2> if the RRCRelease message with suspendConfig was received in response to an RRCResumeRequest or an RRCResumeRequest1:
      3> stop the timer T319 if running;
      3> in the stored UE Inactive AS context:
         4> replace the KgNB and KRRCint keys with the current KgNB and KRRCint keys;
         4> replace the C-RNTI with the temporary C-RNTI in the cell the UE has received the RRCRelease message;
         4> replace the cellldentity with the cell Identity of the cell the UE has received the RRCRelease message;
         4> replace the physical cell identity with the physical cell identity of the cell the UE has received the RRCRelease message;
         4> replace the suspendConfig with the current suspendConfig;
   2> else:
      3> store in the UE Inactive AS Context the configured suspendConfig, the current KgNB and KRRCint keys, the ROHC state, the C-RNTI used in the source PCell, the cellldentity and the physical cell identity of the source PCell, and all other parameters configured except with ReconfigurationWithSync;
   2> suspend all SRB(s) and DRB(s), except SRB0;
   2> indicate PDCP suspend to lower layers of all DRBs;
   2> if the t380 is included:
      3> start timer T380, with the timer value set to t380;
   2> if the RRCRelease message is including the waitTime:
      3> start timer T302 with the value set to the waitTime;
      3> inform the upper layer that access barring is applicable for all access categories except categories '0' and '2';
   2> indicate the suspension of the RRC connection to upper layers;
   2> enter RRC_INACTIVE and perform cell selection as specified in TS 38.304 [20];
1> else
   2> perform the actions upon going to RRC_IDLE as specified in 5.3.11, with the release cause 'other'.

### RRC Release with Redirection Information

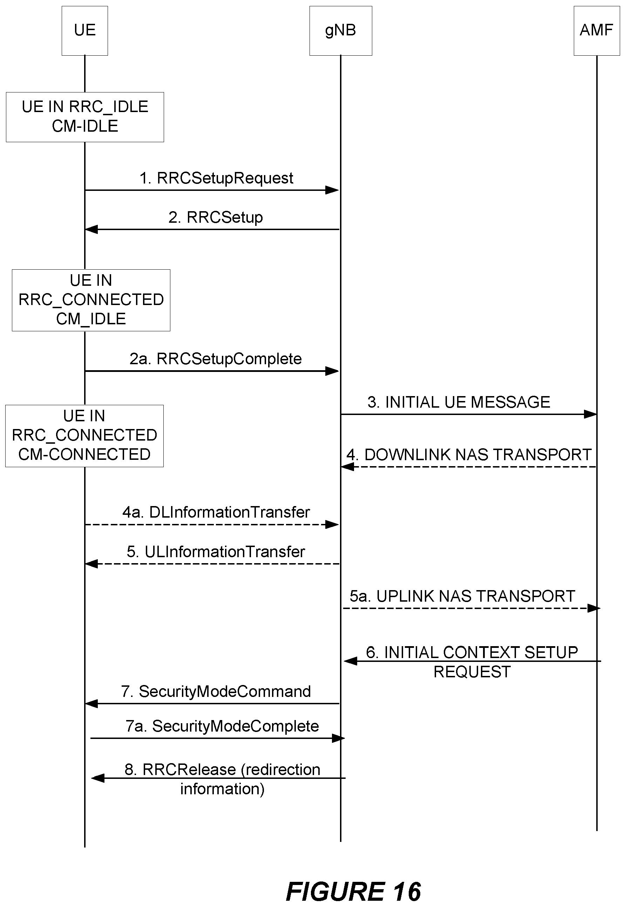

As shown in Figure 16, release and re-direct is an alternative to handover and is used by the network to move the UE to another carrier or other radio access technology (RAT). This could be done due to e.g. load balancing reasons or because the requested service is not available in the source carrier/RAT. For security reasons, release with re-direct can only be performed in NR after AS security has been established. This is to prevent a fake base station from redirecting the UE to another RAT which uses which uses weaker security (e.g. GSM) or in other ways cause disturbance to the system.

The fact that release with re-direct can only be performed after security activation implies a performance penalty in terms of increased latency and signaling, especially for UEs coming from RRC_IDLE mode. In the case of an RRC_IDLE UE, the UE would need to trigger an RRC establishment procedure, enter RRC_CONNECTED, perform initial security activation, and only then receive the protected redirection information.

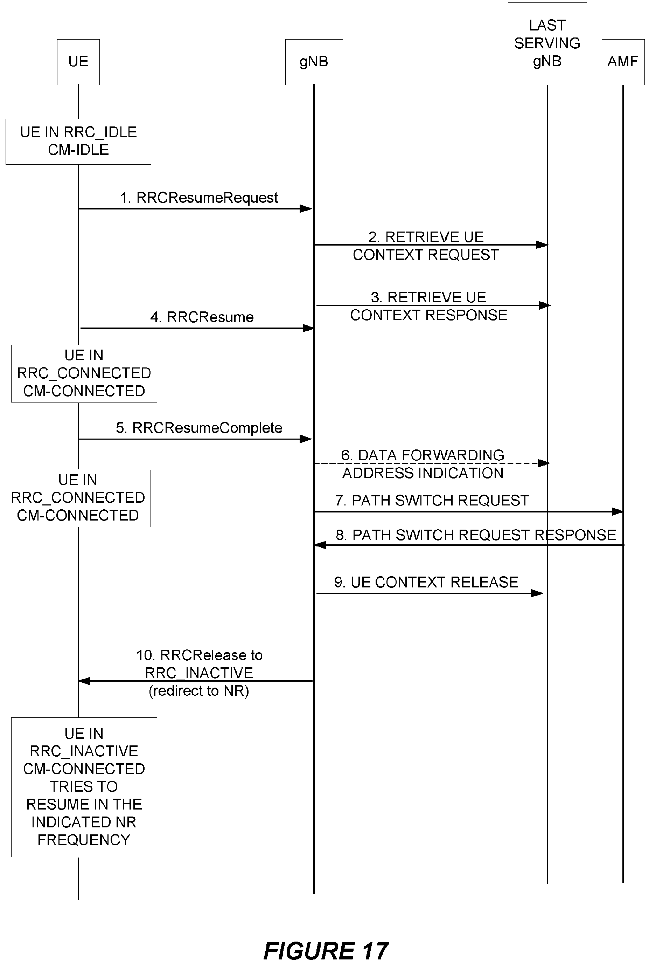

Performance can be improved for UE supporting RRC_INACTIVE mode. With the introduction of RRC_INACTIVE in NR, the procedure to enter RRC_CONNECTED becomes much faster. Hence, the use case of an incoming UE entering RRC_CONNECTED and then being released becomes faster as security is already activated, i.e., there is no need to perform the initial security activation procedure. In the example in Figure 17, an RRC_INACTIVE UE tries to resume an RRC connection and, after entering RRC_CONNECTED the UE is suspended to RRC_INACTIVE with redirection information to an NR frequency. It would also be possible to redirect the UE to another RAT. Comparing Figure 17 and Figure 16 one sees that less radio and core network signaling is required for the release and redirect.

### Mobility Robustness Optimization in LTE, NR and relation to RLF reports

Seamless handovers are a key feature of 3GPP technologies. Successful handovers ensure that the UE moves around in the coverage area of different cells without causing too much interruption in the data transmission. However, there will be scenarios when the network fails to handover the UE to the 'correct' neighbor cell in time and in such scenarios the UE will declare the radio link failure (RLF) or Handover Failure (HOF).

Upon HOF and RLF, the UE may take autonomous actions i.e. trying to select a cell and initiate reestablishment procedure so that it is ensured the UE is trying to get back as soon as it can, so that it can be reachable again. The RLF will cause a poor user experience as the RLF is declared by the UE only when it realizes that there is no reliable communication channel (radio link) available between itself and the network. Also, reestablishing the connection requires signaling with the newly selected cell (random access procedure, RRC Reestablishment Request, RRC Reestablishment RRC Reestablishment Complete, RRC Reconfiguration and RRC Reconfiguration Complete) and adds some latency, until the UE can exchange data with the network again.

According to the 3GPP specifications (TS 36.331 v15.6.0), the possible causes for the radio link failure could be one of the following:
1) Expiry of the radio link monitoring related timer T310;
2) Expiry of the measurement reporting associated timer T312 (not receiving the handover command from the network within this timer's duration despite sending the measurement report when T310 was running);
3) Upon reaching the maximum number of RLC retransmissions;
4) Upon receiving random access problem indication from the MAC entity;

As RLF leads to reestablishment which degrades performance and user experience, it is in the interest of the network to understand the reasons for RLF and to try to optimize mobility related parameters (e.g. trigger conditions of measurement reports) to avoid later RLFs. Before the standardization of mobility robustness optimization (MRO) related report handling in the network, only the UE was aware of some information associated with how did the radio quality looked like at the time of RLF, what is the actual reason for declaring RLF etc. For the network to identify the reason for the RLF, the network needs more information, both from the UE and also from the neighboring base stations.

As part of the MRO solution in LTE, the RLF reporting procedure was introduced in the RRC specification in Rel-9 RAN2 work. That has impacted the RRC specifications (TS 36.331 v15.6.0) in the sense that it was standardized that the UE would log relevant information at the moment of an RLF and later report to a target cell to which the UE succeeds to connect (e.g. after reestablishment). That has also impacted the inter-gNodeB interface, i.e., X2AP specifications (TS 36.423 v15.5.0), as an eNodeB receiving an RLF report could forward to the eNodeB where the failure has been originated.

For the RLF report generated by the UE, its contents have been enhanced with more details in the subsequent releases. The measurements included in the measurement report based on the LTE RRC specification (TS 36.331 v15.6.0) are:
1) Measurement quantities (reference signal received power, RSRP, and reference signal received quality, RSRQ) of the last serving cell (PCell).
2) Measurement quantities of the neighbor cells in different frequencies of different RATs (EUTRA, UTRA, GERAN, CDMA2000).
3) Measurement quantity (received signal strength indicator, RSSI) associated to wireless local area network (WLAN) Aps.
4) Measurement quantity (RSSI) associated to Bluetooth beacons.
5) Location information, if available (including location coordinates and velocity)
6) Globally unique identity of the last serving cell, if available, otherwise the Physical Cell Identity (PCI) and the carrier frequency of the last serving cell.
7) Tracking area code of the PCell.
8) Time elapsed since the last reception of the *'Handover command'* message.
9) Cell Radio Network Temporary Identifier (C-RNTI) used in the previous serving cell.
10) Whether or not the UE was configured with a data radio bearer (DRB) having Quality of Service Class Identifier (QCI) value of 1.

The detection and logging of the RLF related parameters is captured in section 5.3.11.3 of LTE RRC specification (TS 36.331 v15.6.0):
5.3.11.3 Detection of radio link failure

The UE shall:
1>upon T310 expiry; or
1>upon T312 expiry; or
1> upon random access problem indication from MCG MAC while neither T300, T301, T304 nor T311 is running; or
1> upon indication from MCG RLC, which is allowed to be send on PCell, that the maximum number of retransmissions has been reached for an SRB or DRB:
   2> consider radio link failure to be detected for the MCG i.e. RLF;
   2> except for NB-loT, store the following radio link failure information in the VarRLF-Report by setting its fields as follows:
      3> clear the information included in VarRLF-Report, if any;
      3> set the plmn-ldentityList to include the list of EPLMNs stored by the UE (i.e. includes the RPLMN);
      3>set the measResultLastServCell to include the RSRP and RSRQ, if available, of the PCell based on measurements collected up to the moment the UE detected radio link failure;
      3>set the measResultNeighCells to include the best measured cells, other than the PCell, ordered such that the best cell is listed first, and based on measurements collected up to the moment the UE detected radio link failure, and set its fields as follows;
         4> if the UE was configured to perform measurements for one or more EUTRA frequencies, include the measResultListEUTRA;
         4> if the UE was configured to perform measurement reporting for one or more neighbouring UTRA frequencies, include the measResultListUTRA;
         4> if the UE was configured to perform measurement reporting for one or more neighbouring GERAN frequencies, include the measResultListGERAN;
         4> if the UE was configured to perform measurement reporting for one or more neighbouring CDMA2000 frequencies, include the measResultsCDMA2000;
         4> for each neighbour cell included, include the optional fields that are available;
         NOTE 1: The measured quantities are filtered by the L3 filter as configured in the mobility measurement configuration. The measurements are based on the time domain measurement resource restriction, if configured. Blacklisted cells are not required to be reported.
      3> if available, set the logMeasResultListWLAN to include the WLAN measurement results, in order of decreasing RSSI for WLAN APs;
      3> if available, set the logMeasResultListBT to include the Bluetooth measurement results, in order of decreasing RSSI for Bluetooth beacons;
      3> if detailed location information is available, set the content of the location Info as follows:
         4> include the locationCoordinates;
         4> include the horizontalVelocity, if available;
      3> set the failedPCellld to the global cell identity, if available, and otherwise to the physical cell identity and carrier frequency of the PCell where radio link failure is detected;
      3> set the tac-FailedPCell to the tracking area code, if available, of the PCell where radio link failure is detected;
      3> if an RRCConnectionReconfiguration message including the mobilityControllnfo was received before the connection failure:
         4> if the last RRCConnectionReconfiguration message including the mobilityControllnfo concerned an intra E-UTRA handover:
            a 5> include the previousPCellld and set it to the global cell identity of the PCell where the last RRCConnectionReconfiguration message including mobilityControllnfo was received;
            b 5> set the timeConnFailure to the elapsed time since reception of the last RRCConnectionReconfiguration message including the mobilityControllnfo;
         4> if the last RRCConnectionReconfiguration message including the mobilityControllnfo concerned a handover to E-UTRA from UTRA and if the UE supports Radio Link Failure Report for Inter-RAT MRO:
            c 5> include the previousUTRA-Cellld and set it to the physical cell identity, the carrier frequency and the global cell identity, if available, of the UTRA Cell in which the last RRCConnectionReconfiguration message including mobilityControllnfo was received;
            d 5> set the timeConnFailure to the elapsed time since reception of the last RRCConnectionReconfiguration message including the mobilityControllnfo;
      3> if the UE supports QCl1 indication in Radio Link Failure Report and has a DRB for which QCI is 1:
         4> include the drb-EstablishedWithQCI-1;
      3> set the connection Failure Type to rlf;
      3> set the c-RNTI to the C-RNTI used in the PCell;
      3> set the rlf-Cause to the trigger for detecting radio link failure;
   2> if AS security has not been activated:
      3> if the UE is a NB-loT UE:
         4> if the UE supports RRC connection re-establishment for the Control Plane CloT EPS optimisation:
            a 5> initiate the RRC connection re-establishment procedure as specified in 5.3.7;
         4> else:
            b 5> perform the actions upon leaving RRC_CONNECTED as specified in 5.3.12, with release cause 'RRC connection failure';
      3> else:
         4> perform the actions upon leaving RRC_CONNECTED as specified in 5.3.12, with release cause 'other';
   2> else:
      3> initiate the connection re-establishment procedure as specified in 5.3.7; In case of DC, the UE shall:
1>upon T313 expiry; or
1> upon random access problem indication from SCG MAC; or
1>upon indication from SCG RLC, which is allowed to be sent on PSCell, that the maximum number of retransmissions has been reached for an SCG or split DRB:
   2> consider radio link failure to be detected for the SCG i.e. SCG-RLF;
   2> initiate the SCG failure information procedure as specified in 5.6.13 to report SCG radio link failure;
      In case of CA PDCP duplication, the UE shall:
1> upon indication from an RLC entity, which is restricted to be sent on SCell only, that the maximum number of retransmissions has been reached:
   2> consider radio link failure to be detected for the RLC entity;
   2> initiate the failure information procedure as specified in 5.6.21 to report PDCP duplication failure;

The UE may discard the radio link failure information, i.e. release the UE variable *VarRLF-Report,* 48 hours after the radio link failure is detected, upon power off or upon detach.

After the RLF is declared, the RLF report is logged and, once the UE selects a cell and succeeds with a reestablishment, it includes an indication that it has an RLF report available in the RRC Reestablishment Complete message, to make the target cell aware of that availability. Then, upon receiving an *UEInformationRequest* message with a flag "rlf-ReportReq-r9" the UE shall include the RLF report (stored in a UE variable VarRLF-Report, as described above) in an *UEInformationResponse* message and send to the network. The *UEInformationRequest,* and *UEInformationResponse* messages are shown below.

### - UElnformationRequest

The UElnformationRequest is the command used by E-UTRAN to retrieve information from the UE.

### Signalling radio bearer: SRB1

RLC-SAP: AM
Logical channel: DCCH
Direction: E-UTRAN to UE

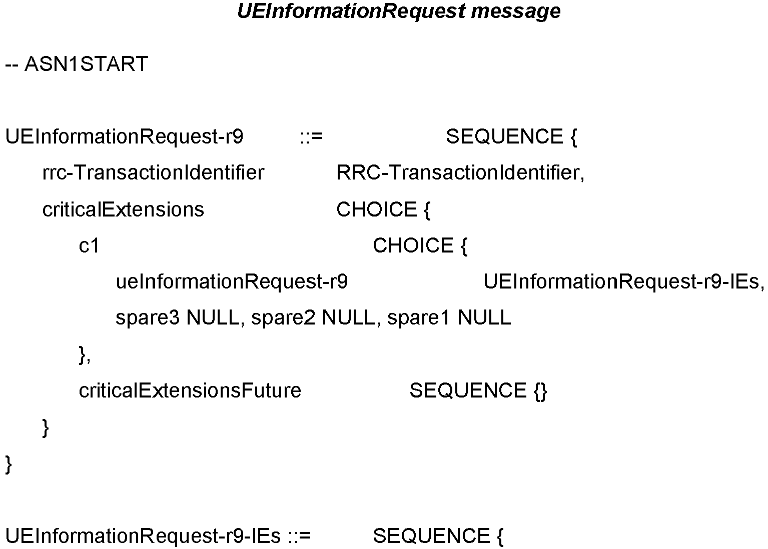

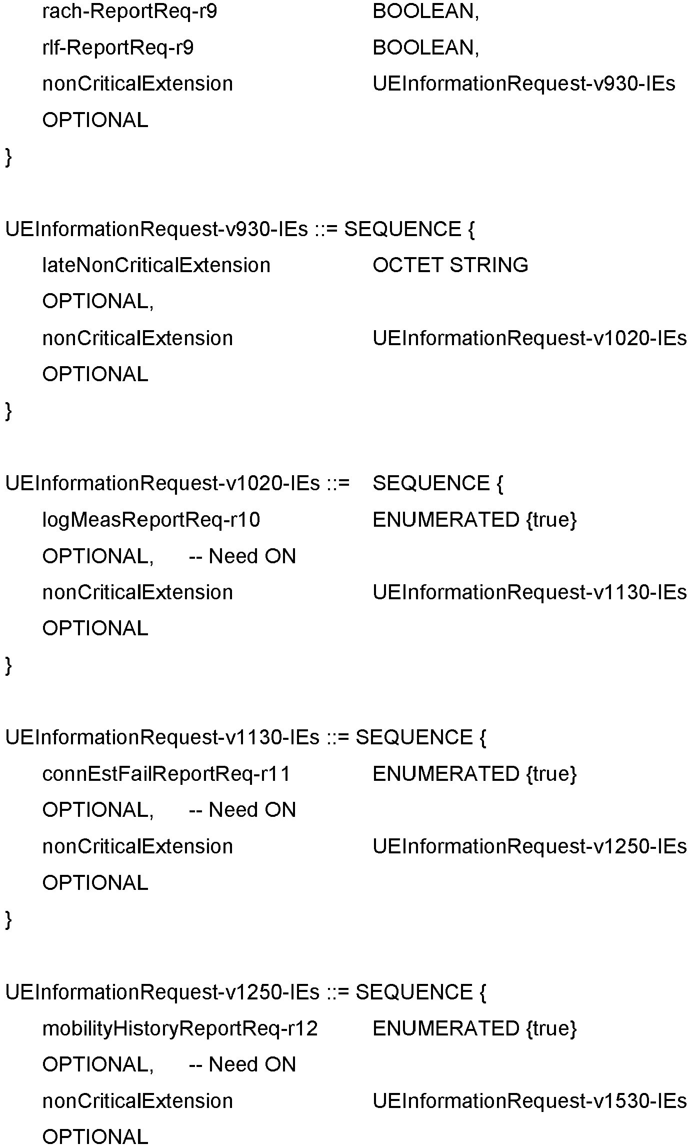

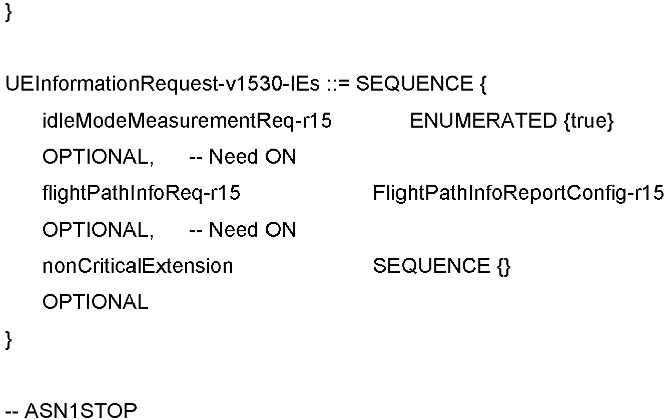

| ***UEInformationRequest* field descriptions** |
|---|
| ***rach-ReportReq*** |
| This field is used to indicate whether the UE shall report information about the random access procedure. |

### - UEInformationResponse

The UEInformationResponse message is used by the UE to transfer the information requested by the E-UTRAN.
Signalling radio bearer: SRB1 or SRB2 (when logged measurement information is included)
RLC-SAP: AM
Logical channel: DCCH
Direction: UE to E-UTRAN

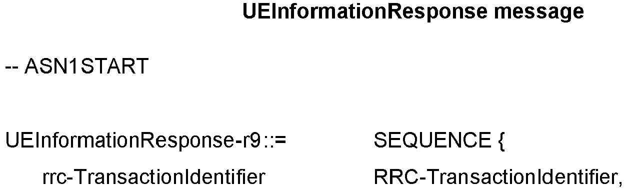

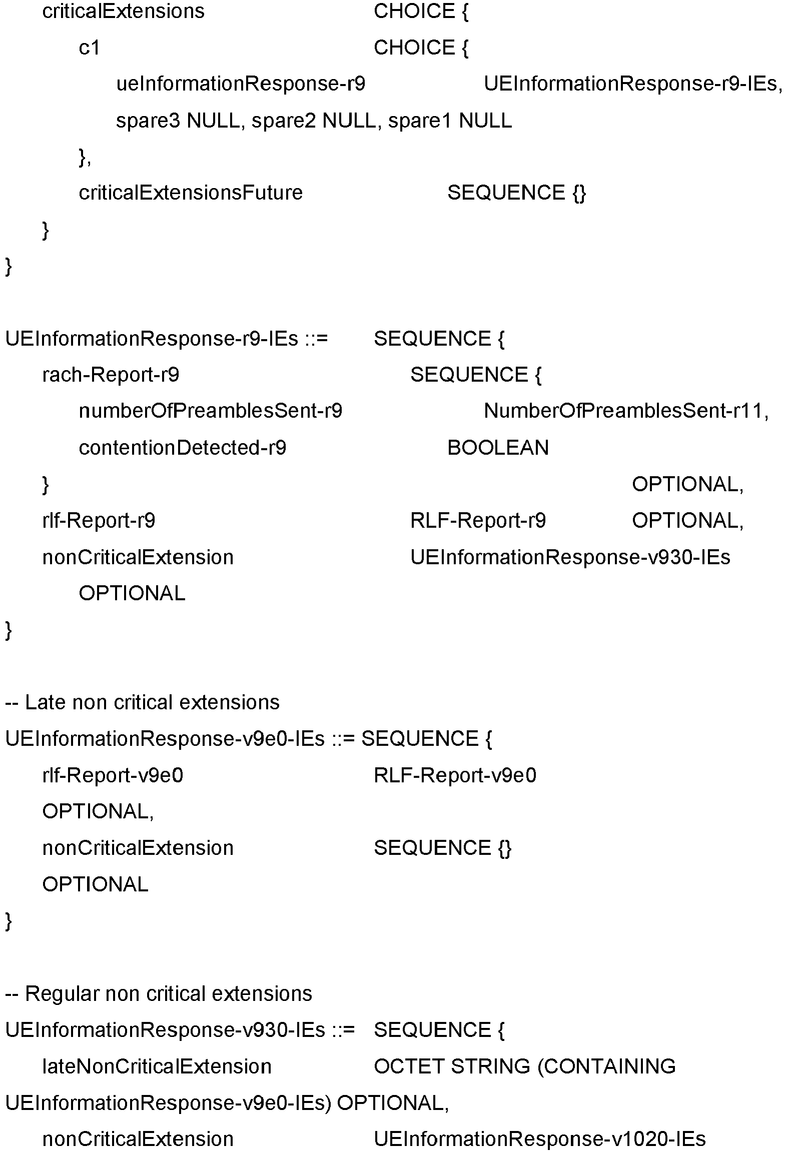

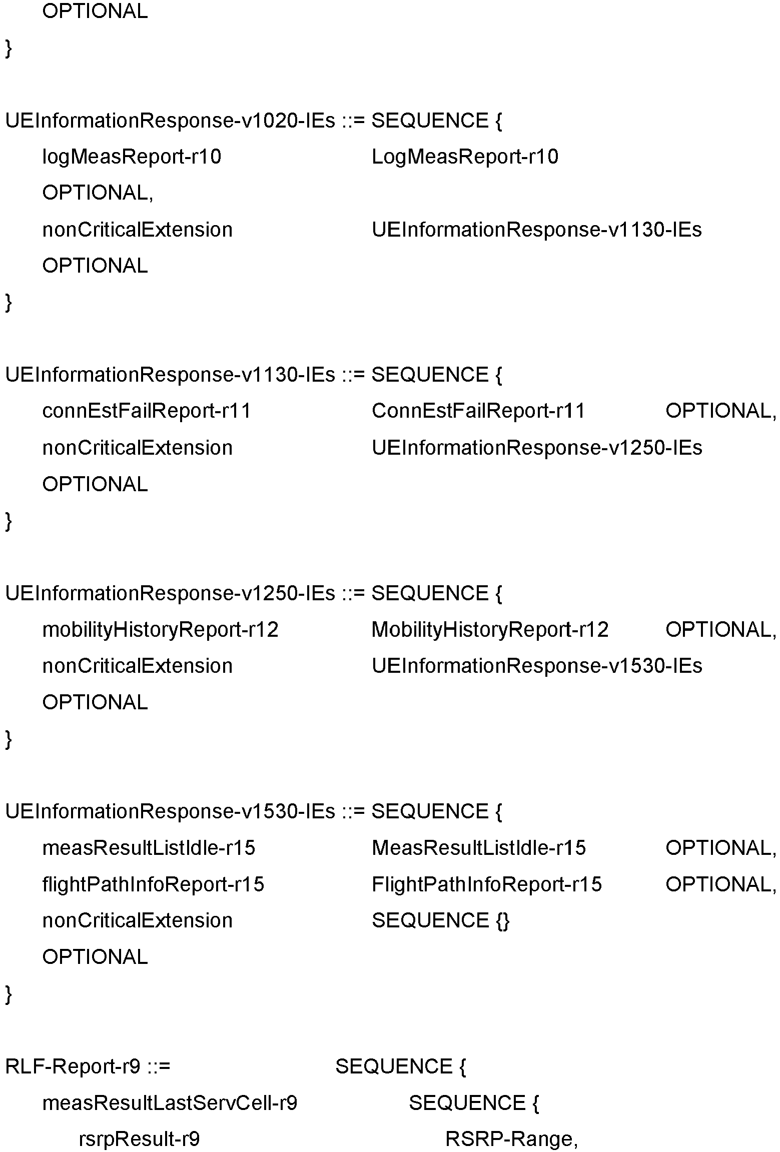

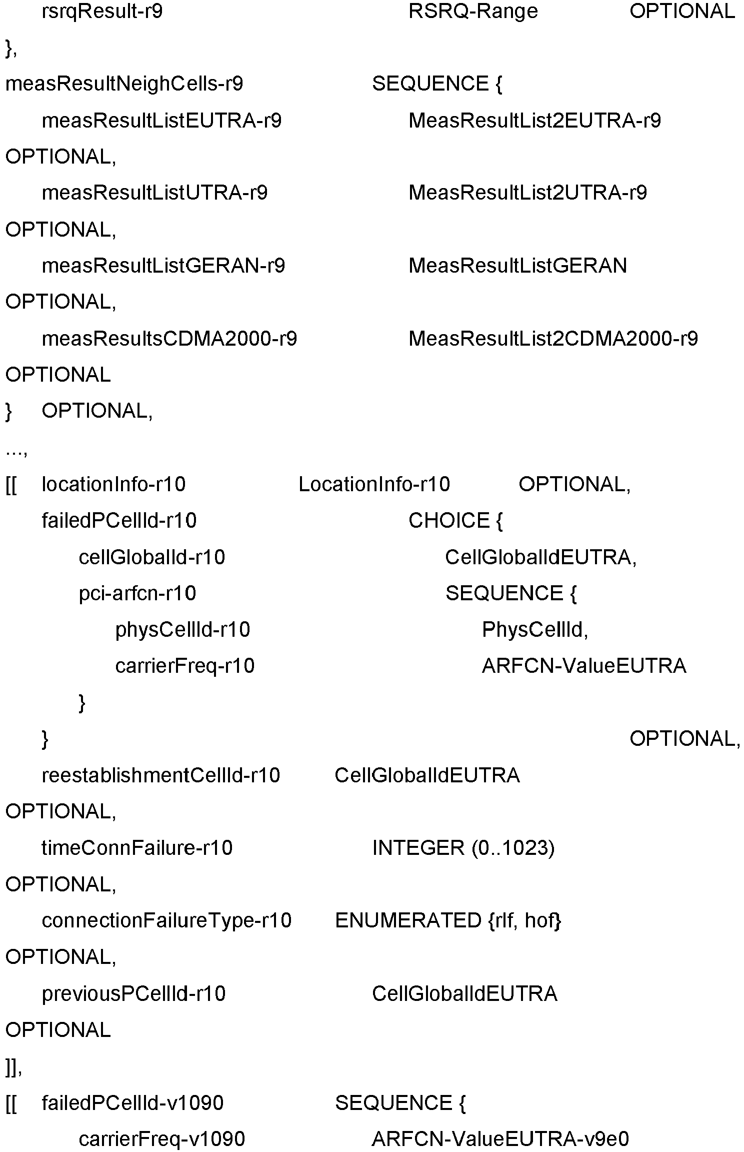

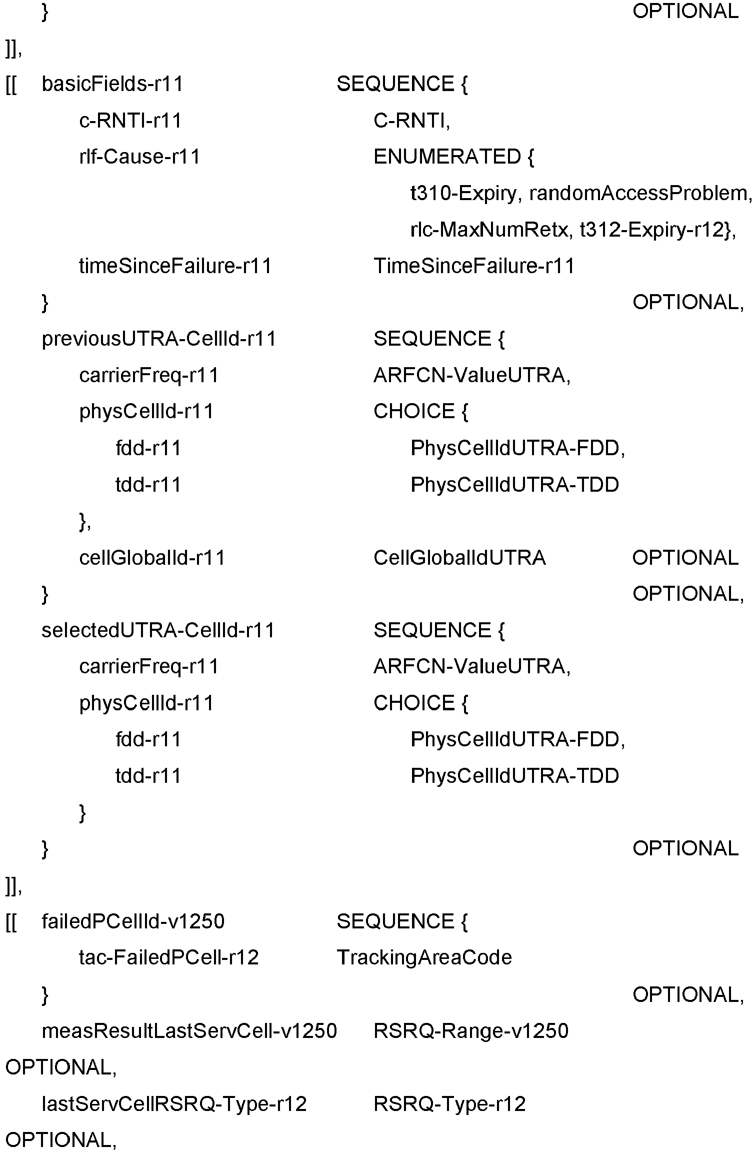

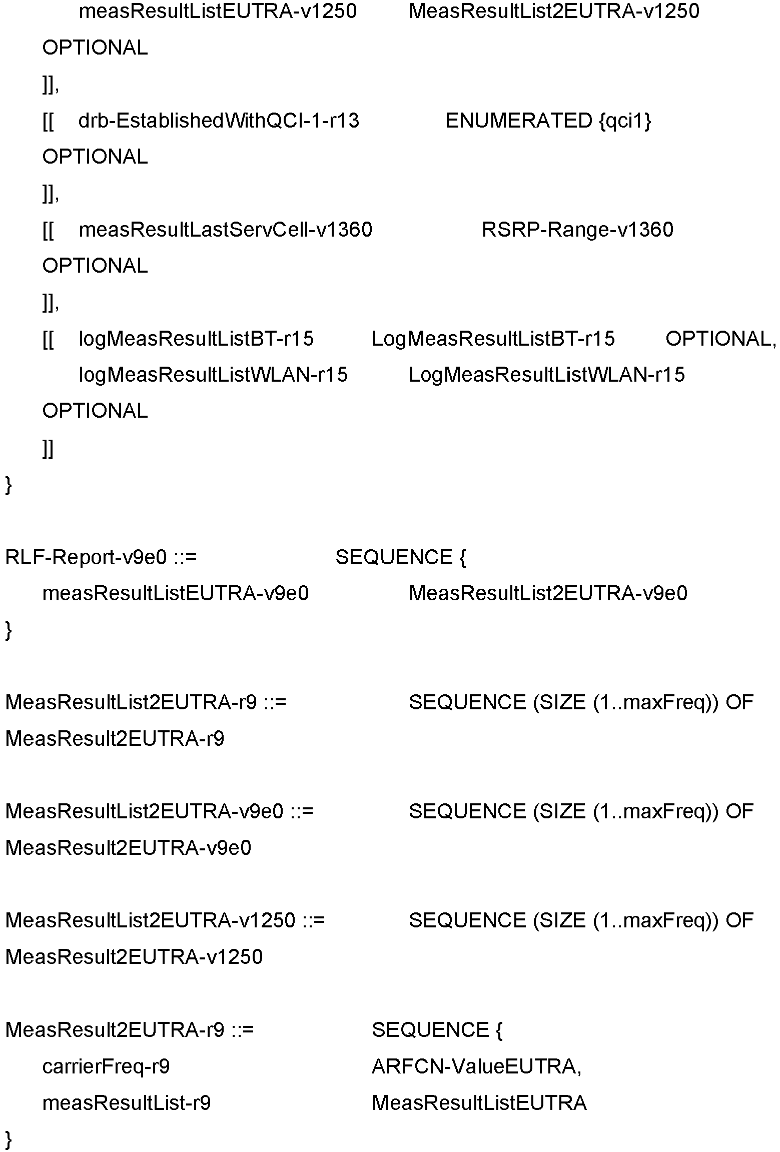

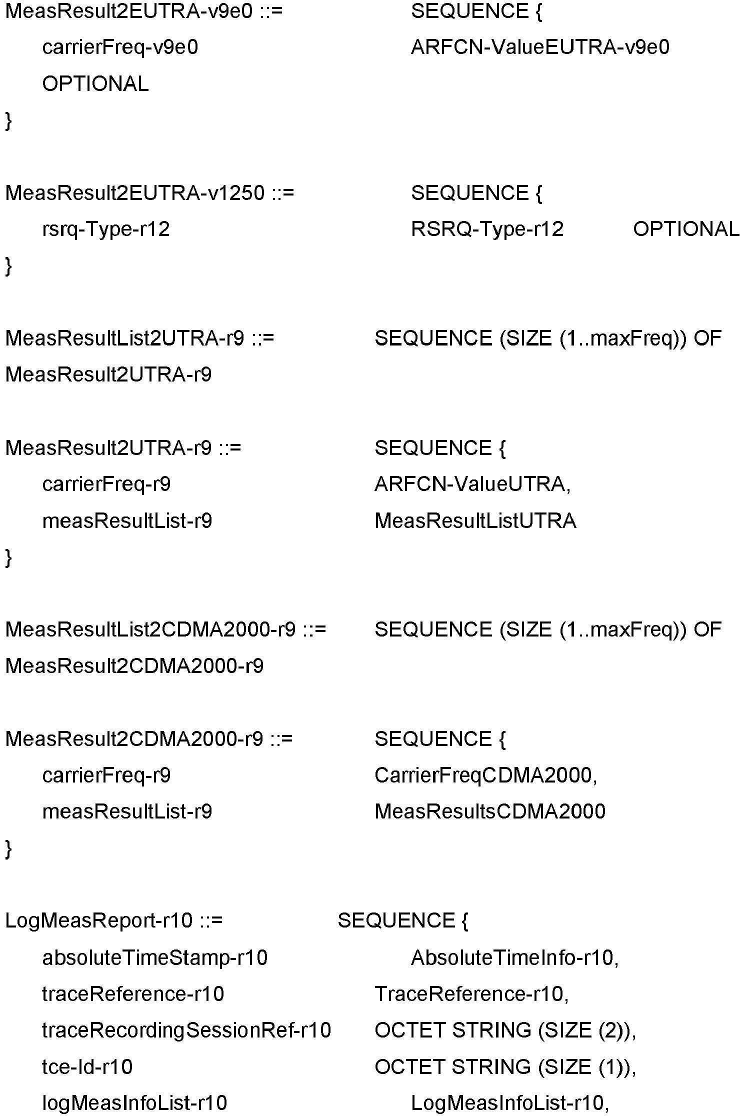

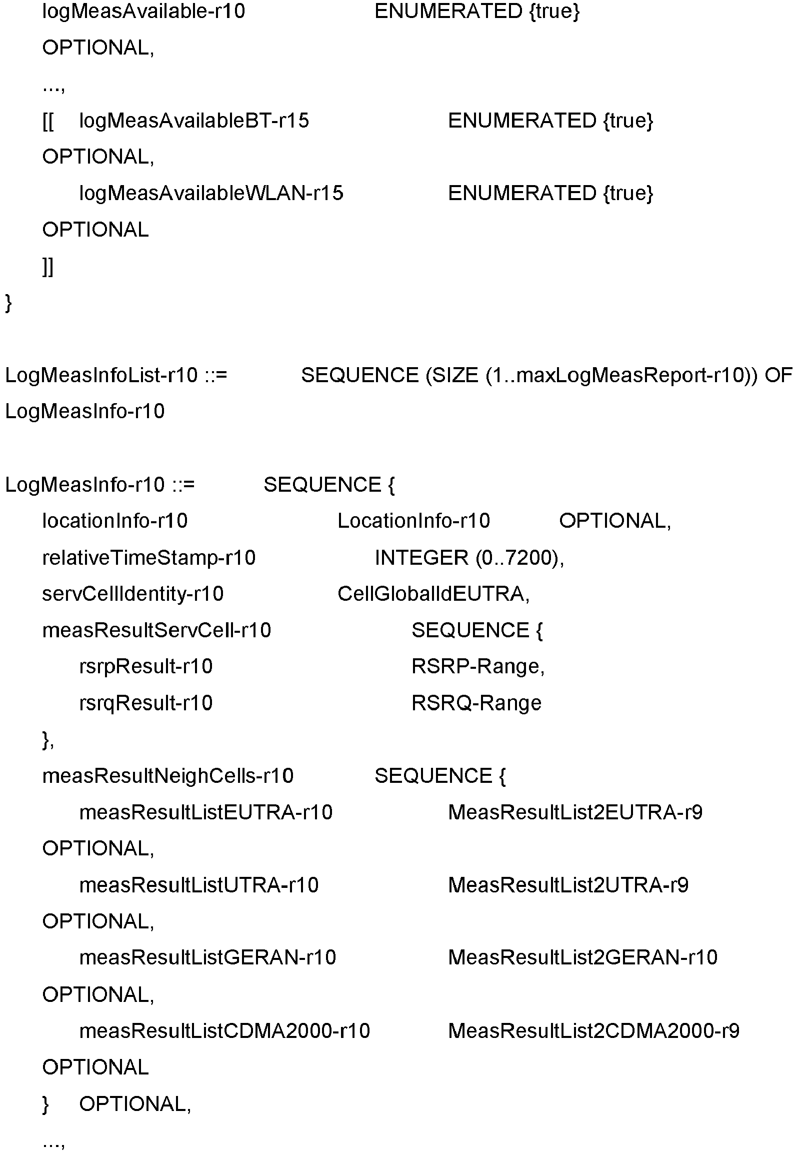

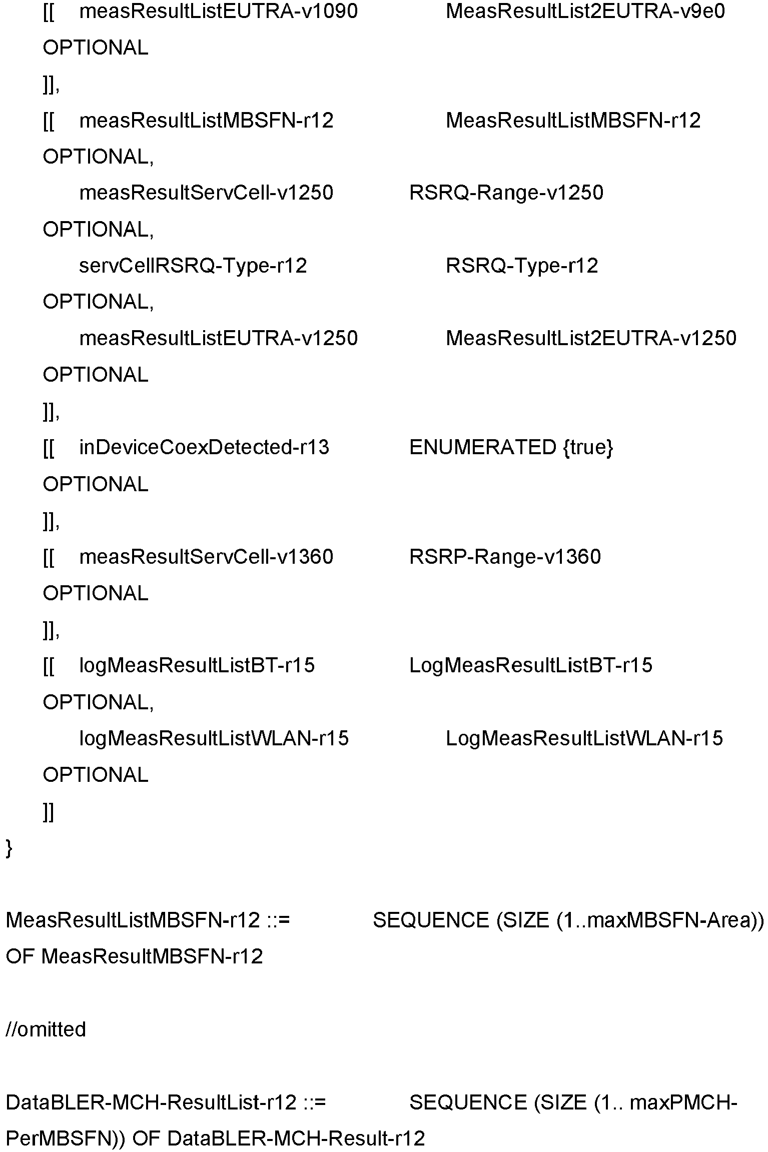

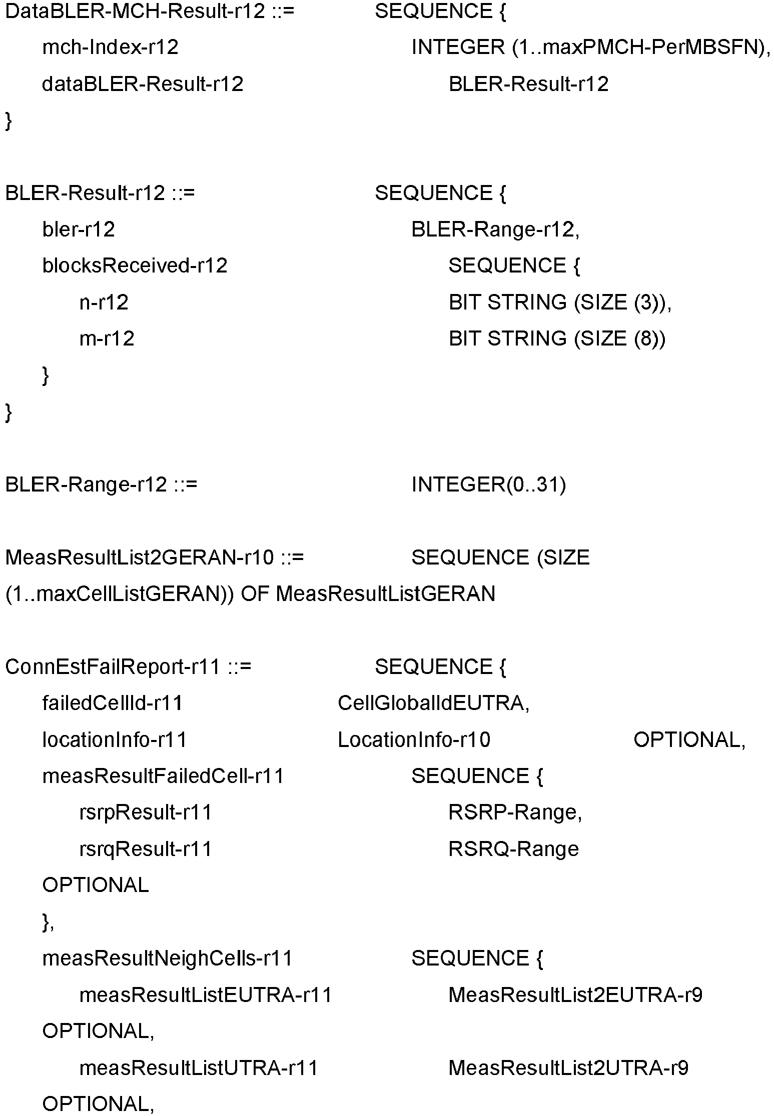

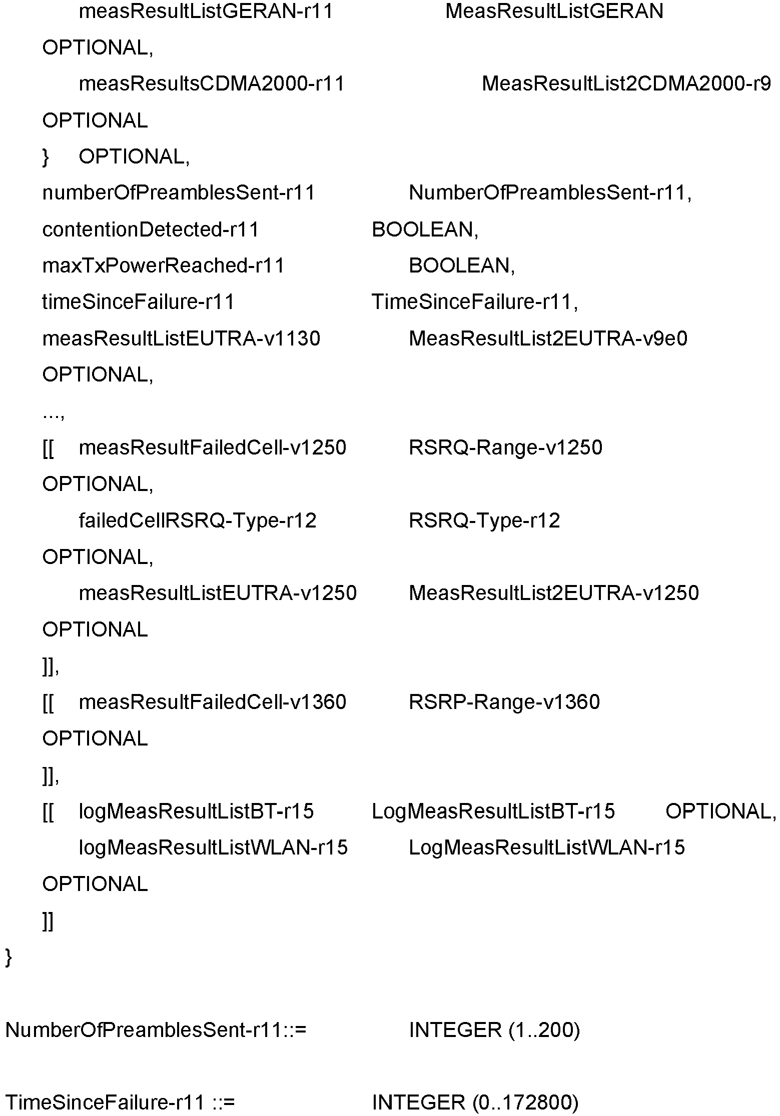

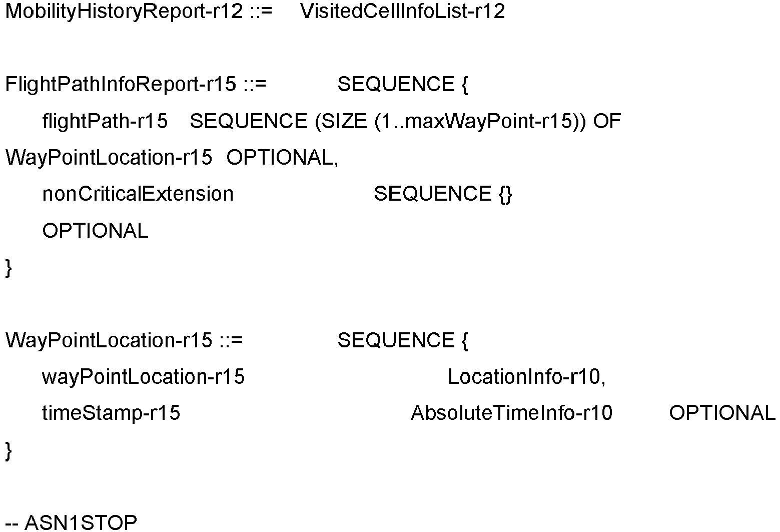

Based on the contents of the RLF report (e.g. the Globally unique identity of the last serving cell, where the failure was originated), the cell in which the UE reestablishes can forward the RLF report to the last serving cell. This forwarding of the RLF report is done to aid the original serving cell with tuning of the handover related parameters (e.g. measurement report triggering thresholds) as the original serving cell was the one who had configured the parameters associated to the UE that led to the RLF.

Too late handover. Here we try to make some sort of equivalence with an unsuccessfully received Release message, which may also be due to the same reasons, or it could be a way to move the UE to another frequency with better coverage (if that includes release with redirect).

In NR, when the network wants to transition a CONNECTED UE to INACTIVE or IDLE, the network transmits to the UE an *RRCRelease* message with a *suspendConfig* (in case of INACTIVE) or without a *suspendConfig* in case of IDLE. A problem (both in LTE and NR) is a potential state mismatch between the UE and the network when the network transmits the RRC Release message and the UE is not able to receive it e.g. due to poor radio conditions at the time, interference, etc. If that happens, the UE remains in CONNECTED while the network may believe that the UE is in INACTIVE (or IDLE).

For the network, that damages, for example, the way the network contacts the UE (i.e. how UE receives information from the network). If network assumes everything went well (i.e. that the UE is in IDLE or INACTIVE), upon incoming DL data the network would try to contact the UE via paging (RAN paging if INACTIVE or CN paging if IDLE). However, as the UE has not processed the message properly, the UE is still in CONNECTED and is not monitoring a paging channel.

For the UE, that damages, for example, the way the UE contacts the network (i.e. how network receives information from the UE). If that happens, the UE assumes it is still in CONNNECTED (while network monitors paging channel), hence the UE does not trigger an RRC resume procedure but rather tries to send scheduling requests via the Physical Uplink Shared Channel (PUSCH), Physical Uplink Control Channel (PUCCH), or Random Access Channel (RACH) when there is incoming UL data, after the UE has received the undetected RRC Release like message. Notice that this may also damage the network since the UE would be transmitting in UL resources that in principle are not allowed to be used anymore (and these resources may even be reused by the network to schedule other UEs, which may create UL interference).

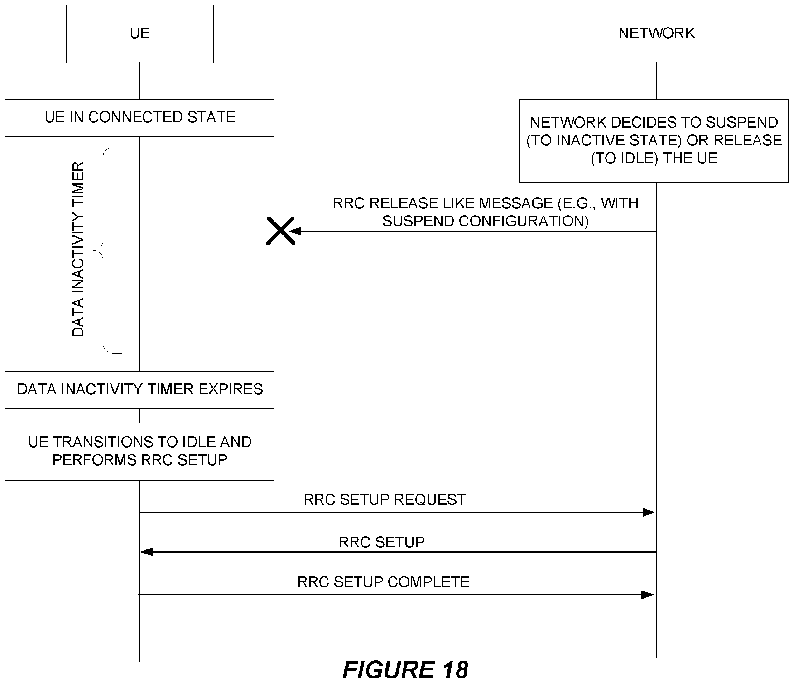

One approach to mitigating this in NR is by making the UE wait a fixed duration until it starts processing the *RRCRelease* message or until it has some evidence that the network has properly understood that the UE has received the message (e.g. by the UE waiting until lower layers indicate that the receipt of the RRCRelease message has been successfully acknowledged). This is shown in Figure 18.

The 3GPP RRC specs implement this as below:
5.3.8.3 Reception of the *RRCRelease* by the UE

The UE shall:
1> delay the following actions defined in this sub-clause 60 ms from the moment the RRCRelease message was received or optionally when lower layers indicate that the receipt of the RRCRelease message has been successfully acknowledged, whichever is earlier; [...]
   2> enter RRC_INACTIVE and perform cell selection as specified in TS 38.304 [20];
1> else
   2> perform the actions upon going to RRC_IDLE as specified in 5.3.11, with the release cause 'other'.

Notice that these steps are only executed if the UE really received the message. Then, to make sure the network is aware when a failure has occurred a data inactivity timer has been introduced on the MAC level. That is provided as part of the *MAC-CellGroupConfig* (IE included in *CellGroupConfig,* which may be provided to the UE in RRCResume, RRCSetup or RRCReconfiguration message), as shown below from RRC specifications:

### - MAC-CellGroupConfig

The IE *MAC-CellGroupConfig* is used to configure MAC parameters for a cell group, including DRX.

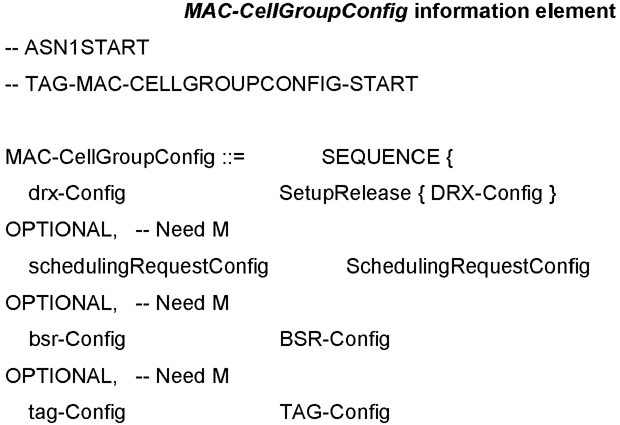

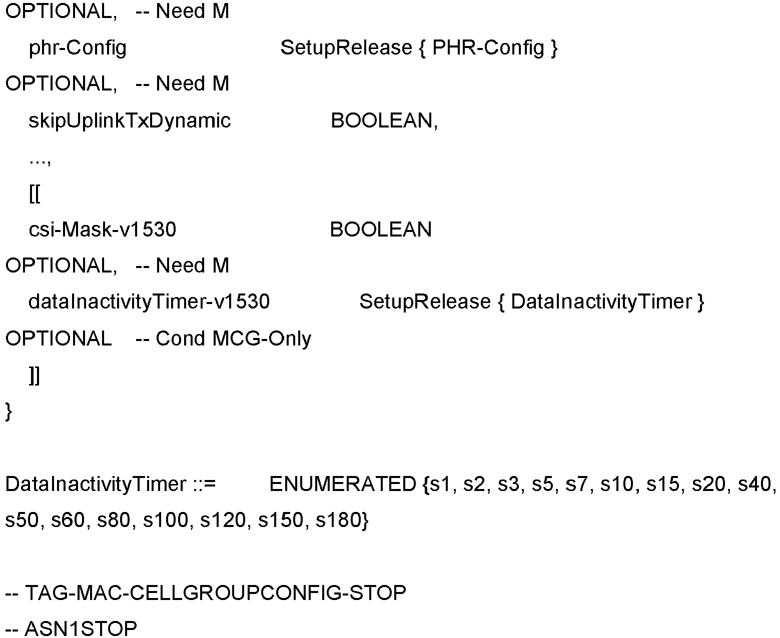

| ***MAC-CellGroupConfig* field descriptions** |
|---|
| ***datainactivityTimer-v1530*** |
| Releases the RRC connection upon data inactivity as specified in clause 5.3.8.5 and in TS 38.321 [3]. Value *s1* corresponds to 1 second, value s2 corresponds to 2 seconds, and so on. |

| **Conditional Presence** | **Explanation** |
|---|---|
| *MCG-Only* | This field is optionally present, Need M, for the MAC-CellGroupConfig of the MCG. It is absent otherwise. |

For the inactivity time, start and stop conditions are defined in the MAC specifications as follows:
5.19 Data inactivity monitoring

The UE may be configured by RRC with a Data inactivity monitoring functionality, when in RRC_CONNECTED. RRC controls Data inactivity operation by configuring the timer *data In activity Timer.*

When *data In activity Timer* is configured, the UE shall:
1> if any MAC entity receives a MAC SDU for DTCH logical channel, DCCH logical channel, or CCCH logical channel; or
1> if any MAC entity transmits a MAC SDU for DTCH logical channel, or DCCH logical channel:
   2> start or restart datalnactivityTimer.
1 > if the datalnactivityTimer expires:
   2> indicate the expiry of the dataInactivityTimer to upper layers.

As shown above, the expiry of this timer is an indication that the UE has not data anymore to transmit or receive. Then, in RRC, actions are defined upon receiving this expiry indication, as shown below:
5.3.8.5 UE actions upon the expiry of *DataInactivityTimer*

Upon receiving the expiry of *DataInactivityTimer* from lower layers while in RRC_CONNECTED, the UE shall:
1> perform the actions upon going to RRC_IDLE as specified in 5.3.11, with release cause 'RRC connection failure'.

Upon entering IDLE and indication of a release cause 'connection failure' the UE performs NAS recovery, which is basically like a Registration Area Update (like a Tracking Area Update) via an IDLE to CONNECTED transition i.e. establishment cause value equals to mo-signaling.

One problem addressed herein is that upon triggering NAS recovery and entering CONNECTED, the UE sends an RRC Setup Request like message and expects an RRC Setup like message (to finally send an RRC Setup Complete like message). In that procedure, the network is heretofore not made fully aware of what has really happened in terms of failure (and/or why it has happened). Hence, network may heretofore not take further actions to avoid or mitigate the problem that led the UE to not receive the RRC Release like message. Even though the network may figure out this was a NAS recovery, there are many other cases that may also lead to NAS recovery (while the UE is in CONNECTED state), such as in the following cases:
- Inability to comply with *RRCReconfiguration* received via NR, security is activated but SRB2 and at least one DRB have not been setup;
- Upon triggering re-establishment and selecting an inter-RAT cell while timer T331 is running;
- Integrity protection failure upon reception of an RRC Reestablishment message;
- Expiry of timer T311 (UE did not find suitable cell in re-establishment);
- T301 expiry or selected cell no longer suitable;
- Data inactivity timer expiry;
- RLF is detected (security is activated) but SRB2 and at least one DRB have not been setup.

This is shown below, as captured in the RRC specifications:
5.3.5.8.2 Inability to comply with *RRCReconfiguration*

The UE shall:
1 > if the UE is in EN-DC:
   2> if the UE is unable to comply with (part of) the configuration included in the RRCReconfiguration message received over SRB3;
      3> continue using the configuration used prior to the reception of RRCReconfiguration message;
      3> initiate the SCG failure information procedure as specified in subclause 5.7.3 to report SCG reconfiguration error, upon which the connection reconfiguration procedure ends;
   2> else, if the UE is unable to comply with (part of) the configuration included in the RRCReconfiguration message received over SRB1;
      3> continue using the configuration used prior to the reception of RRCReconfiguration message;
      3> initiate the connection re-establishment procedure as specified in TS 36.331 [10], clause 5.3.7, upon which the connection reconfiguration procedure ends.
1> else if RRCReconfiguration is received via NR:
   2> if the UE is unable to comply with (part of) the configuration included in the RRCReconfiguration message;
      3> continue using the configuration used prior to the reception of RRCReconfiguration message;
      3> if AS security has not been activated:
         4> perform the actions upon going to RRC_IDLE as specified in 5.3.11, with release cause 'other'
      3> else if AS security has been activated but SRB2 and at least one DRB have not been setup:
         4> perform the actions upon going to RRC_IDLE as specified in 5.3.11, with release cause 'RRC connection failure';
      3> else:
         4> initiate the connection re-establishment procedure as specified in 5.3.7, upon which the reconfiguration procedure ends; 5.3.7 RRC connection re-establishment

The network applies the procedure e.g as follows:
- When AS security has been activated and the network retrieves or verifies the UE context:
- to re-activate AS security without changing algorithms;
- to re-establish and resume the SRB1;
- When UE is re-establishing an RRC connection, and the network is not able to retrieve or verify the UE context:
- to discard the stored AS Context and release all RBs;
- to fallback to establish a new RRC connection.

### 5.3.7.2 Initiation

The UE initiates the procedure when one of the following conditions is met:
1> upon detecting radio link failure of the MCG, in accordance with 5.3.10; or
1> upon re-configuration with sync failure of the MCG, in accordance with sub-clause 5.3.5.8.3; or
1> upon mobility from NR failure, in accordance with sub-clause 5.4.3.5; or
1> upon integrity check failure indication from lower layers concerning SRB1 or SRB2, except if the integrity check failure is detected on the RRCReestablishment message; or
1>upon an RRC connection reconfiguration failure, in accordance with sub-clause 5.3.5.8.2.

Upon initiation of the procedure, the UE shall:
1> stop timer T310, if running;
1> stop timer T304, if running;
1> start timer T311;
1> suspend all RBs, except SRB0;
1> reset MAC;
1> release the MCG SCell(s), if configured;
1> release spCellConfig;
1> release delayBudgetReportingConfig, if configured, and stop timer T342, if running;
1> release overheatingAssistanceConfig, if configured, and stop timer T345, if running;
1> perform cell selection in accordance with the cell selection process as specified in TS 38.304 [20], clause 5.2.6.

### 5.3.7.3 Actions following cell selection while T311 is running

Upon selecting a suitable NR cell, the UE shall:
1> ensure having valid and up to date essential system information as specified in clause 5.2.2.2;
1> stop timer T311;
1> start timer T301;
1> if T390 is running:
   2> stop timer T390 for all access categories;
   2> perform the actions as specified in 5.3.14.4;
1> apply the default L1 parameter values as specified in corresponding physical layer specifications except for the parameters for which values are provided in SIB1;
1> apply the default MAC Cell Group configuration as specified in 9.2.2;
1> apply the CCCH configuration as specified in 9.1.1.2;
1> apply the timeAlignmentTimerCommon included in SIB1;
1> initiate transmission of the RRCReestablishmentRequest message in accordance with 5.3.7.4; NOTE: This procedure applies also if the UE returns to the source PCell. Upon selecting an inter-RAT cell, the UE shall:
1> perform the actions upon going to RRC_IDLE as specified in 5.3.11, with release cause 'RRC connection failure'.

### 5.3.7.5 Reception of the RRCReestablishment by the UE

The UE shall:
1> stop timer T301;
1> consider the current cell to be the PCell;
1> store the nextHopChainingCount value indicated in the RRCReestablishment message;
1> update the KgNB key based on the current KgNB key or the NH, using the stored nextHopChainingCount value, as specified in TS 33.501 [11];
1> derive the KRRCenc and KUPenc keys associated with the previously configured cipheringAlgorithm, as specified in TS 33.501 [11];
1> derive the KRRCint and KUPint keys associated with the previously configured integrityProtAlgorithm, as specified in TS 33.501 [11].
1> request lower layers to verify the integrity protection of the RRCReestablishment message, using the previously configured algorithm and the KRRCint key;
1> if the integrity protection check of the RRCReestablishment message fails:
   2> perform the actions upon going to RRC_IDLE as specified in 5.3.11, with release cause 'RRC connection failure', upon which the procedure ends;
1> configure lower layers to resume integrity protection for SRB1 using the previously configured algorithm and the KRRCint key immediately, i.e., integrity protection shall be applied to all subsequent messages received and sent by the UE, including the message used to indicate the successful completion of the procedure;
1> configure lower layers to resume ciphering for SRB1 using the previously configured algorithm and, the KRRCenc key immediately, i.e., ciphering shall be applied to all subsequent messages received and sent by the UE, including the message used to indicate the successful completion of the procedure;
1> release the measurement gap configuration indicated by the measGapConfig, if configured;
1> submit the RRCReestablishmentComplete message to lower layers for transmission;
1>the procedure ends.

### 5.3.7.6T311 expiry

Upon T311 expiry, the UE shall:
1> perform the actions upon going to RRC_IDLE as specified in 5.3.11, with release cause 'RRC connection failure'.

### 5.3.7.7 T301 expiry or selected cell no longer suitable

The UE shall:
1> if timer T301 expires; or
1> if the selected cell becomes no longer suitable according to the cell selection criteria as specified in TS 38.304 [20]:
   2> perform the actions upon going to RRC_IDLE as specified in 5.3.11, with release cause 'RRC connection failure'.

### 5.3.8.5 UE actions upon the expiry of DatalnactivityTimer

Upon receiving the expiry of DatalnactivityTimer from lower layers while in RRC_CONNECTED, the UE shall:
1> perform the actions upon going to RRC_IDLE as specified in 5.3.11, with release cause 'RRC connection failure'.

### 5.3.10.3 Detection of radio link failure

The UE shall:
1>upon T310 expiry in PCell; or
1> upon random access problem indication from MCG MAC while neither T300, T301, T304, T311 nor T319 are running; or
1> upon indication from MCG RLC that the maximum number of retransmissions has been reached:
   2> if the indication is from MCG RLC and CA duplication is configured and activated, and for the corresponding logical channel allowedServingCells only includes SCell(s):
      3> initiate the failure information procedure as specified in 5.7.5 to report RLC failure.
   2> else:
      3> consider radio link failure to be detected for the MCG i.e. RLF;
      3> if AS security has not been activated:
         4> perform the actions upon going to RRC_IDLE as specified in 5.3.11, with release cause 'other';-
      3> else if AS security has been activated but SRB2 and at least one DRB have not been setup:
         4> perform the actions upon going to RRC_IDLE as specified in 5.3.11, with release cause 'RRC connection failure';
      3> else:
         4> initiate the connection re-establishment procedure as specified in 5.3.7.

In the NAS specifications, the reception of a release cause `RRC connection failure' triggers NAS to request the AS to perform a NAS signaling procedure (which is a Registration Area Update). This will basically trigger an IDLE to CONNECTED procedure.

The text from NAS specifications is shown below (TS 24.501):
5.5.1.3.2 Mobility and periodic registration update initiation

The UE in state 5GMM-REGISTERED shall initiate the registration procedure for mobility and periodic registration update by sending a REGISTRATION REQUEST message to the AMF,
a) when the UE detects entering a tracking area that is not in the list of tracking areas that the UE previously registered in the AMF;
b) when the periodic registration updating timer T3512 expires;
c) when the UE receives a CONFIGRURATION UPDATE COMMAND message indicating "registration requested" in the Configuration update indication IE as specified in subclauses 5.4.4.3;
d) when the UE in state 5GMM-REGISTERED.ATTEMPTING-REGISTRATION-UPDATE either receives a paging or the UE receives a NOTIFICATION message with access type indicating 3GPP access over the non-3GPP access for PDU sessions associated with 3GPP access;
e) upon inter-system change from S1 mode to N1 mode;
f) when the UE receives an indication of "RRC Connection failure" from the lower layers and does not have signalling pending (i.e. when the lower layer requests NAS signalling connection recovery);

For case f), the UE shall include the Uplink data status IE in the REGISTRATION REQUEST message indicating the PDU session(s) for which user-plane resources were active prior to receiving "RRC Connection failure" indication from the lower layers, if any. If the UE is in non-allowed area or not in allowed area, the UE shall not include the Uplink data status IE in REGISTRATION REQUEST message, except that the PDU session(s) for which user-plane resources were active prior to receiving the fallback indication is emergency PDU session(s), or that the UE is configured for high priority access in selected PLMN, as specified in subclause 5.3.5.

### 8.2.6 Registration request

### 8.2.6.1 Message definition

The REGISTRATION REQUEST message is sent by the UE to the AMF. See table 8.2.6.1.1.
Message type:REGISTRATION REQUEST
Significance: dual
Direction: UE to network

**Table 8.2.6.1.1: REGISTRATION REQUEST message content**

| **IEI** | **Information Element** | **Type/Reference** | **Presence** | **Format** | **Length** |
|---|---|---|---|---|---|
| | Extended protocol discriminator | Extended Protocol discriminator 9.2 | M | V | 1 |
| | Security header type | Security header type 9.3 | M | V | 1/2 |
| | Spare half octet | Spare half octet 9.5 | M | V | 1/2 |
| | Registration request message identity | Message type 9.7 | M | V | 1 |
| | 5GS registration type | 5GS registration type 9.11.3.7 | M | V | 1/2 |
| | ngKSI | NAS key set identifier 9.11.3.32 | M | V | 1/2 |
| | 5GS mobile identity | 5GS mobile identity 9.11.3.4 | M | LV-E | 6-n |
| C- | Non-current native NAS key set identifier | NAS key set identifier 9.11.3.32 | O | TV | 1 |
| 10 | 5GMM capability | 5GMM capability 9.11.3.1 | O | TLV | 3-15 |
| 2E | UE security capability | UE security capability 9.11.3.54 | O | TLV | 4-10 |
| 2F | Requested NSSAI | NSSAI 9.11.3.37 | O | TLV | 4-74 |
| 52 | Last visited registered TAI | 5GS tracking area identity 9.11.3.8 | O | TV | 7 |
| 17 | S1 UE network capability | S1 UE network capability 9.11.3.48 | O | TLV | 4-15 |
| 40 | Uplink data status | Uplink data status 9.11.3.57 | O | TLV | 4-34 |
| 50 | PDU session status | PDU session status 9.11.3.44 | O | TLV | 4-34 |
| B- | MICO indication | MICO indication 9.11.3.31 | O | TV | 1 |
| 2B | UE status | UE status 9.11.3.56 | O | TLV | 3 |
| 77 | Additional GUTI | 5GS mobile identity 9.11.3.4 | O | TLV-E | 14 |
| 25 | Allowed PDU session status | Allowed PDU session status 9.11.3.13 | O | TLV | 4-34 |
| 18 | UE's usage setting | UE's usage setting 9.11.3.55 | O | TLV | 3 |
| 51 | Requested DRX parameters | 5GS DRX parameters 9.11.3.2A | O | TLV | 3 |
| 70 | EPS NAS message container | EPS NAS message container 9.11.3.24 | O | TLV-E | 4-n |
| 74 | LADN indication | LADN indication 9.11.3.29 | O | TLV-E | 3-811 |
| 8- | Payload container type | Payload container type 9.11.3.40 | O | TV | 1 |
| 7B | Payload container | Payload container 9.11.3.39 | O | TLV-E | 4-65538 |
| 9- | Network slicing indication | Network slicing indication 9.11.3.36 | O | TV | 1 |
| 53 | 5GS update type | 5GS update type 9.11.3.9A | O | TLV | 3 |
| 71 | NAS message container | NAS message container 9.11.3.33 | O | TLV-E | 4-n |

The establishment cause is something provided by upper layers, and in any of these cases, AS gets mo-signalling from NAS since in any of these cases a Registration Area Update is triggered.

Note that the UE heretofore reports in LTE failure logged information upon RLF or connection establishment resume. But in the case of RLF report, as described above, that leads to a re-establishment procedure, and not a NAS recovery.

Hence, upon performing NAS recovery while in RRC_CONNECTED, the network may heretofore not be able to distinguish these different cases:
- Inability to comply with *RRCReconfiguration* received via NR, security is activated but SRB2 and at least one DRB have not been setup;
- Upon triggering re-establishment and selecting an inter-RAT cell while timer T331 is running;
- Integrity protection failure upon reception of an RRC Reestablishment message;
- Expiry of timer T311 (UE did not find suitable cell in re-establishment);
- T301 expiry or selected cell no longer suitable;
- Data inactivity timer expiry;
- RLF is detected, security is activated but SRB2 and at least one DRB have not been setup.

Because this is unknown, the network heretofore cannot identify why the RRCRelease message was not properly processed by the UE e.g. due to coverage hole or misconfiguration of measurement report triggering parameters e.g. thresholds). The network is correspondingly heretofore incapable of performing appropriate counter-measure.

Certain aspects of the present disclosure and their embodiments may provide solutions to these or other challenges. Consider for instance some embodiments that exemplify aspects described above in Figures 2-4.

Some embodiments for example comprise a method for logging and reporting information related to a failure detected by the UE and leading the UE to trigger NAS recovery, the method comprising:
- Detecting a failure leading to NAS recovery;
- Logging relevant information related to the failure that led the UE to trigger NAS recovery; and
- Reporting the relevant information related to the failure that led the UE to trigger NAS recovery, upon entering CONNECTED after NAS recovery. This may for instance exemplify one possible implementation of Step 210 in Figure 2.

Some embodiments alternatively or additionally comprise a method at the network side to obtain reported information related to a failure detected by a UE that led the UE to trigger NAS recovery, the method comprising:
- Receiving relevant information related to a failure that led the UE to trigger NAS recovery, upon entering CONNECTED after NAS recovery. This may for instance exemplify one possible implementation of Step 300 in Figure 3.
- Performing specific counter-actions (e.g. parameter re-tuning, coverage optimization, mobility robustness optimizations, etc.) depending on the receiving information. This may for instance exemplify one possible implementation of Step 320 in Figure 3.
- Exchanging information between nodes e.g. forwarding the failure report to a node where the NAS recovery was originally triggered. This may for instance exemplify one possible implementation of Step 340 in Figure 3.

Embodiments alternatively or additionally include a method that allows the network to prevent the UE from entering Idle mode and therefore that prevent a NAS recovery procedure. The method comprises:
- Allowing the network to send an RRC Release like signaling message to the UE. This may for instance exemplify one possible implementation of Step 400 in Figure 4.
- Allowing the network to wait a preset amount of time after delivery of the message to the UE, in order to monitor UE's activities and deduce whether the UE has correctly received the message.
- If the UE has received the message and no activities are recorded for this UE, then move at network level the state of the UE to INACTIVE.
- IF UE's activities are recorded, such as measurement reporting at physical layer, procedures at RRC level, the network will deduce that the UE may have not received the RRC Release message and will not move the UE state to INACTIVE, leaving the UE in CONNECTED state. This may for instance exemplify one possible implementation of Step 410 in Figure 4.

Certain embodiments may provide one or more of the following technical advantage(s). One advantage is to enable the UE to inform the network of possible problems when NAS recovery is triggered, which enables the network to perform counter-actions to improve the UE service performance (e.g. by optimizing the coverage, etc.). Some embodiments alternatively or additionally allow the network to

mitigate the effects of missed reception of an RRC Release like message and therefore to cope with the potential mismatch between the UE RRC state and the RRC state kept at network side.

More particularly, some embodiments are described using the terminology in NR RRC specifications as an example, where the method is implemented in NR. However, the embodiments are applicable to any RAT where a power saving state is defined e.g. EUTRA.

Some embodiments use Inactive state as an example, but the embodiments are applicable to any power saving state for which context fetching and inter-node connectivity is needed e.g. Idle with stored context (like in LTE release 13 solution), Inactive state for EUTRA connected to 5GC, etc.

The term NAS recovery is used herein to refer to a procedure involving an interaction between Access Stratum (AS) and Non-Access Stratum (NAS) layers at a UE where the AS layer at the UE detects a failure (e.g. on RRC level, or MAC level, like the expiry of data inactivity timer), then notifies NAS layer of that failure (sometimes referred as "notify upper layers"), entering Idle state (and performing actions upon, like clean ups, deletion of stored information, stopping timers, etc.), and the NAS layer triggering a procedure (e.g., a registration area update / tracking area update like procedure) that leads to NAS requesting AS to establish/setup an RRC connection.

### Detailed description of the UE aspects of the method

Some embodiments comprise a method for logging and reporting information related to a failure detected by the UE and leading the UE to trigger NAS recovery. The method may comprise detecting a failure leading to NAS recovery. For example, at the least the following cases serve as examples of failure cases triggering the UE to perform NAS recovery: (i) Inability to comply with *RRCReconfiguration* received via NR, security is activated but SRB2 and at least one DRB have not been setup; (ii) Upon triggering re-establishment and selecting an inter-RAT cell while timer T331 is running; (iii) Integrity protection failure upon reception of an RRC Reestablishment message; (iv) Expiry of timer T311 (UE did not find suitable cell in re-establishment); (v) T301 expiry or selected cell no longer suitable; (vi) Data inactivity timer expiry; (vii) RLF is detected, security is activated but SRB2 and at least one DRB have not been setup; and (viii) Inter-RAT cell reselection. Nonetheless, some embodiments comprise any cases introduced in the future where the UE triggers NAS recovery e.g. due to a new failure case later introduced.

The method may also comprise logging relevant information related to the failure that led the UE to trigger NAS recovery. The relevant information may depend on the failure that has triggered NAS recovery, sort of as cause-value and some failure-specific information, as shown below for the different cases.

One case is for inability to comply with *RRCReconfiguration* received via NR, security is activated, but SRB2 and at least one DRB have not been setup. In this case, the UE may log the message that the UE was not able to comply or parts of it (e.g. the parts that the UE was not able to comply), or an indication of any parts of the message e.g. IE, fields, etc. In this case, UE may log information equivalent to the one in an RLF report e.g. positioning, location, measurements, etc. Details of that are given later, in an example.

Another case is upon triggering re-establishment and selecting an inter-RAT cell while timer T331 is running. In this case the UE could indicate that cell reselection has occurred while timer T331 was running, including least equivalent information as included in an RLF report may also be logged e.g. positioning, location, measurements, etc. In this inter-RAT case, the UE may log measurements associated to the source and target RATs, the latency it took until the UE managed to connect to the new RAT, etc. In this case, UE may log information equivalent to the one in an RLF report e.g. positioning, location, measurements, etc. Details of that are given later, in an example.

A further case is integrity protection failure upon reception of an RRC Reestablishment message. In this case, the UE could log the message that the UE received when the failure was detected e.g. the PDCP PDU for which it has received a failure indication from lower layers. In this case, UE may log information equivalent to the one in an RLF report e.g. positioning, location, measurements, etc. Details of that are given later, in an example.

Yet another case is expiry of timer T311 (UE did not find suitable cell in re-establishment). In this case, UE may log information equivalent to the one in an RLF report e.g. positioning, location, measurements, etc. Details of that are given later, in an example. The UE may also include measurement information before and after timer T311 expired, frequencies that the UE has tried to search, etc. Notice that in this case, as the UE is performing a counter-action to RLF, the UE may have logged an RLF report. In that case, the additional information to be logged is more related to the follow up actions that have led to NAS recovery such as the cell selected after RLF is triggered, measurements while timer 301 were running, etc.

A further case is 301 expiry or selected cell no longer suitable. In this case, the UE could log the cell information where the re-establishment failure occurred, and measurements associated to that cell and other cells in the same frequency. In this case, UE may log information equivalent to the one in an RLF report e.g. positioning, location, measurements, etc. Details of that are given later, in an example. Notice that in this case, as the UE is performing a counter-action to RLF, the UE may have logged an RLF report. In that case, the additional information to be logged is more related to the follow up actions that have led to NAS recovery such as the cell selected after RLF is triggered, measurements while timer T301 were running, etc.

Still another case is data inactivity timer expiry. In this case, the UE could log the cell information where the failure occurred. In this case, the UE could log traffic information where the failure occurred. In this case, the UE could log the last configuration the UE has received (e.g. the last content the UE has configured, equivalent of a UE AS Inactive context, or at least the equivalent configuration of an RRCReconfiguration or RRCResume message). That could be later reported to indicate what was the last message the UE has received. In this case, UE may log information equivalent to the one in an RLF report e.g. positioning, location, measurements, etc. Details of that are given later, in an example. In this case, UE may log a time related information for when the failure has occurred (e.g. like a timer stamp). That may be used to indicate to the network whether any parameters changes were ongoing at the time the failure has occurred. Also, this time information may be used to indicate to the network the root cause of failed paging.

In other words, when network has sent a missed Release/suspend and later tries to page the UE, the UE will not respond the paging but will come back after the inactivity timer expires. Hence, the network could also log time/UE information regarding the missed paging so that it may understand why there are missed pages in a certain area and/or for certain UEs. More detailed information about this particular case is discussed later.

In any event, the method may further comprise reporting the relevant information related to the failure that led the UE to trigger NAS recovery, upon entering CONNECTED after NAS recovery.

One specific example is the one where NAS recovery is triggered due to the expiry of inactivity timer. That occurs mainly when the network decides to suspend/release a UE by transmitting an RRC release like message (with or without a suspend configuration) but the UE is not able to receive (e.g. due to poor radio conditions). In that case, as network is not fully aware, the UE has the inactivity timer mechanism so that it tries to contact the network (via NAS recovery) when that expires. Hence, logging this information may be useful for the network to indicate that a DL message was not delivered properly to the UE e.g. due to coverage reasons.

In more detail, one could say that some embodiments comprise a method for logging and reporting information related to a failure to receive an RRC Release like message leading the UE to perform autonomous actions (e.g. trigger NAS recovery), the method comprising: (i) Detecting a failure to receive an RRC Release like message, e.g., upon the expiry of a data inactivity timer; (ii) Logging relevant information related to that failure including, e.g., information related to the cell/frequency where the UE was connected to when the failure is detected, Information related to the target cell/frequency where the UE connects after NAS recovery, and/or a time related to when the failure was detected (i.e. when the data inactivity timer has expired); and (iii) Reporting the relevant information related to the failure to receive an RRC release like message that led the UE to trigger NAS recovery, upon entering CONNECTED after NAS recovery.

Other embodiments comprise a method at the network side to obtain reported information related to the failure detected by a UE to receive an RRC Release like message that led the UE to trigger NAS recovery, the method comprising: (i) Receiving relevant information related to a failure to receive an RRC Release like message that led the UE to trigger NAS recovery, upon entering CONNECTED after NAS recovery; (ii) Performing specific counter-actions (e.g. parameter re-tuning, coverage optimization, mobility robustness optimizations, etc.) depending on the receiving information; and (iii) Exchanging information between nodes e.g. forwarding the failure report to a node where the NAS recovery was originally triggered.

According to some embodiments, when the network sends an RRC Release like message (with suspend configuration), the network may assume that the UE has been successfully suspended to Inactive state. Hence, the network will store the UE AS Inactive context. However, the UE has not received the message and behaves as it would still be in connected state i.e. it keeps monitoring control/data channels (CORESETs, PDCCH, etc.), it keeps performing measurements, reporting, at least until the inactivity timer expires. When the UE comes back with NAS recovery, the network then defines a mechanism to clean up the UE AS Inactive context and perform root cause analyses. For example, when the UE does NAS recovery, a registered UE needs to send an identifier as part of the procedure and, in that case, the RAN should be able to identify the UE.

In other embodiments, when the network sends an RRC Release like message (without suspend configuration), the network may assume that the UE has been successfully released to Idle state. Hence, the network will delete the UE AS Inactive context. However, the UE has not received the message and behaves as it would still be in connected state i.e. it keeps monitoring control/data channels (CORESETs, PDCCH, etc.), it keeps performing measurements, reporting, at least until the inactivity timer expires. When the UE comes back with NAS recovery, the network would in principle not need to define a mechanism to clean up the UE AS Inactive context, but still needs to perform root cause analyses. For example, when the UE does NAS recovery a registered UE needs to send an identifier as part of the procedure and, in that case, the RAN should be able to identify the UE.

As in these two cases the UE continues in Connected state when the UE fails to receive the suspend/release message and the network behaves as the UE would be in Idle/lnactive, while the inactive timer has not expired (since values could be quite large) either the UE or the network may try to contact the UE. If the UE tries to contact the network (e.g. by sending scheduling requests) this would fail. Information regarding failed scheduling requests could also be logged as part of the failure report (that later would trigger NAS recovery). Other actions the UE may perform that fails while in Connected may also be logged e.g. CSI-RS monitoring (since network thinks a given UE is not anymore in Connected state). The UE may also log traffic related information e.g. in the UL, to possibly indicate amount of UL data not successfully delivered or time related information, like a time stamp, of when a given scheduling request has failed. As the UE remains in Connected state, and as inactive timer may be long, the UE may trigger an RLF before the inactivity timer expires. That would lead the UE to log an RLF report and, by logging the time stamp information and last serving cell the UE may indicate to the network in the RLF report what has happened e.g. a failed received RRC Release.

At the network side, one issue at a source node where the UE was connected to and that tried to suspend/suspend the UE is that the source node may think the UE is in Idle/lnactive. The network may try to contact the UE via paging, which will fail as the UE is not monitoring paging channels (as it behaves as in Connected state). A counter-action on the network side according to some embodiments is to keep the UE context stored at least for some time after it releases / suspends the UE so that, upon detecting a failed paging after some time it has sent the RRC Release like message (e.g. X seconds), it can try again to contact the UE as if the UE would have been in connected state, for example, by trying to send again an RRC Release like message to that UE.

The report proposed in some embodiments (e.g. in the case that is logged upon the expiry of data inactivity timer) enhances the possibility to reduce the probability of failing the transmission of an RRC Release like message, at least for future UEs. Notice that the message may be quite large, considering the amount of configurations constantly being included, such as early measurements configurations, dedicated cell reselection priorities, the suspend configuration for inactive state, etc. That may be problematic if transmitted under poor radio conditions, e.g., if the network is using it as mobility mechanism (including a redirect information so the UE goes to another frequency/cell) i.e. that may be possibly transmitted under poor radio conditions and, for that reason, fail. Then, reporting of logged information may allow the network to discover these failures and possibly counter act them e.g. to send Release with Redirect earlier next time in these cells and/or trigger earlier measurement reports, or to choose a better radio condition for the delivery of an RRC Release containing instruction to send the UE to inactive state.

Consider now possible changes to the RRC specifications, considering an implementation where the NAS recovery information is logged in a NAS Recovery report upon the expiry of the data inactivity timer (e.g. like the *DatalnactivityTimer).* Data inactivity timer expiry

### 5.3.8.5 UE actions upon the expiry of Data In activity Timer

Upon receiving the expiry of *Data In activity Timer from* lower layers while in RRC_CONNECTED, the UE shall:
1> store the following failure information in the VarNASRecovery-Report by setting its fields as follows:
   2> clear the information included in VarNASRecovery-Report, if any;
   2> set the plmn-ldentityList to include the list of PLMNS stored by the UE;
   2> set the measResultLastServCell to include measurement quantities per beam (at least RSRP, RSRQ and, possibly SINR) if available, of the PCell based on measurements collected up to the moment the UE detected the expiry of DatalnactivityTimer;
      3> Include SSB measurement information (e.g. quantities or only indexes);
      3> Include CSI-RS measurement information (e.g. quantities or only indexes);
   2> set the measResultNeighCells to include the best measured cells, other than the PCell, ordered such that the best cell is listed first, and based on measurements collected up to the moment the UE detected the expiry of DatalnactivityTimer, and set its fields as follows;
      3> if the UE was configured to perform measurements for one or more NR frequencies, include the measResultListNR;
         4> Include SSB measurement information (e.g. quantities or only indexes);
         4> Include CSI-RS measurement information (e.g. quantities or only indexes);
      3> if the UE was configured to perform measurements for one or more EUTRA frequencies, include the measResultListEUTRA;
      3> if the UE was configured to perform measurements for one or more UTRA frequencies, include the measResultListUTRA;
      3> if the UE was configured to perform measurements for one or more GERAN frequencies, include the measResultListGERAN;
      3> if the UE was configured to perform measurement reporting for one or more neighbouring CDMA2000 frequencies, include the measResultsCDMA2000;
      3> for each neighbour cell included, include the optional fields that are available;
         NOTE: The measured quantities are filtered by the L3 filter as configured in the mobility measurement configuration. The measurements are based on the time domain measurement resource restriction, if configured. Blacklisted cells are not required to be reported.
   2> if detailed location information is available, set the content of the location Info as follows:
      3> include the locationCoordinates;
      3> include the horizontalVelocity, if available;
   2> set the failedPCellld to the global cell identity, if available, and otherwise to the physical cell identity and carrier frequency of the PCell where the UE was connected to when it has triggered NAS recovery (i.e. when the data inactive timer has expired);
   2> set the connectionFailureType to nas-recovery;
   2> set the connectionFailureType-cause to nas-recovery-Data-lnactiveTimer-Expiry;
   2> set c-RNTI to the C-RNTI used in the PCell;
   2> log any further relevant information regarding the UE state at the PCell such as state of the RLF variables such as at least the number out of sync events, whether RLF related timers were running and/or have started (e.g. T311, T310), whether that occurred in the middle of other recovery procedures such as re-establishment or beam recovery, etc.
   2> log any further relevant information regarding the UE state at the PCell such as the latest RRC message that the UE has received and processed;
1> perform the actions upon going to RRC_IDLE as specified in 5.3.11, with release cause 'RRC connection failure'.

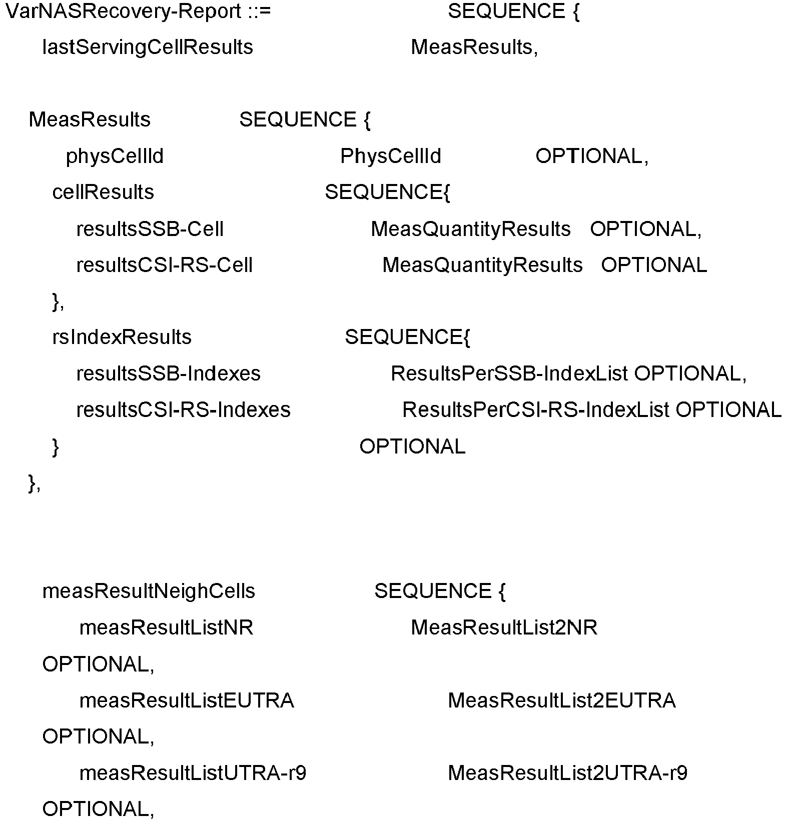

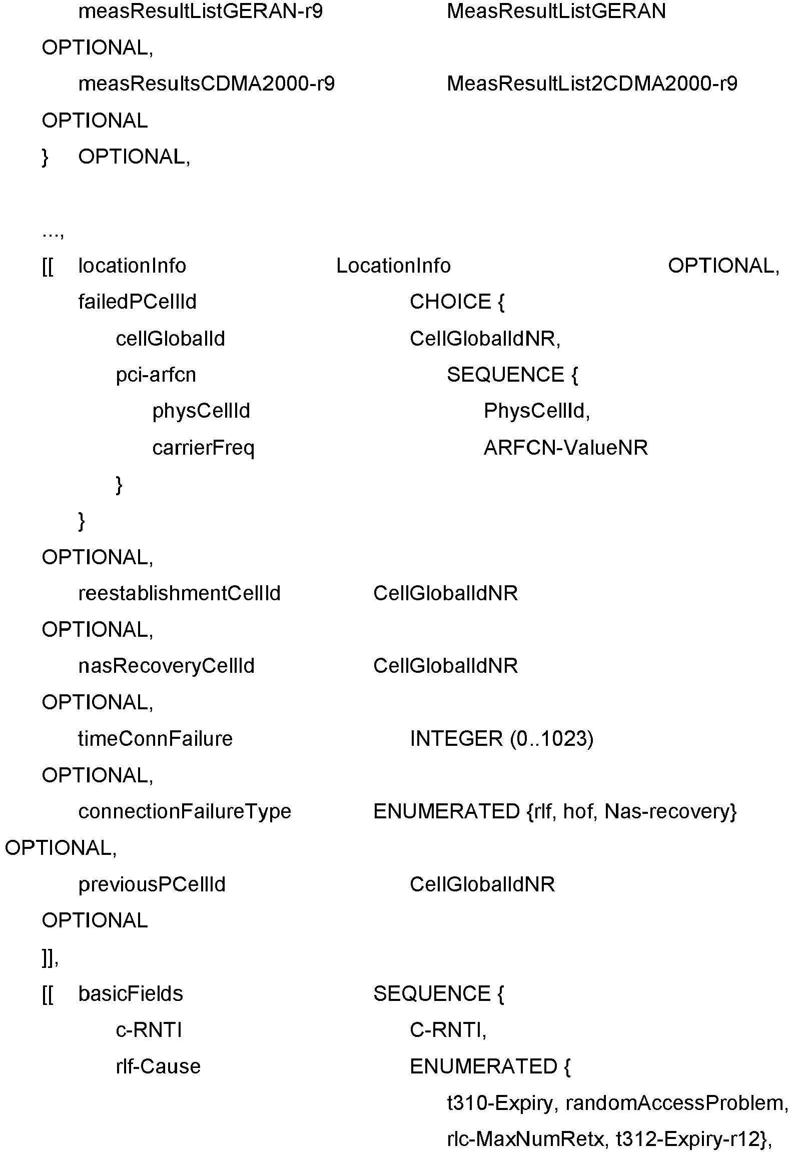

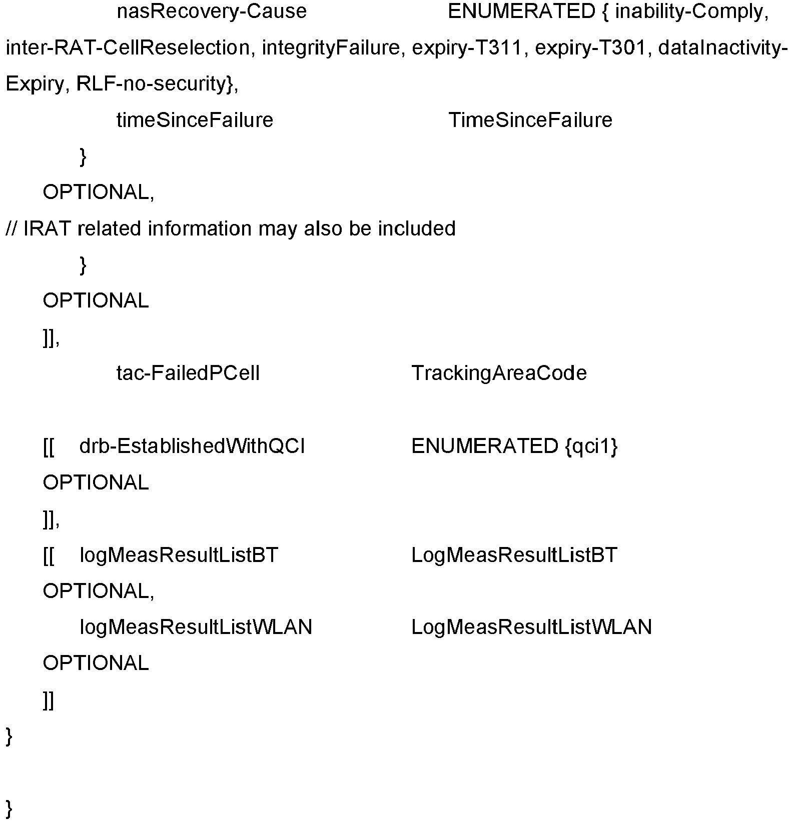

| ***UEInformationResponse* field descriptions** |
|---|
| ***absoluteTimeStamp*** |
| Indicates the absolute time when the logged measurement configuration logging is provided, as indicated by E-UTRAN within *absoluteTimeInfo.* |

| ***anyCellSelectionDetected*** |
|---|
| This field is used to indicate the detection of *any cell selection* state, as defined in TS 36.304 [4]. The UE sets this field when performing the logging of measurement results in RRC_IDLE and there is no suitable cell or no acceptable cell. |

| ***bler*** |
|---|
| Indicates the measured BLER value. The coding of BLER value is defined in TS 36.133 [16]. |

| ***blocksReceived*** |
|---|
| Indicates total number of MCH blocks, which were received by the UE and used for the corresponding BLER calculation, within the measurement period as defined in TS 36.133 [16]. |

| ***carrierFreq*** |
|---|
| In case the UE includes *carrierFreq-v9e0* and/ or *carrierFreq-v1090,* the UE shall set the corresponding entry of *carrierFreq-r9* and/ or *carrierFreq-r10* respectively to *maxEARFCN.* For E-UTRA and UTRA frequencies, the UE sets the ARFCN according to the band used when obtaining the concerned measurement results. |

| ***connectionFailureType*** |
|---|
| This field is used to indicate whether the connection failure is due to radio link failure, handover failure or NAS recovery. |

| ***contentionDetected*** |
|---|
| This field is used to indicate that contention was detected for at least one of the transmitted preambles, see TS 36.321 [6]. |

| ***c-RNTI*** |
|---|
| This field indicates the C-RNTI used in the PCell upon detecting radio link failure, the C-RNTI used in the source PCell upon handover failure or the C-RNTI used in the source PCell upon NAS recovery. |

| ***dataBLER-MCH-ResultList*** |
|---|
| Includes a BLER result per MCH on subframes using *dataMCS,* with the applicable MCH(s) listed in the same order as in *pmch-InfoList* within *MBSFNArea Configuration.* |

| ***UEInformationResponse* field descriptions** |
|---|
| ***drb-EstablishedWithQCI*** |
| This field is used to indicate the radio link failure or NAS recovery occurred while a bearer with QCI value equal to 1 was configured, see TS 24.301 [35]. |

| ***failedCellId*** |
|---|
| This field is used to indicate the cell in which connection establishment failed. |

| ***failedPCellId*** |
|---|
| This field is used to indicate the PCell in which RLF is detected, the target PCell of the failed handover or the source PCell where NAS recovery occurs. The UE sets the EARFCN according to the band used for transmission/ reception when the failure occurred. |

| ***inDeviceCoexDetected*** |
|---|
| Indicates that measurement logging is suspended due to IDC problem detection. |

| ***logMeasResultListBT*** |
|---|
| This field refers to the Bluetooth measurement results. |

| ***logMeasResultListWLAN*** |
|---|
| This field refers to the WLAN measurement results. |

| ***maxTxPowerReached*** |
|---|
| This field is used to indicate whether or not the maximum power level was used for the last transmitted preamble, see TS 36.321 [6]. |

| ***mch-Index*** |
|---|
| Indicates the MCH by referring to the entry as listed in *pmch-InfoList* within *MBSFNArea Configuration.* |

| ***measResultFailedCell*** |
|---|
| This field refers to the last measurement results taken in the cell, where connection establishment failure happened. For UE supporting CE Mode B, when CE mode B is not restricted by upper layers, *measResultFailedCell-v1360* is reported if the measured RSRP is less than -140 dBm. |

| ***UEInformationResponse* field descriptions** |
|---|
| ***measResultLastServCell*** |
| This field refers to the last measurement results taken in the PCell, where radio link failure or handover failure happened. For BL UEs or UEs in CE, when operating in CE Mode B, *measResultLastServCell-v1360* is reported if the measured RSRP is less than -140 dBm. |

| ***measResultListEUTRA*** |
|---|
| If *measResultListEUTRA-v9e0*, *measResultListEUTRA-v1090* or *measResultListEUTRA-v1130* is included, the UE shall include the same number of entries, and listed in the same order, as in *measResultListEUTRA-r9, measResultListEUTRA-r10* and/ or *measResultListEUTRA-r11* respectively. |

| ***measResultListEUTRA-v1250*** |
|---|
| If included in *RLF-Report-r9* the UE shall include the same number of entries, and listed in the same order, as in *measResultListEUTRA-r9*; |
| If included in *LogMeasInfo-r10* the UE shall include the same number of entries, and listed in the same order, as in *measResultListEUTRA-r10;* |
| If included in *ConnEstFailReport-r11* the UE shall include the same number of entries, and listed in the same order, as in *measResultListEUTRA-r11;* |

| ***measResu*/*tListIdle*** |
|---|
| This field indicates the measurement results done during IDLE mode at network request. |

| ***measResultServCell*** |
|---|
| This field refers to the log measurement results taken in the Serving cell. For UE supporting CE Mode B, when CE mode B is not restricted by upper layers, *measResultServCell-v1360* is reported if the measured RSRP is less than -140 dBm. |

| ***mobilityHistoryReport*** |
|---|
| This field is used to indicate the time of stay in 16 most recently visited E-UTRA cells or of stay out of E-UTRA. |

| ***UEInformationResponse* field descriptions** |
|---|
| ***numberOfPreamblesSent*** |
| This field is used to indicate the number of RACH preambles that were transmitted. Corresponds to parameter PREAMBLE_TRANSMISSION_COUNTER in TS 36.321 [6]. |

| ***previousPCellId*** |
|---|
| This field is used to indicate the source PCell of the last handover (source PCell when the last *RRCReconfiguration* message including *reconfiguration With Sync* was received). |

| ***previous UTRA-CellId*** |
|---|
| This field is used to indicate the source UTRA cell of the last successful handover to E-UTRAN, when RLF occurred at the target PCell. The UE sets the ARFCN according to the band used for transmission/ reception on the concerned cell. |

| ***reestablishmentCellId*** |
|---|
| This field is used to indicate the cell in which the re-establishment attempt was made after connection failure. |

| ***nasRecoveryCellId*** |
|---|
| This field is used to indicate the cell in which the NAS recovery attempt was made. |

| ***relativeTimeStamp*** |
|---|
| Indicates the time of logging measurement results, measured relative to the *absoluteTimeStamp.* Value in seconds. |

| ***rlf-Cause*** |
|---|
| This field is used to indicate the cause of the last radio link failure that was detected. In case of handover failure information reporting (i.e., the *connectionFailureType* is set to *'hof*), the UE is allowed to set this field to any value. |

| ***selectedUTRA-CellId*** |
|---|
| This field is used to indicate the UTRA cell that the UE selects after RLF is detected, while T311 is running. The UE sets the ARFCN according to the band selected for transmission/ reception on the concerned cell. |

| ***UEInformationResponse* field descriptions** |
|---|
| ***signallingBLER-Result*** |
| Includes a BLER result of MBSFN subframes using *signallingMCS.* |

| ***tac-FailedPCell*** |
|---|
| This field is used to indicate the Tracking Area Code of the PCell in which RLF is detected or the Tracking Area Code of the PCell in which NAS recovery occurs. |

| ***tce-Id*** |
|---|
| Parameter Trace Collection Entity Id: See TS 32.422 [58]. |

| ***timeConnFailure*** |
|---|
| This field is used to indicate the time elapsed since the last HO initialization until connection failure. Actual value = field value * 100ms. The maximum value 1023 means 102.3s or longer. This is also relevant in case the connection failure is triggered by expiry of data inactivity timer. |

| ***timeSinceFailure*** |
|---|
| This field is used to indicate the time that elapsed since the connection (establishment) failure or the timer elapsed since NAS recovery. Value in seconds. The maximum value 172800 means 172800s or longer. |

| ***timeStamp*** |
|---|
| Includes time stamps for the waypoints that describe planned locations for the UE. |

| ***traceRecordingSessionRef*** |
|---|
| Parameter Trace Recording Session Reference: See TS 32.422 [58]. |

| ***wayPointLocation*** |
|---|
| Includes location coordinates for a UE for Aerial UE operation. The waypoints describe planned locations for the UE. |

After re-connecting via Idle state (i.e. sending an *RRCRequest* like message as in NR RRC) and reporting this information (e.g. in an *UEInformationResponse*), the network would have the possibility to take some counter-action e.g. tune parameters and/or optimize the coverage (by adjusting antenna parameters). For example, network may discover that many UEs from the same cell, in a particular region of the network are suffering from that e.g. discovering a coverage hole. That may also be later correlated with RLF reports in the same area / cell and/or accessibility reports so that network may improve the coverage in a particular area.

In another embodiment, the UE reports logged information about the NAS recovery event or in general it reports information such as measurements and occurred events that precede and/or follow the NAS recovery. The NAS Recovery is one possible trigger for the availability of logged information reports from the UE. Namely, one event the embodiments allow to detect is one where the RRC Reconfiguration like message was not received by the UE. Such message contains information that allows the UE to move to a different RRC state and if such message is not received the state mismatch between network and UE will lead to a number of failure events, which can result in also NAS recovery, but that could for example result in RRC re-establishment if, for example, the UE detected an RLF due to lack of detection of some essential signals from the network (such as CSI-RS).Hence, the logged information may also be made available if it can be deduced that a state mismatch (due to lack of RRC Release reception) has occurred.

Upon retrieval of the logged information report from the UE, the network may act in two possible ways. In one way, the node retrieving the information may use the information to adjust its own configuration and to, e.g. optimise coverage in the area where the missed reception of the RRC Release like message occurred, or to decide to send an RRC Release like message when the UE radio conditions are better than those recorded at the time when the transmission failed.

In another way, the node retrieving the information may perform the actions above and additionally it might forward the report to neighbouring RAN nodes. This could help if, for example, the logged information revealed that failure of the RRC Release like message was due to strong interference from neighbouring nodes, in which case neighbouring nodes could adjust their coverage to reduce cross cell interference; or if the UE is served in multi connectivity from different RAN nodes, where the RRC Release like message is sent by one or more RAN nodes and where the logged information report from the UE is made available only to one node of such multi connectivity configuration, in which case the node receiving the report would forward it to other nodes involved in the multi-connectivity configuration to allow them to analyse the information and determine what was the cause of the failed RRC Release like transmission.

In a split gNB architecture such as the one in Figure 8, the node receiving the logged information report from the UE is the gNB-CU-CP. This node might deduce from the logged information the root cause of the problem and take appropriate actions. Some actions might be limited to a change of configuration within the gNB-CU-CP. This would be the case if, for example, the gNB-CU-CP determines that the radio signal quality at the time of sending the RRC Release like message reported by the UE, e.g. Signal-to-Interference-Plus-Noise-Ratio (SINR), reference signal received power (RSRP), reference signal received quality (RSRQ), needs to be better than what recorded by the UE at the time of missed reception of the RRC Release like message that triggered the logged information report.

On the contrary, there might be detected issues that require the gNB-CU-CP to signal information to the g-NB-DU, in order for the issue to be resolved. For example, the gNB-CU-CP might realise that the issue was due to lack of coverage in a particular area. This would require the gNB-DU to adjust its cell/beam shape and improve signal strength in the area with poor coverage. In order to achieve the latter, the gNB-CU would need to signal to the gNB-DU information such as:
- The logged information report received from the UE
- An indication of the issue detected, e.g. coverage hole
- An indication of the location where the issue was detected, e.g. measurements per beam reported by the UE

Note that in another embodiment of this method the gNB-CU-CP may signal the logged information reported by the UE to the gNB-DU without necessarily performing an analysis or without communicating to the gNB-DU the result of such analysis, leaving to the gNB-DU the task of analysing the information and derive possible actions.

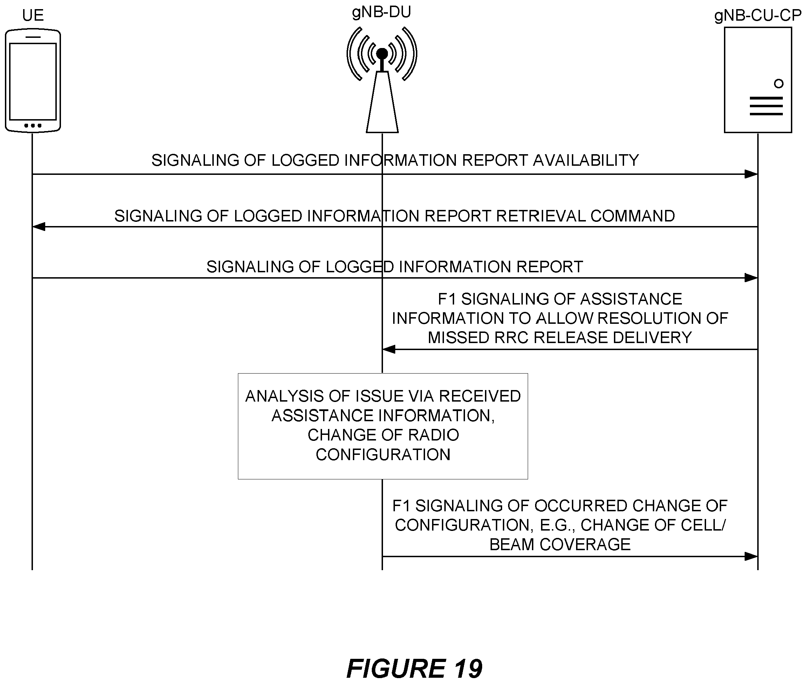

A possible signalling mechanism for the methods above is in Figure 19, which shows signaling in a gNB split architecture for the detection and resolution of missed RRC Release delivery.

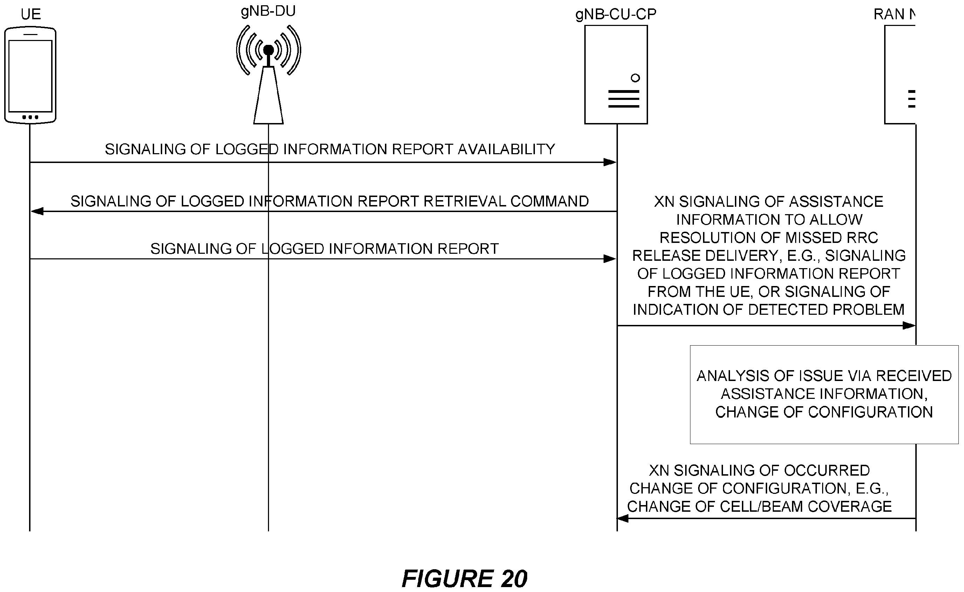

As described above, a gNB might also forward the logged information report to other nodes, or, similarly to the mechanisms in Figure 19, the gNB may signal to neighbouring nodes the result of an analysis of the logged information and the recommendation for an action to be taken to solve the detected issue. This can be represented in the example message sequence chart in Figure 20, which shows signaling in an NG RAN architecture for detection and resolution of missed RRC Release delivery.

In an additional embodiment, as an example implementation of the method in Figure 4, a method is proposed to enable the UE and the network to avoid RRC state mismatches in case of missed delivery of an RRC Release like message. In this method the NG RAN node issuing the RRC Release like message may perform in one of the following ways. In one way, the NG RAN node may not switch the UE RRC state immediately to "inactive" and wait for a pre-configured amount of time before doing so. If within such time window the UE engages in any form of communication with the RAN, which is not communication the UE will perform if in inactive state, then the RAN node will consider that the UE has not received the RRC Release message and it has not moved to inactive. In this case the RAN node will keep the node in RRC Connected and, if needed, re-send the RRC Release message.

If the NG RAN node follows the split architecture in Figure 8, then the gNB-CU-CP issuing the RRC Release message to the UE may wait for a pre-set amount of time before issuing an F1: UE Context Release Command to the gNB-DU, which would remove the UE context at the gNB-DU as a consequence of the UE entering inactive state. If within such time window the UE engages in any form of communication with the RAN, which is not communication the UE will perform if in inactive state, then the gNB-CU-CP will consider that the UE has not received the RRC Release message and it has not moved to inactive. In this case the gNB-CU-CP will keep the node in RRC Connected and, if needed, re-send the RRC Release message.

Alternatively or additionally, the gNB-CU-CP issuing the RRC Release message to the UE may signal to the gNB-DU an F1: UE Context Release message, including a set time, that the gNB-DU should wait before removing the UE context as well as stopping any form of communication with the UE. If within such time window the UE engages in any form of communication with the serving RAN, which is not communication the UE will perform if in inactive state, then the gNB-DU or the gNB-CU-CP or both will halt the deletion of the UE context at the gNB-DU in light of the fact that the UE not moved to inactive. In this case the gNB-CU-CP will keep the node in RRC Connected and, if needed, re-send the RRC Release message.

Halting of the UE context removal at the gNB-DU may be notified by the gNB-DU to the gNB-CU via a new or an existing F1AP message. Halting of the UE context removal at the gNB-CU-CP may be notified from the gNB-CU-CP to the gNB-DU via a new or an existing F1AP message.

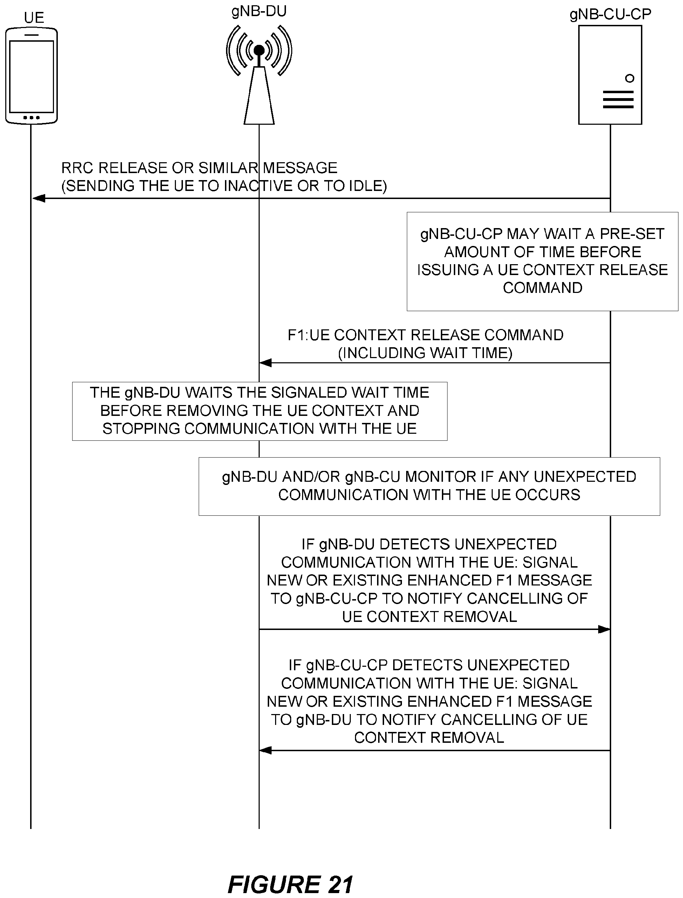

Figure 21 describes the mechanisms presented in the methods above, e.g., mechanisms to prevent RRC state mismatch between the UE and RAN.

With the methods above it is possible to mitigate the effects of missed reception of the RRC Release message. The methods above, combined with the methods where the UE provides logged information reports concerning the event of missing reception of an RRC Release, would guarantee minimum drop in performance due to such missed reception as well as optimization of the delivery of an RRC Release like message via RAN configuration adjustments.

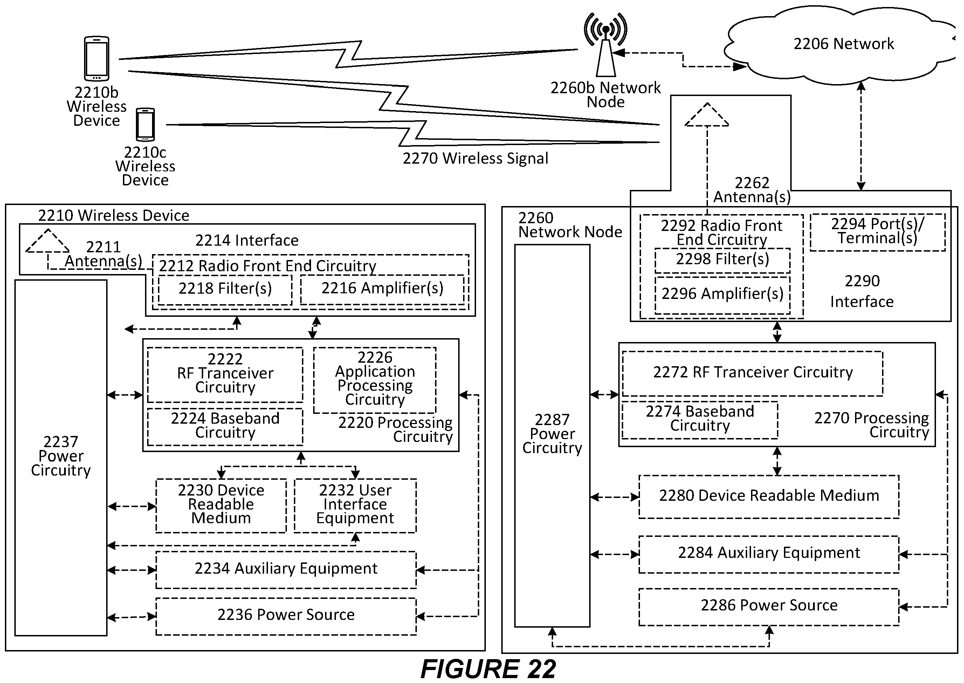

Although the subject matter described herein may be implemented in any appropriate type of system using any suitable components, the embodiments disclosed herein are described in relation to a wireless network, such as the example wireless network illustrated in Figure 22. For simplicity, the wireless network of Figure 22 only depicts network 2206, network nodes 2260 and 2260b, and WDs 2210, 2210b, and 2210c. In practice, a wireless network may further include any additional elements suitable to support communication between wireless devices or between a wireless device and another communication device, such as a landline telephone, a service provider, or any other network node or end device. Of the illustrated components, network node 2260 and wireless device (WD) 2210 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-loT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 2206 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 2260 and WD 2210 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 22, network node 2260 includes processing circuitry 2270, device readable medium 2280, interface 2290, auxiliary equipment 2284, power source 2286, power circuitry 2287, and antenna 2262. Although network node 2260 illustrated in the example wireless network of Figure 22 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 2260 are depicted as single boxes located within a larger box, or nested within multiple boxes, in practice, a network node may comprise multiple different physical components that make up a single illustrated component (e.g., device readable medium 2280 may comprise multiple separate hard drives as well as multiple RAM modules).

Similarly, network node 2260 may be composed of multiple physically separate components (e.g., a NodeB component and a RNC component, or a BTS component and a BSC component, etc.), which may each have their own respective components. In certain scenarios in which network node 2260 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 2260 may be configured to support multiple radio access technologies (RATs). In such embodiments, some components may be duplicated (e.g., separate device readable medium 2280 for the different RATs) and some components may be reused (e.g., the same antenna 2262 may be shared by the RATs). Network node 2260 may also include multiple sets of the various illustrated components for different wireless technologies integrated into network node 2260, such as, for example, GSM, WCDMA, LTE, NR, WiFi, or Bluetooth wireless technologies. These wireless technologies may be integrated into the same or different chip or set of chips and other components within network node 2260.

Processing circuitry 2270 is configured to perform any determining, calculating, or similar operations (e.g., certain obtaining operations) described herein as being provided by a network node. These operations performed by processing circuitry 2270 may include processing information obtained by processing circuitry 2270 by, for example, converting the obtained information into other information, comparing the obtained information or converted information to information stored in the network node, and/or performing one or more operations based on the obtained information or converted information, and as a result of said processing making a determination.

Processing circuitry 2270 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 2260 components, such as device readable medium 2280, network node 2260 functionality. For example, processing circuitry 2270 may execute instructions stored in device readable medium 2280 or in memory within processing circuitry 2270. Such functionality may include providing any of the various wireless features, functions, or benefits discussed herein. In some embodiments, processing circuitry 2270 may include a system on a chip (SOC).

In some embodiments, processing circuitry 2270 may include one or more of radio frequency (RF) transceiver circuitry 2272 and baseband processing circuitry 2274. In some embodiments, radio frequency (RF) transceiver circuitry 2272 and baseband processing circuitry 2274 may be on separate chips (or sets of chips), boards, or units, such as radio units and digital units. In alternative embodiments, part or all of RF transceiver circuitry 2272 and baseband processing circuitry 2274 may be on the same chip or set of chips, boards, or units

In certain embodiments, some or all of the functionality described herein as being provided by a network node, base station, eNB or other such network device may be performed by processing circuitry 2270 executing instructions stored on device readable medium 2280 or memory within processing circuitry 2270. In alternative embodiments, some or all of the functionality may be provided by processing circuitry 2270 without executing instructions stored on a separate or discrete device readable medium, such as in a hard-wired manner. In any of those embodiments, whether executing instructions stored on a device readable storage medium or not, processing circuitry 2270 can be configured to perform the described functionality. The benefits provided by such functionality are not limited to processing circuitry 2270 alone or to other components of network node 2260, but are enjoyed by network node 2260 as a whole, and/or by end users and the wireless network generally.

Device readable medium 2280 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 2270. Device readable medium 2280 may store any suitable instructions, data or information, including a computer program, software, an application including one or more of logic, rules, code, tables, etc. and/or other instructions capable of being executed by processing circuitry 2270 and, utilized by network node 2260. Device readable medium 2280 may be used to store any calculations made by processing circuitry 2270 and/or any data received via interface 2290. In some embodiments, processing circuitry 2270 and device readable medium 2280 may be considered to be integrated.

Interface 2290 is used in the wired or wireless communication of signalling and/or data between network node 2260, network 2206, and/or WDs 2210. As illustrated, interface 2290 comprises port(s)/terminal(s) 2294 to send and receive data, for example to and from network 2206 over a wired connection. Interface 2290 also includes radio front end circuitry 2292 that may be coupled to, or in certain embodiments a part of, antenna 2262. Radio front end circuitry 2292 comprises filters 2298 and amplifiers 2296. Radio front end circuitry 2292 may be connected to antenna 2262 and processing circuitry 2270. Radio front end circuitry may be configured to condition signals communicated between antenna 2262 and processing circuitry 2270. Radio front end circuitry 2292 may receive digital data that is to be sent out to other network nodes or WDs via a wireless connection. Radio front end circuitry 2292 may convert the digital data into a radio signal having the appropriate channel and bandwidth parameters using a combination of filters 2298 and/or amplifiers 2296. The radio signal may then be transmitted via antenna 2262. Similarly, when receiving data, antenna 2262 may collect radio signals which are then converted into digital data by radio front end circuitry 2292. The digital data may be passed to processing circuitry 2270. In other embodiments, the interface may comprise different components and/or different combinations of components.

In certain alternative embodiments, network node 2260 may not include separate radio front end circuitry 2292, instead, processing circuitry 2270 may comprise radio front end circuitry and may be connected to antenna 2262 without separate radio front end circuitry 2292. Similarly, in some embodiments, all or some of RF transceiver circuitry 2272 may be considered a part of interface 2290. In still other embodiments, interface 2290 may include one or more ports or terminals 2294, radio front end circuitry 2292, and RF transceiver circuitry 2272, as part of a radio unit (not shown), and interface 2290 may communicate with baseband processing circuitry 2274, which is part of a digital unit (not shown).

Antenna 2262 may include one or more antennas, or antenna arrays, configured to send and/or receive wireless signals. Antenna 2262 may be coupled to radio front end circuitry 2290 and may be any type of antenna capable of transmitting and receiving data and/or signals wirelessly. In some embodiments, antenna 2262 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 2262 may be separate from network node 2260 and may be connectable to network node 2260 through an interface or port.

Antenna 2262, interface 2290, and/or processing circuitry 2270 may be configured to perform any receiving operations and/or certain obtaining operations described herein as being performed by a network node. Any information, data and/or signals may be received from a wireless device, another network node and/or any other network equipment. Similarly, antenna 2262, interface 2290, and/or processing circuitry 2270 may be configured to perform any transmitting operations described herein as being performed by a network node. Any information, data and/or signals may be transmitted to a wireless device, another network node and/or any other network equipment.

Power circuitry 2287 may comprise, or be coupled to, power management circuitry and is configured to supply the components of network node 2260 with power for performing the functionality described herein. Power circuitry 2287 may receive power from power source 2286. Power source 2286 and/or power circuitry 2287 may be configured to provide power to the various components of network node 2260 in a form suitable for the respective components (e.g., at a voltage and current level needed for each respective component). Power source 2286 may either be included in, or external to, power circuitry 2287 and/or network node 2260. For example, network node 2260 may be connectable to an external power source (e.g., an electricity outlet) via an input circuitry or interface such as an electrical cable, whereby the external power source supplies power to power circuitry 2287. As a further example, power source 2286 may comprise a source of power in the form of a battery or battery pack which is connected to, or integrated in, power circuitry 2287. The battery may provide backup power should the external power source fail. Other types of power sources, such as photovoltaic devices, may also be used.

Alternative embodiments of network node 2260 may include additional components beyond those shown in Figure 22 that may be responsible for providing certain aspects of the network node's functionality, including any of the functionality described herein and/or any functionality necessary to support the subject matter described herein. For example, network node 2260 may include user interface equipment to allow input of information into network node 2260 and to allow output of information from network node 2260. This may allow a user to perform diagnostic, maintenance, repair, and other administrative functions for network node 2260.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (loT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 2210 includes antenna 2211, interface 2214, processing circuitry 2220, device readable medium 2230, user interface equipment 2232, auxiliary equipment 2234, power source 2236 and power circuitry 2237. WD 2210 may include multiple sets of one or more of the illustrated components for different wireless technologies supported by WD 2210, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 2210.

Antenna 2211 may include one or more antennas or antenna arrays, configured to send and/or receive wireless signals, and is connected to interface 2214. In certain alternative embodiments, antenna 2211 may be separate from WD 2210 and be connectable to WD 2210 through an interface or port. Antenna 2211, interface 2214, and/or processing circuitry 2220 may be configured to perform any receiving or transmitting operations described herein as being performed by a WD. Any information, data and/or signals may be received from a network node and/or another WD. In some embodiments, radio front end circuitry and/or antenna 2211 may be considered an interface.

As illustrated, interface 2214 comprises radio front end circuitry 2212 and antenna 2211. Radio front end circuitry 2212 comprise one or more filters 2218 and amplifiers 2216. Radio front end circuitry 2214 is connected to antenna 2211 and processing circuitry 2220, and is configured to condition signals communicated between antenna 2211 and processing circuitry 2220. Radio front end circuitry 2212 may be coupled to or a part of antenna 2211. In some embodiments, WD 2210 may not include separate radio front end circuitry 2212; rather, processing circuitry 2220 may comprise radio front end circuitry and may be connected to antenna 2211. Similarly, in some embodiments, some or all of RF transceiver circuitry 2222 may be considered a part of interface 2214. Radio front end circuitry 2212 may receive digital data that is to be sent out to other network nodes or WDs via a wireless connection. Radio front end circuitry 2212 may convert the digital data into a radio signal having the appropriate channel and bandwidth parameters using a combination of filters 2218 and/or amplifiers 2216. The radio signal may then be transmitted via antenna 2211. Similarly, when receiving data, antenna 2211 may collect radio signals which are then converted into digital data by radio front end circuitry 2212. The digital data may be passed to processing circuitry 2220. In other embodiments, the interface may comprise different components and/or different combinations of components.

Processing circuitry 2220 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 2210 components, such as device readable medium 2230, WD 2210 functionality. Such functionality may include providing any of the various wireless features or benefits discussed herein. For example, processing circuitry 2220 may execute instructions stored in device readable medium 2230 or in memory within processing circuitry 2220 to provide the functionality disclosed herein.

As illustrated, processing circuitry 2220 includes one or more of RF transceiver circuitry 2222, baseband processing circuitry 2224, and application processing circuitry 2226. In other embodiments, the processing circuitry may comprise different components and/or different combinations of components. In certain embodiments processing circuitry 2220 of WD 2210 may comprise a SOC. In some embodiments, RF transceiver circuitry 2222, baseband processing circuitry 2224, and application processing circuitry 2226 may be on separate chips or sets of chips. In alternative embodiments, part or all of baseband processing circuitry 2224 and application processing circuitry 2226 may be combined into one chip or set of chips, and RF transceiver circuitry 2222 may be on a separate chip or set of chips. In still alternative embodiments, part or all of RF transceiver circuitry 2222 and baseband processing circuitry 2224 may be on the same chip or set of chips, and application processing circuitry 2226 may be on a separate chip or set of chips. In yet other alternative embodiments, part or all of RF transceiver circuitry 2222, baseband processing circuitry 2224, and application processing circuitry 2226 may be combined in the same chip or set of chips. In some embodiments, RF transceiver circuitry 2222 may be a part of interface 2214. RF transceiver circuitry 2222 may condition RF signals for processing circuitry 2220.

In certain embodiments, some or all of the functionality described herein as being performed by a WD may be provided by processing circuitry 2220 executing instructions stored on device readable medium 2230, which in certain embodiments may be a computer-readable storage medium. In alternative embodiments, some or all of the functionality may be provided by processing circuitry 2220 without executing instructions stored on a separate or discrete device readable storage medium, such as in a hard-wired manner. In any of those particular embodiments, whether executing instructions stored on a device readable storage medium or not, processing circuitry 2220 can be configured to perform the described functionality. The benefits provided by such functionality are not limited to processing circuitry 2220 alone or to other components of WD 2210, but are enjoyed by WD 2210 as a whole, and/or by end users and the wireless network generally.

Processing circuitry 2220 may be configured to perform any determining, calculating, or similar operations (e.g., certain obtaining operations) described herein as being performed by a WD. These operations, as performed by processing circuitry 2220, may include processing information obtained by processing circuitry 2220 by, for example, converting the obtained information into other information, comparing the obtained information or converted information to information stored by WD 2210, and/or performing one or more operations based on the obtained information or converted information, and as a result of said processing making a determination.

Device readable medium 2230 may be operable to store a computer program, software, an application including one or more of logic, rules, code, tables, etc. and/or other instructions capable of being executed by processing circuitry 2220. Device readable medium 2230 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 2220. In some embodiments, processing circuitry 2220 and device readable medium 2230 may be considered to be integrated.

User interface equipment 2232 may provide components that allow for a human user to interact with WD 2210. Such interaction may be of many forms, such as visual, audial, tactile, etc. User interface equipment 2232 may be operable to produce output to the user and to allow the user to provide input to WD 2210. The type of interaction may vary depending on the type of user interface equipment 2232 installed in WD 2210. For example, if WD 2210 is a smart phone, the interaction may be via a touch screen; if WD 2210 is a smart meter, the interaction may be through a screen that provides usage (e.g., the number of gallons used) or a speaker that provides an audible alert (e.g., if smoke is detected). User interface equipment 2232 may include input interfaces, devices and circuits, and output interfaces, devices and circuits. User interface equipment 2232 is configured to allow input of information into WD 2210, and is connected to processing circuitry 2220 to allow processing circuitry 2220 to process the input information. User interface equipment 2232 may include, for example, a microphone, a proximity or other sensor, keys/buttons, a touch display, one or more cameras, a USB port, or other input circuitry. User interface equipment 2232 is also configured to allow output of information from WD 2210, and to allow processing circuitry 2220 to output information from WD 2210. User interface equipment 2232 may include, for example, a speaker, a display, vibrating circuitry, a USB port, a headphone interface, or other output circuitry. Using one or more input and output interfaces, devices, and circuits, of user interface equipment 2232, WD 2210 may communicate with end users and/or the wireless network, and allow them to benefit from the functionality described herein.

Auxiliary equipment 2234 is operable to provide more specific functionality which may not be generally performed by WDs. This may comprise specialized sensors for doing measurements for various purposes, interfaces for additional types of communication such as wired communications etc. The inclusion and type of components of auxiliary equipment 2234 may vary depending on the embodiment and/or scenario.

Power source 2236 may, in some embodiments, be in the form of a battery or battery pack. Other types of power sources, such as an external power source (e.g., an electricity outlet), photovoltaic devices or power cells, may also be used. WD 2210 may further comprise power circuitry 2237 for delivering power from power source 2236 to the various parts of WD 2210 which need power from power source 2236 to carry out any functionality described or indicated herein. Power circuitry 2237 may in certain embodiments comprise power management circuitry. Power circuitry 2237 may additionally or alternatively be operable to receive power from an external power source; in which case WD 2210 may be connectable to the external power source (such as an electricity outlet) via input circuitry or an interface such as an electrical power cable. Power circuitry 2237 may also in certain embodiments be operable to deliver power from an external power source to power source 2236. This may be, for example, for the charging of power source 2236. Power circuitry 2237 may perform any formatting, converting, or other modification to the power from power source 2236 to make the power suitable for the respective components of WD 2210 to which power is supplied.

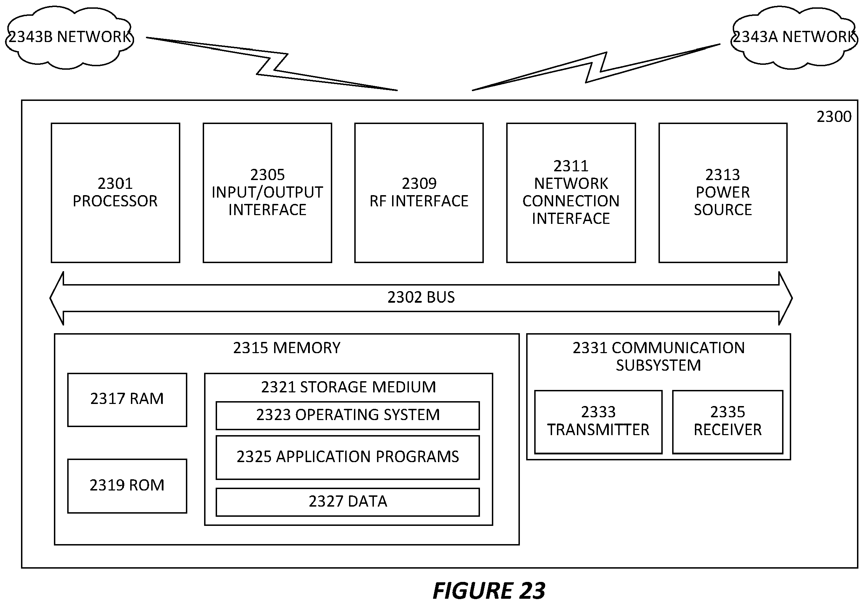

Figure 23 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 23200 may be any UE identified by the 3^{rd} Generation Partnership Project (3GPP), including a NB-loT UE, a machine type communication (MTC) UE, and/or an enhanced MTC (eMTC) UE. UE 2300, as illustrated in Figure 23, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 23 is a UE, the components discussed herein are equally applicable to a WD, and vice-versa.

In Figure 23, UE 2300 includes processing circuitry 2301 that is operatively coupled to input/output interface 2305, radio frequency (RF) interface 2309, network connection interface 2311, memory 2315 including random access memory (RAM) 2317, read-only memory (ROM) 2319, and storage medium 2321 or the like, communication subsystem 2331, power source 2333, and/or any other component, or any combination thereof. Storage medium 2321 includes operating system 2323, application program 2325, and data 2327. In other embodiments, storage medium 2321 may include other similar types of information. Certain UEs may utilize all of the components shown in Figure 23, or only a subset of the components. The level of integration between the components may vary from one UE to another UE. Further, certain UEs may contain multiple instances of a component, such as multiple processors, memories, transceivers, transmitters, receivers, etc.

In Figure 23, processing circuitry 2301 may be configured to process computer instructions and data. Processing circuitry 2301 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 2301 may include two central processing units (CPUs). Data may be information in a form suitable for use by a computer.

In the depicted embodiment, input/output interface 2305 may be configured to provide a communication interface to an input device, output device, or input and output device. UE 2300 may be configured to use an output device via input/output interface 2305. An output device may use the same type of interface port as an input device. For example, a USB port may be used to provide input to and output from UE 2300. The output device may be a speaker, a sound card, a video card, a display, a monitor, a printer, an actuator, an emitter, a smartcard, another output device, or any combination thereof. UE 2300 may be configured to use an input device via input/output interface 2305 to allow a user to capture information into UE 2300. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 23, RF interface 2309 may be configured to provide a communication interface to RF components such as a transmitter, a receiver, and an antenna. Network connection interface 2311 may be configured to provide a communication interface to network 2343a. Network 2343a may encompass wired and/or wireless networks such as a local-area network (LAN), a wide-area network (WAN), a computer network, a wireless network, a telecommunications network, another like network or any combination thereof. For example, network 2343a may comprise a Wi-Fi network. Network connection interface 2311 may be configured to include a receiver and a transmitter interface used to communicate with one or more other devices over a communication network according to one or more communication protocols, such as Ethernet, TCP/IP, SONET, ATM, or the like. Network connection interface 2311 may implement receiver and transmitter functionality appropriate to the communication network links (e.g., optical, electrical, and the like). The transmitter and receiver functions may share circuit components, software or firmware, or alternatively may be implemented separately.

RAM 2317 may be configured to interface via bus 2302 to processing circuitry 2301 to provide storage or caching of data or computer instructions during the execution of software programs such as the operating system, application programs, and device drivers. ROM 2319 may be configured to provide computer instructions or data to processing circuitry 2301. For example, ROM 2319 may be configured to store invariant low-level system code or data for basic system functions such as basic input and output (I/O), startup, or reception of keystrokes from a keyboard that are stored in a non-volatile memory. Storage medium 2321 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 2321 may be configured to include operating system 2323, application program 2325 such as a web browser application, a widget or gadget engine or another application, and data file 2327. Storage medium 2321 may store, for use by UE 2300, any of a variety of various operating systems or combinations of operating systems.

Storage medium 2321 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 2321 may allow UE 2300 to access computer-executable instructions, application programs or the like, stored on transitory or non-transitory memory media, to off-load data, or to upload data. An article of manufacture, such as one utilizing a communication system may be tangibly embodied in storage medium 2321, which may comprise a device readable medium.

In Figure 23, processing circuitry 2301 may be configured to communicate with network 2343b using communication subsystem 2331. Network 2343a and network 2343b may be the same network or networks or different network or networks. Communication subsystem 2331 may be configured to include one or more transceivers used to communicate with network 2343b. For example, communication subsystem 2331 may be configured to include one or more transceivers used to communicate with one or more remote transceivers of another device capable of wireless communication such as another WD, UE, or base station of a radio access network (RAN) according to one or more communication protocols, such as IEEE 802.23, CDMA, WCDMA, GSM, LTE, UTRAN, WiMax, or the like. Each transceiver may include transmitter 2333 and/or receiver 2335 to implement transmitter or receiver functionality, respectively, appropriate to the RAN links (e.g., frequency allocations and the like). Further, transmitter 2333 and receiver 2335 of each transceiver may share circuit components, software or firmware, or alternatively may be implemented separately.

In the illustrated embodiment, the communication functions of communication subsystem 2331 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 2331 may include cellular communication, Wi-Fi communication, Bluetooth communication, and GPS communication. Network 2343b may encompass wired and/or wireless networks such as a local-area network (LAN), a wide-area network (WAN), a computer network, a wireless network, a telecommunications network, another like network or any combination thereof. For example, network 2343b may be a cellular network, a Wi-Fi network, and/or a near-field network. Power source 2313 may be configured to provide alternating current (AC) or direct current (DC) power to components of UE 2300.

The features, benefits and/or functions described herein may be implemented in one of the components of UE 2300 or partitioned across multiple components of UE 2300. Further, the features, benefits, and/or functions described herein may be implemented in any combination of hardware, software or firmware. In one example, communication subsystem 2331 may be configured to include any of the components described herein. Further, processing circuitry 2301 may be configured to communicate with any of such components over bus 2302. In another example, any of such components may be represented by program instructions stored in memory that when executed by processing circuitry 2301 perform the corresponding functions described herein. In another example, the functionality of any of such components may be partitioned between processing circuitry 2301 and communication subsystem 2331. In another example, the non-computationally intensive functions of any of such components may be implemented in software or firmware and the computationally intensive functions may be implemented in hardware.

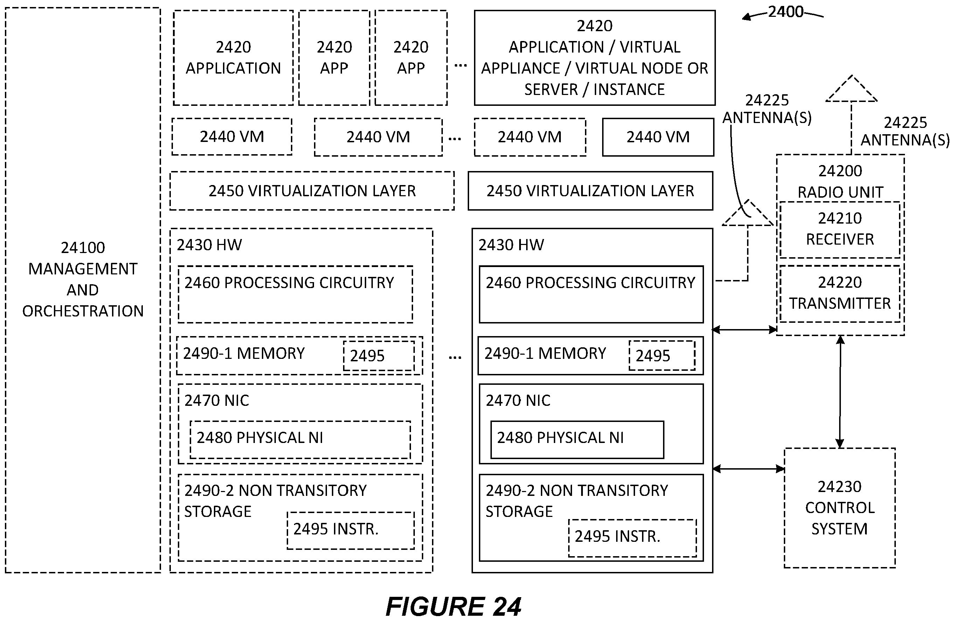

Figure 24 is a schematic block diagram illustrating a virtualization environment 2400 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 2400 hosted by one or more of hardware nodes 2430. Further, in embodiments in which the virtual node is not a radio access node or does not require radio connectivity (e.g., a core network node), then the network node may be entirely virtualized.

The functions may be implemented by one or more applications 2420 (which may alternatively be called software instances, virtual appliances, network functions, virtual nodes, virtual network functions, etc.) operative to implement some of the features, functions, and/or benefits of some of the embodiments disclosed herein. Applications 2420 are run in virtualization environment 2400 which provides hardware 2430 comprising processing circuitry 2460 and memory 2490. Memory 2490 contains instructions 2495 executable by processing circuitry 2460 whereby application 2420 is operative to provide one or more of the features, benefits, and/or functions disclosed herein.

Virtualization environment 2400, comprises general-purpose or special-purpose network hardware devices 2430 comprising a set of one or more processors or processing circuitry 2460, which may be commercial off-the-shelf (COTS) processors, dedicated Application Specific Integrated Circuits (ASICs), or any other type of processing circuitry including digital or analog hardware components or special purpose processors. Each hardware device may comprise memory 2490-1 which may be non-persistent memory for temporarily storing instructions 2495 or software executed by processing circuitry 2460. Each hardware device may comprise one or more network interface controllers (NICs) 2470, also known as network interface cards, which include physical network interface 2480. Each hardware device may also include non-transitory, persistent, machine-readable storage media 2490-2 having stored therein software 2495 and/or instructions executable by processing circuitry 2460. Software 2495 may include any type of software including software for instantiating one or more virtualization layers 2450 (also referred to as hypervisors), software to execute virtual machines 2440 as well as software allowing it to execute functions, features and/or benefits described in relation with some embodiments described herein.

Virtual machines 2440, comprise virtual processing, virtual memory, virtual networking or interface and virtual storage, and may be run by a corresponding virtualization layer 2450 or hypervisor. Different embodiments of the instance of virtual appliance 2420 may be implemented on one or more of virtual machines 2440, and the implementations may be made in different ways.

During operation, processing circuitry 2460 executes software 2495 to instantiate the hypervisor or virtualization layer 2450, which may sometimes be referred to as a virtual machine monitor (VMM). Virtualization layer 2450 may present a virtual operating platform that appears like networking hardware to virtual machine 2440.

As shown in Figure 24, hardware 2430 may be a standalone network node with generic or specific components. Hardware 2430 may comprise antenna 24225 and may implement some functions via virtualization. Alternatively, hardware 2430 may be part of a larger cluster of hardware (e.g. such as in a data center or customer premise equipment (CPE)) where many hardware nodes work together and are managed via management and orchestration (MANO) 24100, which, among others, oversees lifecycle management of applications 2420.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 2440 may be a software implementation of a physical machine that runs programs as if they were executing on a physical, non-virtualized machine. Each of virtual machines 2440, and that part of hardware 2430 that executes that virtual machine, be it hardware dedicated to that virtual machine and/or hardware shared by that virtual machine with others of the virtual machines 2440, forms a separate virtual network elements (VNE).

Still in the context of NFV, Virtual Network Function (VNF) is responsible for handling specific network functions that run in one or more virtual machines 2440 on top of hardware networking infrastructure 2430 and corresponds to application 2420 in Figure 24.

In some embodiments, one or more radio units 24200 that each include one or more transmitters 24220 and one or more receivers 24210 may be coupled to one or more antennas 24225. Radio units 24200 may communicate directly with hardware nodes 2430 via one or more appropriate network interfaces and may be used in combination with the virtual components to provide a virtual node with radio capabilities, such as a radio access node or a base station.

In some embodiments, some signalling can be effected with the use of control system 24230 which may alternatively be used for communication between the hardware nodes 2430 and radio units 24200.

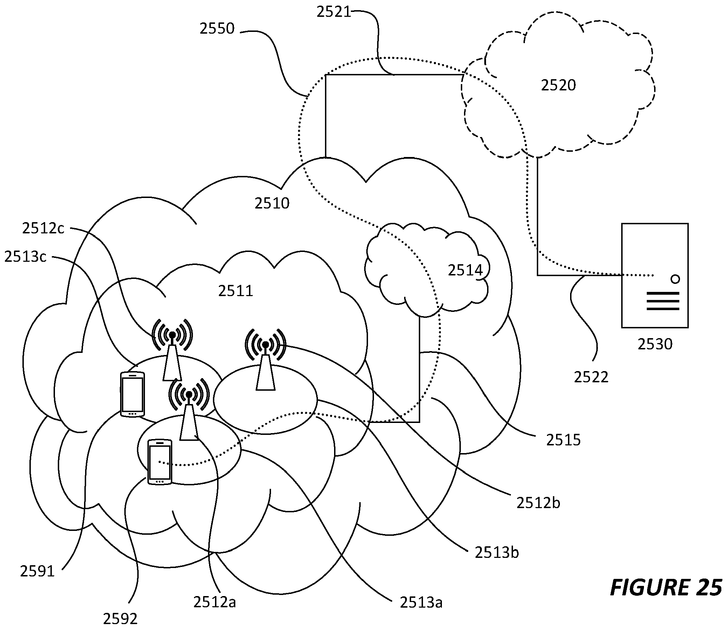

Figure 25 illustrates a telecommunication network connected via an intermediate network to a host computer in accordance with some embodiments. In particular, with reference to FIGURE 25, in accordance with an embodiment, a communication system includes telecommunication network 2510, such as a 3GPP-type cellular network, which comprises access network 2511, such as a radio access network, and core network 2514. Access network 2511 comprises a plurality of base stations 2512a, 2512b, 2512c, such as NBs, eNBs, gNBs or other types of wireless access points, each defining a corresponding coverage area 2513a, 2513b, 2513c. Each base station 2512a, 2512b, 2512c is connectable to core network 2514 over a wired or wireless connection 2515. A first UE 2591 located in coverage area 2513c is configured to wirelessly connect to, or be paged by, the corresponding base station 2512c. A second UE 2592 in coverage area 2513a is wirelessly connectable to the corresponding base station 2512a. While a plurality of UEs 2591, 2592 are illustrated in this example, the disclosed embodiments are equally applicable to a situation where a sole UE is in the coverage area or where a sole UE is connecting to the corresponding base station 2512.

Telecommunication network 2510 is itself connected to host computer 2530, which may be embodied in the hardware and/or software of a standalone server, a cloud-implemented server, a distributed server or as processing resources in a server farm. Host computer 2530 may be under the ownership or control of a service provider, or may be operated by the service provider or on behalf of the service provider. Connections 2521 and 2522 between telecommunication network 2510 and host computer 2530 may extend directly from core network 2514 to host computer 2530 or may go via an optional intermediate network 2520. Intermediate network 2520 may be one of, or a combination of more than one of, a public, private or hosted network; intermediate network 2520, if any, may be a backbone network or the Internet; in particular, intermediate network 2520 may comprise two or more sub-networks (not shown).

The communication system of Figure 25 as a whole enables connectivity between the connected UEs 2591, 2592 and host computer 2530. The connectivity may be described as an over-the-top (OTT) connection 2550. Host computer 2530 and the connected UEs 2591, 2592 are configured to communicate data and/or signaling via OTT connection 2550, using access network 2511, core network 2514, any intermediate network 2520 and possible further infrastructure (not shown) as intermediaries. OTT connection 2550 may be transparent in the sense that the participating communication devices through which OTT connection 2550 passes are unaware of routing of uplink and downlink communications. For example, base station 2512 may not or need not be informed about the past routing of an incoming downlink communication with data originating from host computer 2530 to be forwarded (e.g., handed over) to a connected UE 2591. Similarly, base station 2512 need not be aware of the future routing of an outgoing uplink communication originating from the UE 2591 towards the host computer 2530.

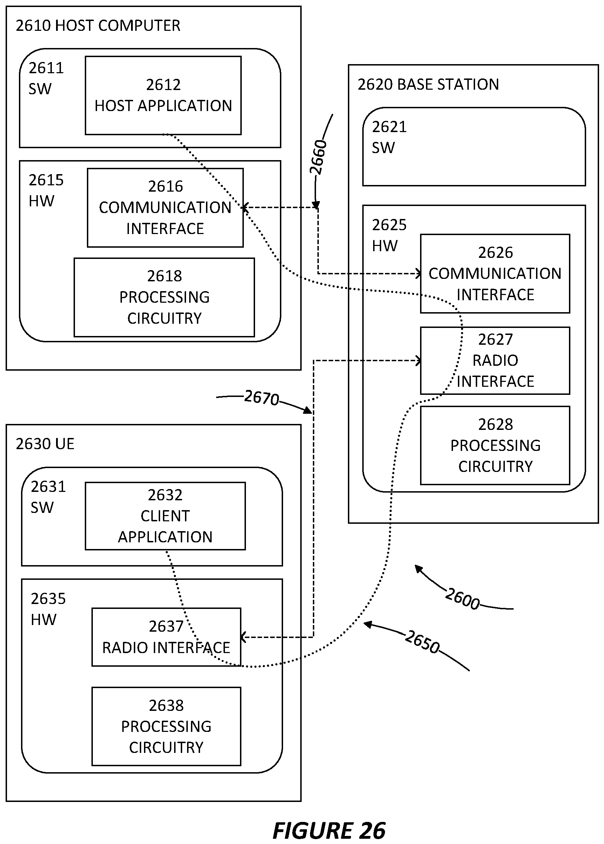

Example implementations, in accordance with an embodiment, of the UE, base station and host computer discussed in the preceding paragraphs will now be described with reference to Figure 26. Figure 26 illustrates host computer communicating via a base station with a user equipment over a partially wireless connection in accordance with some embodiments In communication system 2600, host computer 2610 comprises hardware 2615 including communication interface 2616 configured to set up and maintain a wired or wireless connection with an interface of a different communication device of communication system 2600. Host computer 2610 further comprises processing circuitry 2618, which may have storage and/or processing capabilities. In particular, processing circuitry 2618 may comprise one or more programmable processors, application-specific integrated circuits, field programmable gate arrays or combinations of these (not shown) adapted to execute instructions. Host computer 2610 further comprises software 2611, which is stored in or accessible by host computer 2610 and executable by processing circuitry 2618. Software 2611 includes host application 2612. Host application 2612 may be operable to provide a service to a remote user, such as UE 2630 connecting via OTT connection 2650 terminating at UE 2630 and host computer 2610. In providing the service to the remote user, host application 2612 may provide user data which is transmitted using OTT connection 2650.

Communication system 2600 further includes base station 2620 provided in a telecommunication system and comprising hardware 2625 enabling it to communicate with host computer 2610 and with UE 2630. Hardware 2625 may include communication interface 2626 for setting up and maintaining a wired or wireless connection with an interface of a different communication device of communication system 2600, as well as radio interface 2627 for setting up and maintaining at least wireless connection 2670 with UE 2630 located in a coverage area (not shown in Figure 26) served by base station 2620. Communication interface 2626 may be configured to facilitate connection 2660 to host computer 2610. Connection 2660 may be direct or it may pass through a core network (not shown in Figure 26) of the telecommunication system and/or through one or more intermediate networks outside the telecommunication system. In the embodiment shown, hardware 2625 of base station 2620 further includes processing circuitry 2628, which may comprise one or more programmable processors, application-specific integrated circuits, field programmable gate arrays or combinations of these (not shown) adapted to execute instructions. Base station 2620 further has software 2621 stored internally or accessible via an external connection.

Communication system 2600 further includes UE 2630 already referred to. Its hardware 2635 may include radio interface 2637 configured to set up and maintain wireless connection 2670 with a base station serving a coverage area in which UE 2630 is currently located. Hardware 2635 of UE 2630 further includes processing circuitry 2638, which may comprise one or more programmable processors, application-specific integrated circuits, field programmable gate arrays or combinations of these (not shown) adapted to execute instructions. UE 2630 further comprises software 2631, which is stored in or accessible by UE 2630 and executable by processing circuitry 2638. Software 2631 includes client application 2632. Client application 2632 may be operable to provide a service to a human or non-human user via UE 2630, with the support of host computer 2610. In host computer 2610, an executing host application 2612 may communicate with the executing client application 2632 via OTT connection 2650 terminating at UE 2630 and host computer 2610. In providing the service to the user, client application 2632 may receive request data from host application 2612 and provide user data in response to the request data. OTT connection 2650 may transfer both the request data and the user data. Client application 2632 may interact with the user to generate the user data that it provides.

It is noted that host computer 2610, base station 2620 and UE 2630 illustrated in Figure 26 may be similar or identical to host computer 2530, one of base stations 2512a, 2512b, 2512c and one of UEs 2591, 2592 of Figure 25, respectively. This is to say, the inner workings of these entities may be as shown in Figure 26 and independently, the surrounding network topology may be that of Figure 25.

In Figure 26, OTT connection 2650 has been drawn abstractly to illustrate the communication between host computer 2610 and UE 2630 via base station 2620, without explicit reference to any intermediary devices and the precise routing of messages via these devices. Network infrastructure may determine the routing, which it may be configured to hide from UE 2630 or from the service provider operating host computer 2610, or both. While OTT connection 2650 is active, the network infrastructure may further take decisions by which it dynamically changes the routing (e.g., on the basis of load balancing consideration or reconfiguration of the network).

Wireless connection 2670 between UE 2630 and base station 2620 is in accordance with the teachings of the embodiments described throughout this disclosure. One or more of the various embodiments improve the performance of OTT services provided to UE 2630 using OTT connection 2650, in which wireless connection 2670 forms the last segment.

A measurement procedure may be provided for the purpose of monitoring data rate, latency and other factors on which the one or more embodiments improve. There may further be an optional network functionality for reconfiguring OTT connection 2650 between host computer 2610 and UE 2630, in response to variations in the measurement results. The measurement procedure and/or the network functionality for reconfiguring OTT connection 2650 may be implemented in software 2611 and hardware 2615 of host computer 2610 or in software 2631 and hardware 2635 of UE 2630, or both. In embodiments, sensors (not shown) may be deployed in or in association with communication devices through which OTT connection 2650 passes; the sensors may participate in the measurement procedure by supplying values of the monitored quantities exemplified above, or supplying values of other physical quantities from which software 2611, 2631 may compute or estimate the monitored quantities. The reconfiguring of OTT connection 2650 may include message format, retransmission settings, preferred routing etc.; the reconfiguring need not affect base station 2620, and it may be unknown or imperceptible to base station 2620. Such procedures and functionalities may be known and practiced in the art. In certain embodiments, measurements may involve proprietary UE signaling facilitating host computer 2610's measurements of throughput, propagation times, latency and the like. The measurements may be implemented in that software 2611 and 2631 causes messages to be transmitted, in particular empty or 'dummy' messages, using OTT connection 2650 while it monitors propagation times, errors etc.

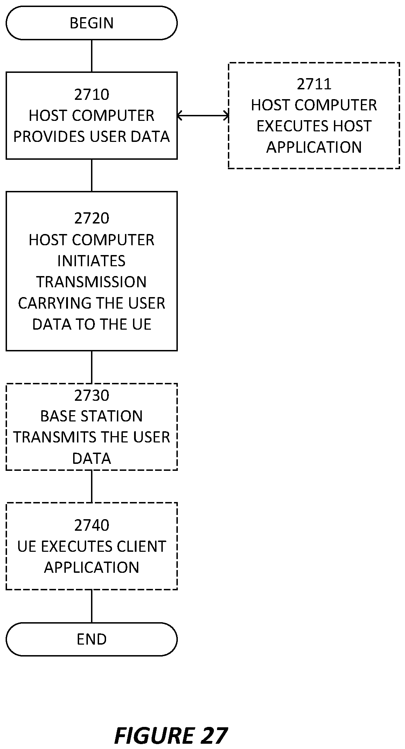

Figure 27 is a flowchart illustrating a method implemented in a communication system, in accordance with one embodiment. The communication system includes a host computer, a base station and a UE which may be those described with reference to Figures 25 and 26. For simplicity of the present disclosure, only drawing references to Figure 27 will be included in this section. In step 2710, the host computer provides user data. In substep 2711 (which may be optional) of step 2710, the host computer provides the user data by executing a host application. In step 2720, the host computer initiates a transmission carrying the user data to the UE. In step 2730 (which may be optional), the base station transmits to the UE the user data which was carried in the transmission that the host computer initiated, in accordance with the teachings of the embodiments described throughout this disclosure. In step 2740 (which may also be optional), the UE executes a client application associated with the host application executed by the host computer.

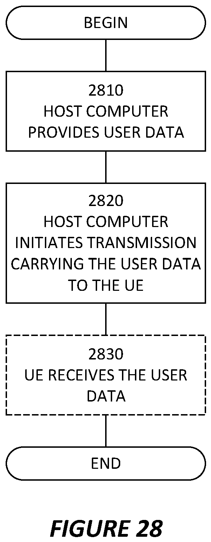

Figure 28 is a flowchart illustrating a method implemented in a communication system, in accordance with one embodiment. The communication system includes a host computer, a base station and a UE which may be those described with reference to Figures 25 and 26. For simplicity of the present disclosure, only drawing references to Figure 28 will be included in this section. In step 2810 of the method, the host computer provides user data. In an optional substep (not shown) the host computer provides the user data by executing a host application. In step 2820, the host computer initiates a transmission carrying the user data to the UE. The transmission may pass via the base station, in accordance with the teachings of the embodiments described throughout this disclosure. In step 2830 (which may be optional), the UE receives the user data carried in the transmission.

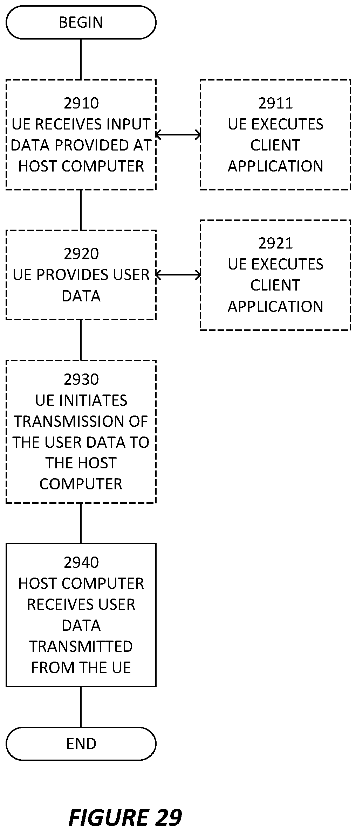

Figure 29 is a flowchart illustrating a method implemented in a communication system, in accordance with one embodiment. The communication system includes a host computer, a base station and a UE which may be those described with reference to Figures 25 and 26. For simplicity of the present disclosure, only drawing references to Figure 29 will be included in this section. In step 2910 (which may be optional), the UE receives input data provided by the host computer. Additionally or alternatively, in step 2920, the UE provides user data. In substep 2921 (which may be optional) of step 2920, the UE provides the user data by executing a client application. In substep 2911 (which may be optional) of step 2910, the UE executes a client application which provides the user data in reaction to the received input data provided by the host computer. In providing the user data, the executed client application may further consider user input received from the user. Regardless of the specific manner in which the user data was provided, the

UE initiates, in substep 2930 (which may be optional), transmission of the user data to the host computer. In step 2940 of the method, the host computer receives the user data transmitted from the UE, in accordance with the teachings of the embodiments described throughout this disclosure.

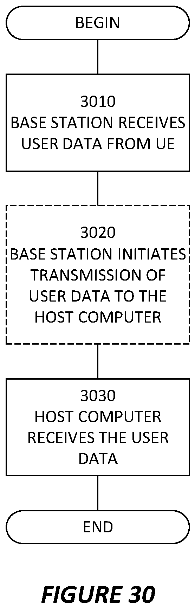

Figure 30 is a flowchart illustrating a method implemented in a communication system, in accordance with one embodiment. The communication system includes a host computer, a base station and a UE which may be those described with reference to Figures 25 and 26. For simplicity of the present disclosure, only drawing references to Figure 30 will be included in this section. In step 3010 (which may be optional), in accordance with the teachings of the embodiments described throughout this disclosure, the base station receives user data from the UE. In step 3020 (which may be optional), the base station initiates transmission of the received user data to the host computer. In step 3030 (which may be optional), the host computer receives the user data carried in the transmission initiated by the base station.

## Claims

1. A method performed by a wireless device (12), the method being **characterized by**:
detecting (200) a cause (22) of the wireless device (12) performing a non-access stratum, NAS, recovery procedure for NAS recovery involving an interaction between access stratum, AS, and NAS layers at the wireless device, where the AS layer detects a failure, then notifies NAS layer of that failure, enters an Idle state, and the NAS layer triggering a procedure that leads to the NAS layer requesting the AS layer to establish or setup an RRC connection; and
transmitting (210), from the wireless device (12) to a network node, a NAS, recovery report (20) that reports the cause (22) of the wireless device (12) performing the NAS recovery procedure.

2. The method of claim 1, wherein the report reports the cause (22) of the wireless device (12) performing the NAS recovery procedure as being expiry of a data inactivity timer at the wireless device (12) or failure by the wireless device (12) to receive an RRC message configured to release or suspend an RRC connection of the wireless device (12).

3. The method of claim 1, wherein the report reports the cause (22) of the wireless device (12) performing the NAS recovery procedure as being either:
integrity protection failure upon reception of a radio resource control, RRC, re-establishment message;
triggering of RRC re-establishment and selection of an inter radio access technology, RAT, cell while an idle measurement configuration timer is running, wherein the idle measurement configuration timer is started upon receiving an RRC connection release message that includes an idle measurement configuration and is stopped upon receiving an RRC connection setup or resume message;
inability of the wireless device (12) to comply with an RRC reconfiguration message received via New Radio while security is activated, a signaling radio bearer has not been set up for transferring RRC messages that encapsulate NAS message, and at least one data radio bearer has not been set up;
expiry of a timer for the wireless device (12) to find a suitable cell in re-establishment;
radio link failure being detected while security is activated, a signaling radio bearer has not been set up for transferring RRC messages that encapsulate NAS message, and at least one data radio bearer has not been set up;
expiry of a timer for receiving a response to an RRC connection re-establishment request; or
inter-RAT cell reselection.

4. The method of any of claims 1-3, wherein the NAS recovery report (20) also reports information that includes one or more of:
a time at which the cause (22) of the NAS recovery procedure being performed occurred;
information describing traffic of the wireless device (12) when the cause (22) occurred;
an RRC configuration message that the wireless device (12) last received;
location information describing a location of the wireless device (12) when the cause (22) occurred;
information describing a cell and/or frequency the wireless device (12) was connected to when the cause (22) occurred;
one or more radio measurements associated with the cause (22);
one or more failed scheduling requests; or
one or more channel state information reference signaling monitoring failure events.

5. A method performed by a network node (14, 600), the method being **characterized by**:
receiving (300) a non-access stratum, NAS, recovery report (20) that reports a cause (22) of a wireless device (12) performing a NAS recovery procedure for NAS recovery involving an interaction between access stratum, AS, and NAS layers at the wireless device, where the AS layer detects a failure, then notifies NAS layer of that failure, enters an Idle state, and the NAS layer triggering a procedure that leads to the NAS layer requesting the AS layer to establish or setup an RRC connection; and
based on the NAS recovery report (20), performing (320) one or more actions to address a root cause of the wireless device (12) having to perform the NAS recovery procedure and/or to reduce a likelihood that the wireless device (12) or another wireless device will have to perform the NAS recovery procedure in the future.

6. The method of claim 5, wherein the report reports the cause (22) of the wireless device (12) performing the NAS recovery procedure as being expiry of a data inactivity timer at the wireless device (12) or failure by the wireless device (12) to receive an RRC message configured to release or suspend an RRC connection of the wireless device (12).

7. The method of claim 5, wherein the report reports the cause (22) of the wireless device (12) performing the NAS recovery procedure as being either:
integrity protection failure upon reception of a radio resource control, RRC, re-establishment message;
triggering of RRC re-establishment and selection of an inter radio access technology, RAT, cell while an idle measurement configuration timer is running, wherein the idle measurement configuration timer is started upon receiving an RRC connection release message that includes an idle measurement configuration and is stopped upon receiving an RRC connection setup or resume message;
inability of the wireless device (12) to comply with an RRC reconfiguration message received via New Radio while security is activated, a signaling radio bearer has not been set up for transferring RRC messages that encapsulate NAS message, and at least one data radio bearer has not been set up;
expiry of a timer for the wireless device (12) to find a suitable cell in re-establishment;
radio link failure being detected while security is activated, a signaling radio bearer has not been set up for transferring RRC messages that encapsulate NAS message, and at least one data radio bearer has not been set up;
expiry of a timer for receiving a response to an RRC connection re-establishment request; or
inter-RAT cell reselection.

8. The method of any of claims 5-7, wherein the NAS recovery report (20) also reports information that includes one or more of:
a time at which the cause (22) of the NAS recovery procedure being performed occurred;
information describing traffic of the wireless device (12) when the cause (22) occurred;
an RRC configuration message that the wireless device (12) last received;
location information describing a location of the wireless device (12) when the cause (22) occurred;
information describing a cell and/or frequency the wireless device (12) was connected to when the cause (22) occurred;
one or more radio measurements associated with the cause (22);
one or more failed scheduling requests; or
one or more channel state information reference signaling monitoring failure events.

9. The method of claims 5-8, further comprising, based on the NAS recovery report (20), performing (310) root cause analysis to determine a root cause of the wireless device (12) having to perform the NAS recovery procedure.

10. The method of claim 5, wherein the one or more actions include one or more of:
tuning one or more parameters at the network node that govern measurement reporting, handover, or control signaling timing;
optimizing mobility robustness; or
optimizing coverage in a geographical area in which the wireless device (12) was located when the wireless device (12) performed the NAS recovery procedure.

11. The method of claim 5, wherein the root cause is failure by the wireless device (12) to receive an RRC message due to poor radio conditions at the wireless device (12), wherein the RRC message releases or suspends an RRC connection of the wireless device (12), and wherein the one or more actions include:
configuring a timing with which the RRC message is to be transmitted to wireless devices;
configuring one or more conditions for triggering a measurement report from wireless devices;
configuring one or more parameters that govern radio conditions in which the network node sends the RRC message to wireless devices; or
configuring a shape of a cell, beam, or sector served by the network node.

12. The method of claim 5, further comprising, based on the NAS recovery report (20), resolving (330) any RRC state mismatch between the wireless device (12) and the network node that is attributable to the cause (22) of the wireless device (12) performing the NAS recovery procedure.

13. The method of claim 5, further comprising forwarding (340) the NAS recovery report (20) to another network node, wherein the recovery report comprises one or more of:
a root cause of the wireless device (12) having to perform the NAS recovery procedure;
location information describing a location where the wireless device (12) had to perform the NAS recovery procedure; or
a recommended or commanded action for the another network node to perform.

14. A wireless device (12) comprising:
communication circuitry (520); and
processing circuitry (510) **characterised by**:
detecting (200) a cause (22) of the wireless device (12) performing a non-access stratum, NAS, recovery procedure for NAS recovery involving an interaction between access stratum, AS, and NAS layers at the wireless device, where the AS layer detects a failure, then notifies NAS layer of that failure, enters an Idle state, and the NAS layer triggering a procedure that leads to the NAS layer requesting the AS layer to establish or setup an RRC connection; and
transmit, from the wireless device (12) to a network node, a NAS recovery report (20) that reports a cause (22) of the wireless device (12) performing the NAS recovery procedure for NAS recovery.

15. A network node (14, 600) comprising:
communication circuitry (620); and
processing circuitry (610) **characterised by**:
receive a non-access stratum, NAS, recovery report (20) from a wireless device (12) that reports a cause (22) of the wireless device (12) performing a NAS recovery procedure for NAS recovery involving an interaction between access stratum, AS, and NAS layers at the wireless device, where the AS layer detects a failure, then notifies NAS layer of that failure, enters an Idle state, and the NAS layer triggering a procedure that leads to the NAS layer requesting the AS layer to establish or setup an RRC connection; and
perform, based on the NAS recovery report (20), one or more actions to address a root cause of the wireless device (12) having to perform the NAS recovery procedure and/or to reduce a likelihood that the wireless device (12) or another wireless device will have to perform the NAS recovery procedure in the future.

## Patentansprüche

1. Verfahren, das durch eine drahtlose Vorrichtung (12) durchgeführt wird, wobei das Verfahren durch Folgendes gekennzeichnet:
Erkennen (200) einer Ursache (22) dafür, dass die drahtlose Vorrichtung (12) eine Non-Access-Stratum-(NAS-) Wiederherstellungsprozedur zur NAS-Wiederherstellung durchführt, die eine Interaktion zwischen Access-Stratum-(AS-) und NAS-Schicht an der drahtlosen Vorrichtung beinhaltet, wobei die AS-Schicht eine Störung erkennt, danach die NAS-Schicht über die Störung benachrichtigt, in einen Ruhezustand eintritt und die NAS-Schicht eine Prozedur auslöst, die dazu führt, dass die NAS-Schicht die AS-Schicht dazu auffordert, eine RRC-Verbindung herzustellen oder einzurichten; und
Übermitteln (210), von der drahtlosen Vorrichtung (12) an einen Netzwerkknoten, eines NAS-Wiederherstellungsberichts (20), der die Ursache (22) dafür meldet, dass die drahtlose Vorrichtung (12) die NAS-Wiederherstellungsprozedur durchführt.

2. Verfahren nach Anspruch 1, wobei der Bericht die Ursache dafür meldet, dass die drahtlose Vorrichtung (12) die NAS-Wiederherstellungsprozedur als Ablaufen eines Dateninaktivitätszeitgebers an der drahtlosen Vorrichtung (12) oder Störung der drahtlosen Vorrichtung (12) zum Empfangen einer RRC-Meldung, die dazu konfiguriert ist, eine RRC-Verbindung der drahtlosen Vorrichtung (12) freizugeben oder aufzuheben, durchführt.

3. Verfahren nach Anspruch 1, wobei der Bericht die Ursache (22) dafür, dass die drahtlose Vorrichtung (12) die NAS-Wiederherstellungsprozedur durchführt, entweder als Folgendes meldet:
Integritätsschutzstörung bei Empfang einer Wiederherstellungsnachricht der Funkressourcensteuerung, RRC;
Auslösen einer RRC-Wiederherstellung und Auswahl einer Zelle der Interfunkzugangstechnologie, RAT, während ein Leerlaufmesskonfigurationszeitgeber läuft, wobei der Leerlaufmesskonfigurationszeitgeber beim Empfangen einer RRC-Verbindungsfreigabenachricht gestartet wird, die eine Leerlaufmesskonfiguration beinhaltet, und beim Empfangen einer RRC-Verbindungsaufbau- oder Wiederaufnahmenachricht angehalten wird;
Unfähigkeit der drahtlosen Vorrichtung (12) zum Einhalten einer RRC-Neukonfigurationsnachricht, die über New Radio empfangen wird, während die Sicherheit aktiviert ist, ein Signalisierungsfunkträger nicht zum Übertragen von RRC-Nachrichten eingerichtet wurde, welche eine NAS-Nachricht einkapseln, und mindestens ein Datenfunkträger nicht eingerichtet wurde;
Ablaufen eines Zeitgebers dafür, dass die drahtlose Vorrichtung (12) eine geeignete Zelle bei Wiederherstellung findet;
wobei eine Funkverknüpfungsstörung erkannt wird, während die Sicherheit aktiviert ist, ein Signalisierungsfunkträger nicht zum Übertragen von RRC-Nachrichten eingerichtet wurde, welche eine NAS-Nachricht einkapseln, und mindestens ein Datenfunkträger nicht eingerichtet wurde;
Ablaufen eines Zeitgebers zum Empfangen einer Antwort auf eine RRC-Verbindungswiederherstellungsanfrage; oder
Neuauswahl der Inter-RAT-Zelle.

4. Verfahren nach einem der Ansprüche 1-3, wobei der NAS-Wiederherstellungsbericht (20) auch Informationen meldet, die eines oder mehrere der Folgenden beinhalten:
eine Zeit, zu welcher die Ursache (22) dafür, dass die NAS-Wiederherstellungsprozedur durchgeführt wird, eingetreten ist;
Informationen, die den Verkehr der drahtlosen Vorrichtung (12) beschreiben, als die Ursache (22) eingetreten ist;
eine RRC-Konfigurationsnachricht, welche die drahtlose Vorrichtung (12) zuletzt empfangen hat;
Standortinformationen, welche einen Standort der drahtlosen Vorrichtung (12) beschreiben, als die Ursache (22) eingetreten ist;
Informationen, welche eine Zelle und/oder Frequenz beschreiben, mit bzw. zu der die drahtlose Vorrichtung (12) verbunden war, als die Ursache (22) eingetreten ist;
eine oder mehrere Funkmessungen in Verbindung mit der Ursache (22);
eine oder mehrere fehlgeschlagene Planungsanfragen; oder
ein oder mehrere Störungsereignisse bei der Überwachung der Referenzsignalisierung von Kanalzustandsinformationen.

5. Verfahren, das durch einen Netzwerkknoten (14, 600) ausgeführt wird, wobei das Verfahren durch Folgendes gekennzeichnet ist:
Empfangen (300) eines Non-Access-Stratum-(NAS-) Wiederherstellungsberichts (20), der eine Ursache (22) dafür meldet, dass eine drahtlose Vorrichtung (12) eine NAS-Wiederherstellungsprozedur zur NAS-Wiederherstellung durchführt, die eine Interaktion zwischen Access-Stratum-(AS-) und NAS-Schicht an der drahtlosen Vorrichtung beinhaltet, wobei die AS-Schicht eine Störung erkennt, danach eine NAS-Schicht über diese Störung benachrichtigt, in einen Leerlaufzustand eintritt und die NAS-Schicht eine Prozedur auslöst, die dazu führt, dass die NAS-Schicht die AS-Schicht anfragt, eine RRC-Verbindung herzustellen oder einzurichten; und
basierend auf dem NAS-Wiederherstellungsbericht (20), Durchführen (320) einer oder mehrerer Aktionen, um eine Grundursache dafür anzugehen, dass die drahtlose Vorrichtung (12) die NAS-Wiederherstellungsprozedur durchführen und/oder eine Wahrscheinlichkeit dafür verringern muss, dass die drahtlose Vorrichtung (12) oder eine andere drahtlose Vorrichtung die NAS-Wiederherstellungsprozedur in Zukunft durchführen muss.

6. Verfahren nach Anspruch 5, wobei der Bericht die Ursache (22) dafür, dass die drahtlose Vorrichtung (12) die NAS-Wiederherstellungsprozedur durchführt, als Ablaufen eines Dateninaktivitätszeitgebers an der drahtlosen Vorrichtung (12) oder Störung der drahtlosen Vorrichtung (12) zum Empfangen einer RRC-Nachricht, die dazu konfiguriert ist, eine RRC-Verbindung der drahtlosen Vorrichtung (12) freizugeben oder aufzuheben, meldet.

7. Verfahren nach Anspruch 5, wobei der Bericht die Ursache (22) dafür, dass die drahtlose Vorrichtung (12) die NAS-Wiederherstellungsprozedur durchführt, entweder als Folgendes meldet:
Integritätsschutzstörung bei Empfang einer Wiederherstellungsnachricht der Funkressourcensteuerung, RRC;
Auslösen der RRC-Wiederherstellung und Auswahl einer Zelle der Interfunkzugangstechnologie, RAT, während ein Leerlaufmesskonfigurationszeitgeber läuft, wobei der Leerlaufmesskonfigurationszeitgeber beim Empfangen einer RRC-Verbindungsfreigabenachricht gestartet wird, die eine Leerlaufmesskonfiguration beinhaltet, und beim Empfangen einer RRC-Verbindungsaufbau- oder Wiederaufnahmenachricht angehalten wird;
Unfähigkeit der drahtlosen Vorrichtung (12) zum Einhalten einer RRC-Neukonfigurationsnachricht, die über New Radio empfangen wird, während die Sicherheit aktiviert ist, ein Signalisierungsfunkträger nicht zum Übertragen von RRC-Nachrichten eingerichtet wurde, welche eine NAS-Nachricht einkapseln, und mindestens ein Datenfunkträger nicht eingerichtet wurde;
Ablaufen eines Zeitgebers dafür, dass die drahtlose Vorrichtung (12) eine geeignete Zelle bei Wiederherstellung findet;
wobei eine Funkverknüpfungsstörung erkannt wird, während die Sicherheit aktiviert ist, ein Signalisierungsfunkträger nicht zum Übertragen von RRC-Nachrichten eingerichtet wurde, welche eine NAS-Nachricht einkapseln, und mindestens ein Datenfunkträger nicht eingerichtet wurde;
Ablaufen eines Zeitgebers zum Empfangen einer Antwort auf eine RRC-Verbindungswiederherstellungsanfrage; oder
Neuauswahl der Inter-RAT-Zelle.

8. Verfahren nach einem der Ansprüche 5-7, wobei der NAS-Wiederherstellungsbericht (20) auch Informationen meldet, die eines oder mehrere der Folgenden beinhalten:
eine Zeit, zu welcher die Ursache (22) dafür, dass die NAS-Wiederherstellungsprozedur durchgeführt wird, eingetreten ist;
Informationen, welche den Verkehr der drahtlosen Vorrichtung (12) beschreiben, als die Ursache (22) eingetreten ist;
eine RRC-Konfigurationsnachricht, welche die drahtlose Vorrichtung (12) zuletzt empfangen hat;
Standortinformationen, welche einen Standort der drahtlosen Vorrichtung (12) beschreiben, als die Ursache (22) eingetreten ist;
Informationen, welche eine Zelle und/oder Frequenz beschreiben, mit bzw. zu der die drahtlose Vorrichtung (12) verbunden war, als die Ursache (22) eingetreten ist;
eine oder mehrere Funkmessungen in Verbindung mit der Ursache (22);
eine oder mehrere fehlgeschlagene Planungsanfragen; oder
ein oder mehrere Störungsereignisse bei der Überwachung der Referenzsignalisierung von Kanalzustandsinformationen.

9. Verfahren nach einem der Ansprüche 5-8, ferner umfassend, basierend auf dem NAS-Wiederherstellungsbericht (20), Durchführen (310) einer Grundursachenanalyse zum Bestimmen einer Grundursache dafür, dass die drahtlose Vorrichtung (12) die NAS-Wiederherstellungsprozedur durchführen muss.

10. Verfahren nach Anspruch 5, wobei die eine oder mehreren Aktionen eines oder mehrere der Folgenden beinhalten:
Abstimmen eines oder mehrerer Parameter an dem Netzwerkknoten, die Messberichterstattung, Übergabe oder Zeitplanung der Steuersignalisierung regeln;
Optimieren der Mobilitätsrobustheit; oder
Optimieren der Abdeckung in einem geografischen Bereich, in welchem sich die drahtlose Vorrichtung (12) befunden hat, als die drahtlose Vorrichtung (12) die NAS-Wiederherstellungsprozedur durchgeführt hat.

11. Verfahren nach Anspruch 5, wobei die Grundursache eine Störung der drahtlosen Vorrichtung (12) zum Empfangen einer RRC-Nachricht aufgrund schlechter Funkbedingungen an der drahtlosen Vorrichtung (12) ist, wobei die RRC-Nachricht eine RRC-Verbindung der drahtlosen Vorrichtung (12) freigibt oder aufhebt und wobei die eine oder mehreren Aktionen Folgendes beinhalten:
Konfigurieren einer Zeitplanung, mit welcher die RRC-Nachricht an die drahtlose Vorrichtung zu übermitteln ist;
Konfigurieren einer oder mehrerer Bedingungen zum Auslösen eines Messberichts von drahtlosen Vorrichtungen;
Konfigurieren einer oder mehrerer Parameter, die Funkbedingungen regeln, unter welchen der Netzwerkknoten die RRC-Nachricht an drahtlose Vorrichtungen sendet; oder
Konfigurieren einer Form einer Zelle, eines Strahls oder Sektors, die bzw. der durch den Netzwerkknoten bedient wird.

12. Verfahren nach Anspruch 5, ferner umfassend, basierend auf dem NAS-Wiederherstellungsbericht (20), Beheben (330) einer beliebigen RRC-Zustandsfehlübereinstimmung zwischen der drahtlosen Vorrichtung (12) und dem Netzwerkknoten, welche der Ursache (22) dafür, dass die drahtlose Vorrichtung (12) die NAS-Wiederherstellungsprozedur durchführt, zuschreibbar ist.

13. Verfahren nach Anspruch 5, ferner umfassend Weiterleiten (340) des NAS-Wiederherstellungsberichts (20) an einen anderen Netzwerkknoten, wobei der Wiederherstellungsbericht eines oder mehrere der Folgenden umfasst:
eine Grundursache der drahtlosen Vorrichtung (12), welche die NAS-Wiederherstellungsprozedur durchführen muss;
Standortinformationen, die einen Standort beschreiben, an dem die drahtlose Vorrichtung (12) die NAS-Wiederherstellungsprozedur durchführen musste; oder
eine empfohlene oder befohlene Aktion, die der andere Netzwerkknoten durchzuführen hat.

14. Drahtlose Vorrichtung (12), umfassend:
Kommunikationsschaltung (520); und
Verarbeitungsschaltung (510), **gekennzeichnet durch**:
Erkennen (200) einer Ursache (22) dafür, dass die drahtlose Vorrichtung (12) die Non-Access-Stratum-(NAS-)Wiederherstellungsprozedur zur NAS-Wiederherstellung durchführt, die eine Interaktion zwischen Access-Stratum-(AS-) und NAS-Schicht an der drahtlosen Vorrichtung beinhaltet, wobei die AS-Schicht eine Störung erkennt, danach die NAS-Schicht über die Störung benachrichtigt, in einen Ruhezustand eintritt und die NAS-Schicht eine Prozedur auslöst, die dazu führt, dass die NAS-Schicht die AS-Schicht dazu auffordert, eine RRC-Verbindung herzustellen oder einzurichten; und
Übermitteln, von einer drahtlosen Vorrichtung (12) an einen Netzwerkknoten, eines NAS-Wiederherstellungsberichts (20), der eine Ursache (22) dafür, dass die drahtlose Vorrichtung (12) die NAS-Wiederherstellungsprozedur zur NAS-Wiederherstellung durchführt, meldet.

15. Netzwerkknoten (14, 600), umfassend:
Kommunikationsschaltung (620); und
Verarbeitungsschaltung (610), **gekennzeichnet durch**:
Empfangen eines NAS-Wiederherstellungsberichts (20) von einer drahtlosen Vorrichtung (12), der eine Ursache (22) dafür, dass die drahtlose Vorrichtung (12) meldet, welche eine NAS-Wiederherstellungsprozedur zur NAS-Wiederherstellung durchführt, die eine Interaktion zwischen Access-Stratum-(AS-) und NAS-Schicht an der drahtlosen Vorrichtung involviert, wobei die AS-Schicht eine Störung erkennt, danach die NAS-Schicht über diese Störung benachrichtigt, in einen Ruhezustand eintritt und die NAS-Schicht eine Prozedur auslöst, die dazu führt, dass die NAS-Schicht die AS-Schicht dazu auffordert, eine RRC-Verbindung herzustellen oder einzurichten; und
Durchführen, basierend auf dem NAS-Wiederherstellungsbericht (20), von einer oder mehreren Aktionen, um eine Grundursache dafür anzugeben, dass die drahtlosen Vorrichtung (12) die NAS-Wiederherstellungsprozedur durchführen und/oder eine Wahrscheinlichkeit dafür verringern muss, dass die drahtlose Vorrichtung (12) oder eine andere drahtlose Vorrichtung die NAS-Wiederherstellungsprozedur in Zukunft durchführen muss.

## Revendications

1. Procédé exécuté par un dispositif sans fil (12), le procédé étant **caractérisé par** :
la détection (200) d'une cause (22) pour laquelle le dispositif sans fil (12) exécute une procédure de récupération de strate de non-accès, NAS, pour la récupération NAS impliquant une interaction entre la strate d'accès, AS, et les couches NAS au niveau du dispositif sans fil, où la couche AS détecte une défaillance, puis informe la couche NAS de cette défaillance, entre dans un état inactif et la couche NAS déclenche une procédure qui conduit la couche NAS à demander à la couche AS d'établir ou de configurer une connexion RRC ; et
la transmission (210), du dispositif sans fil (12) à un noeud de réseau, d'un rapport de récupération NAS (20) qui signale la cause (22) de l'exécution par le dispositif sans fil (12) de la procédure de récupération NAS.

2. Procédé selon la revendication 1, dans lequel le rapport signale la cause (22) pour laquelle le dispositif sans fil (12) exécute la procédure de récupération NAS comme étant l'expiration d'un temporisateur d'inactivité de données au niveau du dispositif sans fil (12) ou une défaillance du dispositif sans fil (12) pour recevoir un message RRC configuré pour libérer ou suspendre une connexion RRC du dispositif sans fil (12) .

3. Procédé selon la revendication 1, dans lequel le rapport signale la cause (22) pour laquelle le dispositif sans fil (12) exécute la procédure de récupération NAS comme étant soit :
une défaillance de la protection d'intégrité à la réception d'un message de rétablissement de commande de ressources radio, RRC ;
un déclenchement du rétablissement RRC et une sélection d'une cellule de technologie d'accès radio inter, RAT, pendant qu'un temporisateur de configuration de mesure inactive est en cours d'exécution, dans lequel le temporisateur de configuration de mesure inactive est démarré à la réception d'un message de libération de connexion RRC qui comporte une configuration de mesure inactive et est arrêté à la réception d'un message d'établissement ou de reprise de connexion RRC ;
une incapacité du dispositif sans fil (12) à se conformer à un message de reconfiguration RRC reçu via New Radio alors que la sécurité est activée, un support radio de signalisation n'a pas été mis en place pour transférer des messages RRC qui encapsulent un message NAS, et au moins un support radio de données n'a pas été mis en place ;
une expiration d'un temporisateur permettant au dispositif sans fil (12) de trouver une cellule appropriée en cours de rétablissement ;
une défaillance de liaison radio étant détectée alors que la sécurité est activée, un support radio de signalisation n'a pas été mis en place pour transférer des messages RRC qui encapsulent un message NAS, et au moins un support radio de données n'a pas été mis en place ;
une expiration d'un temporisateur à la réception d'une réponse à une demande de rétablissement de connexion RRC ; ou
une resélection de cellules inter-RAT.

4. Procédé selon l'une quelconque des revendications 1 à 3, dans lequel le rapport de récupération NAS (20) signale également des informations qui comportent un ou plusieurs des éléments suivants :
un moment auquel la cause (22) de la procédure de récupération NAS en cours d'exécution s'est produite ;
des informations décrivant le trafic du dispositif sans fil (12) lorsque la cause (22) s'est produite ;
un message de configuration RRC que le dispositif sans fil (12) a reçu en dernier ;
des informations de localisation décrivant un emplacement du dispositif sans fil (12) lorsque la cause (22) s'est produite ;
des informations décrivant une cellule et/ou une fréquence à laquelle le dispositif sans fil (12) était connecté lorsque la cause (22) s'est produite ;
une ou plusieurs mesures radio associées à la cause (22) ;
une ou plusieurs demandes de planification ayant échoué ; ou
un ou plusieurs événements de défaillance de surveillance de signalisation de référence d'informations d'état de canal.

5. Procédé exécuté par un noeud de réseau (14, 600), le procédé étant **caractérisé par** :
la réception (300) d'un rapport de récupération de strate de non-accès, NAS, (20) qui signale une cause (22) d'un dispositif sans fil (12) exécutant une procédure de récupération NAS pour une récupération NAS impliquant une interaction entre la strate d'accès, AS, et des couches NAS au niveau du dispositif sans fil, où la couche AS détecte une défaillance, puis informe la couche NAS de cette défaillance, entre dans un état inactif et la couche NAS déclenche une procédure qui conduit la couche NAS à demander à la couche AS d'établir ou de configurer une connexion RRC ; et
sur la base du rapport de récupération NAS (20), l'exécution (320) d'une ou de plusieurs actions pour traiter une cause fondamentale pour laquelle le dispositif sans fil (12) doit exécuter la procédure de récupération NAS et/ou pour réduire la probabilité que le dispositif sans fil (12) ou un autre appareil sans fil devra exécuter la procédure de récupération NAS à l'avenir.

6. Procédé selon la revendication 5, dans lequel le rapport signale la cause (22) pour laquelle le dispositif sans fil (12) exécute la procédure de récupération NAS comme étant l'expiration d'un temporisateur d'inactivité de données au niveau du dispositif sans fil (12) ou une défaillance du dispositif sans fil (12) pour recevoir un message RRC configuré pour libérer ou suspendre une connexion RRC du dispositif sans fil (12).

7. Procédé selon la revendication 5, dans lequel le rapport signale la cause (22) pour laquelle le dispositif sans fil (12) exécute la procédure de récupération NAS comme étant soit :
une défaillance de la protection d'intégrité à la réception d'un message de rétablissement de commande de ressources radio, RRC ;
un déclenchement du rétablissement RRC et une sélection d'une cellule de technologie d'accès radio inter, RAT, pendant qu'un temporisateur de configuration de mesure inactive est en cours d'exécution, dans lequel le temporisateur de configuration de mesure inactive est démarré à la réception d'un message de libération de connexion RRC qui comporte une configuration de mesure inactive et est arrêté à la réception d'un message d'établissement ou de reprise de connexion RRC ;
une incapacité du dispositif sans fil (12) à se conformer à un message de reconfiguration RRC reçu via New Radio alors que la sécurité est activée, un support radio de signalisation n'a pas été mis en place pour transférer des messages RRC qui encapsulent un message NAS, et au moins un support radio de données n'a pas été mis en place ;
une expiration d'un temporisateur permettant au dispositif sans fil (12) de trouver une cellule appropriée en cours de rétablissement ;
une défaillance de liaison radio étant détectée alors que la sécurité est activée, un support radio de signalisation n'a pas été mis en place pour transférer des messages RRC qui encapsulent un message NAS, et au moins un support radio de données n'a pas été mis en place ;
une expiration d'un temporisateur à la réception d'une réponse à une demande de rétablissement de connexion RRC ; ou
une resélection de cellules inter-RAT.

8. Procédé selon l'une quelconque des revendications 5 à 7, dans lequel le rapport de récupération NAS (20) signale également des informations qui comportent un ou plusieurs des éléments suivants :
un moment auquel la cause (22) de la procédure de récupération NAS en cours d'exécution s'est produite ;
des informations décrivant le trafic du dispositif sans fil (12) lorsque la cause (22) s'est produite ;
un message de configuration RRC que le dispositif sans fil (12) a reçu en dernier ;
des informations de localisation décrivant un emplacement du dispositif sans fil (12) lorsque la cause (22) s'est produite ;
des informations décrivant une cellule et/ou une fréquence à laquelle le dispositif sans fil (12) était connecté lorsque la cause (22) s'est produite ;
une ou plusieurs mesures radio associées à la cause (22) ;
une ou plusieurs demandes de planification ayant échoué ; ou
un ou plusieurs événements de défaillance de surveillance de signalisation de référence d'informations d'état de canal.

9. Procédé selon les revendications 5 à 8, comprenant en outre, sur la base du rapport de récupération NAS (20), l'exécution (310) d'une analyse de cause fondamentale pour déterminer une cause fondamentale pour laquelle le dispositif sans fil (12) doit exécuter la procédure de récupération NAS.

10. Procédé selon la revendication 5, dans lequel les une ou plusieurs actions comportent un ou plusieurs des éléments suivants :
le réglage d'un ou de plusieurs paramètres au niveau du noeud de réseau qui régissent la synchronisation de signalisation de rapport de mesure, de transfert ou de commande ;
l'optimisation de la robustesse de la mobilité ; ou
l'optimisation de la couverture dans une zone géographique dans laquelle le dispositif sans fil (12) se trouvait lorsque le dispositif sans fil (12) a exécuté la procédure de récupération NAS.

11. Procédé selon la revendication 5, dans lequel la cause fondamentale est l'échec du dispositif sans fil (12) à recevoir un message RRC en raison de mauvaises conditions radio au niveau du dispositif sans fil (12), dans lequel le message RRC libère ou suspend une connexion RRC du dispositif sans fil (12), et dans lequel les une ou plusieurs actions comportent :
la configuration d'une synchronisation avec laquelle le message RRC doit être transmis aux dispositifs sans fil ;
la configuration d'une ou de plusieurs conditions pour déclencher un rapport de mesure à partir de dispositifs sans fil ;
la configuration d'un ou de plusieurs paramètres qui régissent les conditions radio dans lesquelles le noeud de réseau envoie le message RRC aux dispositifs sans fil ; ou
la configuration de la forme d'une cellule, d'un faisceau ou d'un secteur desservi par le noeud de réseau.

12. Procédé selon la revendication 5, comprenant en outre, sur la base du rapport de récupération NAS (20), la résolution (330) de toute inadéquation d'état RRC entre le dispositif sans fil (12) et le noeud de réseau qui est attribuable à la cause (22) du dispositif sans fil (12) exécutant la procédure de récupération NAS.

13. Procédé selon la revendication 5, comprenant en outre le transfert (340) du rapport de récupération NAS (20) vers un autre noeud de réseau, dans lequel le rapport de récupération comprend un ou plusieurs des éléments suivants :
une cause fondamentale pour laquelle le dispositif sans fil (12) doit exécuter la procédure de récupération NAS ;
des informations de localisation décrivant un emplacement où le dispositif sans fil (12) a dû exécuter la procédure de récupération NAS ; ou
une action recommandée ou commandée à exécuter par un autre noeud de réseau.

14. Dispositif sans fil (12) comprenant :
un circuit de communication (520) ; et
un circuit de traitement (510) **caractérisé par** :
la détection (200) d'une cause (22) pour laquelle le dispositif sans fil (12) exécute une procédure de récupération de strate de non-accès, NAS, pour la récupération NAS impliquant une interaction entre la strate d'accès, AS, et des couches NAS au niveau du dispositif sans fil, où la couche AS détecte une défaillance, puis informe la couche NAS de cette défaillance, entre dans un état inactif et la couche NAS déclenche une procédure qui conduit la couche NAS à demander à la couche AS d'établir ou de configurer une connexion RRC ; et
la transmission, du dispositif sans fil (12) à un noeud de réseau, d'un rapport de récupération NAS (20) qui signale une cause (22) pour laquelle le dispositif sans fil (12) exécute la procédure de récupération NAS pour la récupération NAS.

15. Noeud de réseau (14, 600) comprenant :
un circuit de communication (620) ; et
un circuit de traitement (610) **caractérisé par** :
la réception d'un rapport de récupération de strate de non-accès, NAS (20) provenant d'un dispositif sans fil (12) qui signale une cause (22) du dispositif sans fil (12) exécutant une procédure de récupération NAS pour une récupération NAS impliquant une interaction entre la strate d'accès, AS, et des couches NAS au niveau du dispositif sans fil, où la couche AS détecte une défaillance, puis informe la couche NAS de cette défaillance, entre dans un état inactif et la couche NAS déclenche une procédure qui conduit la couche NAS à demander à la couche AS d'établir ou de configurer une connexion RRC ; et
l'exécution, sur la base du rapport de récupération NAS (20), d'une ou de plusieurs actions pour traiter une cause fondamentale pour laquelle le dispositif sans fil (12) doit exécuter la procédure de récupération NAS et/ou pour réduire la probabilité que le dispositif sans fil (12) ou un autre appareil sans fil devra exécuter la procédure de récupération NAS à l'avenir.
